# EUROPEAN PATENT APPLICATION

(11) **EP 4 422 160 A1**
(43) Date of publication of application: **28.08.2024**
(21) Application number: 23196738.1
(22) Date of filing: 12.09.2023
(51) Int. Cl.: H04N 1/00, G06F 3/12

(54) **INFORMATION PROCESSING SYSTEM, IMAGE FORMING APPARATUS, AND PROGRAM**

(30) Priority: 27.02.2023 JP 2023028572; 27.02.2023 JP 2023028573
(71) Applicant: Fujifilm Business Innovation Corp., Tokyo 107-0052 (JP)
(72) Inventor: SAITO, Naoto, Yokohama, 220-8668 (JP); SUGI, Shinsuke, Yokohama, 220-8668 (JP); MIYAMORI, Shinya, Yokohama, 220-8668 (JP); OKI, Tomoya, Yokohama, 220-8668 (JP); TOMODA, Kyotaro, Yokohama, 220-8668 (JP); KANEKO, Atsuki, Yokohama, 220-8668 (JP); TANAKA, Yuki, Yokohama, 220-8668 (JP)
(74) Representative: Meissner Bolte Partnerschaft mbB

(57) **Abstract**

An information processing system includes a processor configured to: acquire a diagnosis result which is a result of a diagnosis made on an image formed on a recording medium, the diagnosis result including diagnosis results each being for a corresponding one of plural diagnosis items; generate evaluation information for each of diagnosis item groups, each diagnosis item group being a group to which one or more of the diagnosis items belong, based on the diagnosis result for each diagnosis item belonging to the diagnosis item group, the evaluation information being information about an evaluation on the diagnosis item group; and generate a screen on which each of the diagnosis item groups and the evaluation information on each of the diagnosis item groups are displayed.

## Description

### Background

### (i) Technical Field

The present disclosure relates to an information processing system, an image forming apparatus, and a program.

### (ii) Related Art

Japanese Unexamined Patent Application Publication No. 2003-22125 discloses a diagnosis apparatus including a diagnostic data acquiring unit that acquires diagnostic data for diagnosis, a diagnosis processing unit that makes a diagnosis on a device installed at a client by using the data acquired by the diagnostic data acquiring unit and a predetermined diagnostic algorithm, and a diagnosis result reporting unit that reports a result of a diagnosis made by the diagnosis processing unit.

Japanese Unexamined Patent Application Publication No. 2015-76009 discloses a configuration in which a data receiving unit performs a process of receiving input of image reproduction information regarding image reproduction by each of plural image forming apparatuses.

Japanese Unexamined Patent Application Publication No. 2019-174758 discloses a failure diagnosis apparatus that detects, from image data obtained by reading an image formed by an image forming apparatus, a defective portion which is a component having an abnormality among components of the image forming apparatus.

### Summary

When a diagnosis is made on an image forming apparatus, diagnoses may be made for plural diagnosis items, and results of the diagnoses may be displayed, for example.

In a case where diagnosis results for plural diagnosis items are displayed in units of diagnosis items and where the number of diagnosis items is large, the large number of diagnosis results are displayed, making it difficult to refer to the diagnosis results.

Accordingly, it is an object of the present disclosure to provide a technique of making it easier to refer to a result of a diagnosis made on an image formed on a recording medium than in a case where diagnosis results for plural diagnosis items are displayed in units of diagnosis items.

In a case where a diagnostic image, which is an image for making a diagnosis, is formed by an image forming apparatus, it is possible to make a diagnosis on the image forming apparatus, based on the diagnostic image.

In the image forming apparatus, a setting made on the image forming apparatus may affect a diagnostic image formed thereby, and the diagnostic image may vary according to the setting. In this case, a situation may occur in which a diagnosis result varies although the state of the image forming apparatus is not changed, and the accuracy of the diagnosis made on the image forming apparatus may decrease.

Furthermore, in the case of making a diagnosis on the image forming apparatus by analyzing a diagnostic image, if the orientation of the diagnostic image is different from a predetermined orientation, the accuracy of the diagnosis made on the image forming apparatus may decrease.

Accordingly, it is an object of the present disclosure to provide a technique of increasing the accuracy of a diagnosis made on an image forming apparatus as compared with the case of making a diagnosis on the image forming apparatus without the setting made on the image forming apparatus or the orientation of a diagnostic image being taken into consideration.

According to a first aspect of the present disclosure, there is provided an information processing system including a processor configured to: acquire a diagnosis result which is a result of a diagnosis made on an image formed on a recording medium, the diagnosis result including diagnosis results each being for a corresponding one of a plurality of diagnosis items; generate evaluation information for each of diagnosis item groups, each diagnosis item group being a group to which one or more of the diagnosis items belong, based on the diagnosis result for each diagnosis item belonging to the diagnosis item group, the evaluation information being information about an evaluation on the diagnosis item group; and generate a screen on which each of the diagnosis item groups and the evaluation information on each of the diagnosis item groups are displayed.

According to a second aspect of the present disclosure, there is provided the information processing system according to the first aspect, in which the processor is configured to generate, as the screen, a screen on which each of the diagnosis item groups and the evaluation information are displayed in association with each other.

According to a third aspect of the present disclosure, there is provided the information processing system according to the second aspect, in which the processor is configured to, in response to a diagnosis item group being selected by a user from among the diagnosis item groups included in the generated screen, generate a new screen on which the diagnosis item belonging to the diagnosis item group selected by the user and the diagnosis result for the diagnosis item are additionally displayed on the screen.

According to a fourth aspect of the present disclosure, there is provided the information processing system according to the first aspect, in which the processor is configured to generate, as the screen, a screen on which each of the diagnosis item groups and the evaluation information are displayed on a graph.

According to a fifth aspect of the present disclosure, there is provided the information processing system according to the fourth aspect, in which the processor is configured to generate, as the screen, a screen on which each of the diagnosis item groups and the evaluation information are displayed on a radar chart.

According to a sixth aspect of the present disclosure, there is provided the information processing system according to the fifth aspect, in which the processor is configured to, in response to a diagnosis item group being selected by a user from among the diagnosis item groups included in the radar chart, generate a new screen on which the diagnosis item belonging to the diagnosis item group selected by the user and the diagnosis result for the diagnosis item are additionally displayed on the radar chart.

According to a seventh aspect of the present disclosure, there is provided the information processing system according to the first aspect, in which the processor is configured to, in response to the evaluation information being changed, generate a new screen on which each of the diagnosis item groups and the changed evaluation information are displayed.

According to an eighth aspect of the present disclosure, there is provided an image forming apparatus that forms an image on a recording medium. The image forming apparatus includes an image former configured to form an image on a recording medium, the image former being capable of forming, on the recording medium, a diagnostic image for use in making a diagnosis on the image forming apparatus; and a processor configured to cause setting information to be output, the setting information being information about a setting which is made on the image forming apparatus and with which the diagnostic image is formed.

According to a ninth aspect of the present disclosure, there is provided the image forming apparatus according to the eighth aspect, in which the processor is configured to cause the setting information to be output to the image former configured to form the diagnostic image, and cause a corresponding image which is an image corresponding to the setting information to be formed on the recording medium on which the diagnostic image is formed.

According to a tenth aspect of the present disclosure, there is provided the image forming apparatus according to the ninth aspect, in which the processor is configured to cause the corresponding image corresponding to the setting information to be formed at a plurality of positions on the recording medium on which the diagnostic image is formed.

According to an eleventh aspect of the present disclosure, there is provided the image forming apparatus according to the eighth aspect, in which the processor is configured to cause the setting information to be output through a communication line to an apparatus that analyzes the diagnostic image formed on the recording medium by the image former.

According to a twelfth aspect of the present disclosure, there is provided the image forming apparatus according to the eighth aspect, in which the diagnostic image is used to make a diagnosis on the image forming apparatus, and the processor is configured to cause information about a setting affecting a result of the diagnosis on the image forming apparatus to be output as the setting information.

According to a thirteenth aspect of the present disclosure, there is provided the image forming apparatus according to the twelfth aspect, in which the processor is configured to cause information about a setting about an orientation of the recording medium which is supplied to the image former and on which the diagnostic image is to be formed by the image former to be output as the information about a setting affecting a result of the diagnosis.

According to a fourteenth aspect of the present disclosure, there is provided the image forming apparatus according to the twelfth aspect, in which the processor is configured to cause information about a setting made on the image former to be output as the information about a setting affecting a result of the diagnosis.

According to a fifteenth aspect of the present disclosure, there is provided a program causing a computer to execute a process. The process includes acquiring a reading result which is a result of reading of a recording medium on which a diagnostic image is formed, the diagnostic image being an image for use in making a diagnosis on an image forming apparatus; acquiring setting information which is information about a setting made on the image forming apparatus; and making a diagnosis on the image forming apparatus, based on the acquired reading result and the acquired setting information.

According to the first aspect, it is possible to make it easier to refer to a result of a diagnosis made on an image formed on a recording medium than in a case where diagnosis results for a plurality of diagnosis items are displayed in units of diagnosis items.

According to the second aspect, it is possible to generate a screen on which each of the diagnosis item groups and the evaluation information are displayed in association with each other.

According to the third aspect, it is possible to, in response to a diagnosis item group being selected by a user from among the diagnosis item groups, generate a new screen on which the diagnosis item belonging to the diagnosis item group selected by the user and the diagnosis result for the diagnosis item are additionally displayed.

According to the fourth aspect, it is possible to generate a screen on which each of the diagnosis item groups and the evaluation information are displayed on a graph.

According to the fifth aspect, it is possible to generate a screen on which each of the diagnosis item groups and the evaluation information are displayed on a radar chart.

According to the sixth aspect, it is possible to, in response to a diagnosis item group being selected by a user from among the diagnosis item groups included in the radar chart, generate a new screen on which the diagnosis item belonging to the diagnosis item group selected by the user and the diagnosis result for the diagnosis item are additionally displayed on the radar chart.

According to the seventh aspect, it is possible to, in response to the evaluation information being changed, generate a new screen on which each of the diagnosis item groups and the changed evaluation information are displayed.

According to the eighth aspect, it is possible to increase the accuracy of a diagnosis made on the image forming apparatus as compared with the case of making a diagnosis on the image forming apparatus without a setting made on the image forming apparatus being taken into consideration.

According to the ninth aspect, it is possible to give information about a setting made on the image forming apparatus to the recording medium on which the diagnostic image is formed.

According to the tenth aspect, it is possible to increase the possibility that the setting information is transmitted to a destination via the corresponding image as compared with a case where a corresponding image corresponding to setting information is formed only at one portion of a recording medium.

According to the eleventh aspect, it is possible to transmit the setting information to an apparatus that analyzes the diagnostic image without via the recording medium on which the diagnostic image is formed.

According to the twelfth aspect, it is possible to transmit information about a setting affecting a result of the diagnosis on the image forming apparatus to an apparatus that analyzes the diagnostic image to make a diagnosis on the image forming apparatus.

According to the thirteenth aspect, it is possible to transmit information about a setting about an orientation of the recording medium which is supplied to the image former and on which the diagnostic image is to be formed, to an apparatus that analyzes the diagnostic image to make a diagnosis on the image forming apparatus.

According to the fourteenth aspect, it is possible to transmit information about a setting made on the image former that forms the diagnostic image, to an apparatus that analyzes the diagnostic image to make a diagnosis on the image forming apparatus.

According to the fifteenth aspect, it is possible to increase the accuracy of a diagnosis made on the image forming apparatus as compared with the case of making a diagnosis on the image forming apparatus without a setting made on the image forming apparatus being taken into consideration.

### Brief Description of the Drawings

Exemplary embodiments of the present disclosure will be described in detail based on the following figures, wherein:
Fig. 1 is a diagram illustrating an example of a diagnosis system;
Fig. 2 is a diagram illustrating an example configuration of hardware of a server apparatus and an information processor included in an image forming apparatus;
Fig. 3 is a diagram for describing the image forming apparatus;
Fig. 4 is a diagram illustrating an example of a screen generated by a CPU of the server apparatus;
Fig. 5 is a diagram illustrating another example of a screen generated by the CPU of the server apparatus;
Fig. 6 is a diagram illustrating a screen that is referred to by a user to select a diagnosis item;
Figs. 7A and 7B are diagrams for describing another example of a new screen generated by the CPU of the server apparatus;
Fig. 8 is a diagram illustrating the relationship between each diagnosis item and a group to which the diagnosis item belongs;
Fig. 9 is a diagram illustrating another example of a screen generated by the CPU of the server apparatus;
Fig. 10 is a diagram illustrating another example of a screen generated by the CPU of the server apparatus;
Fig. 11 is a diagram for describing an example of another process performed by the CPU of the server apparatus;
Fig. 12 is a diagram illustrating an example of a screen generated by the CPU of the server apparatus;
Figs. 13A and 13B are diagrams illustrating other examples of a screen generated by the CPU of the server apparatus;
Figs. 14A and 14B are diagrams for describing a screen displayed when a user selects a diagnosis item group;
Figs. 15A and 15B are diagrams illustrating other display examples;
Figs. 16A and 16B are diagrams illustrating other display examples;
Figs. 17A and 17B are diagrams for describing another example of a new screen generated by the CPU of the server apparatus;
Figs. 18A and 18B are diagrams for describing another example of a new screen generated by the CPU of the server apparatus;
Figs. 19A and 19B are diagrams for describing another example of a new screen generated by the CPU of the server apparatus;
Fig. 20 is a diagram illustrating an example of a diagnostic sheet having a diagnostic image and orientation specifying images formed thereon;
Fig. 21 is a diagram for describing a manner of forming orientation specifying images;
Fig. 22 is a diagram for describing the details of an orientation specifying image;
Figs. 23A and 23B are diagrams for describing image formation performed by an image former included in the image forming apparatus;
Figs. 24A and 24B are diagrams illustrating read image data to be analyzed by the CPU of the server apparatus;
Fig. 25 is a diagram illustrating rotation of read image data;
Figs. 26A and 26B are diagrams for describing rotation of read image data;
Figs. 27A and 27B are diagrams for describing rotation of read image data;
Figs. 28A to 28D are diagrams for describing an influence of an image defect;
Figs. 29A to 29E are diagrams illustrating the modes of read image data;
Figs. 30A to 30C are diagrams illustrating example configurations of a diagnostic sheet;
Figs. 31A to 31C are diagrams for describing an example of a process executed by the image forming apparatus in a case where orientation specifying images are hidden;
Fig. 32 is a flowchart illustrating the flow of a process executed by the CPU of the image forming apparatus;
Fig. 33 is a flowchart illustrating the flow of a process executed by the CPU of the server apparatus;
Fig. 34 is a diagram for describing that screen setting information affects a diagnosis result; and
Fig. 35 is a flowchart illustrating the flow of a process executed by the CPU of the server apparatus to make a diagnosis.

### Detailed Description

Hereinafter, an exemplary embodiment of the present disclosure will be described with reference to the drawings.

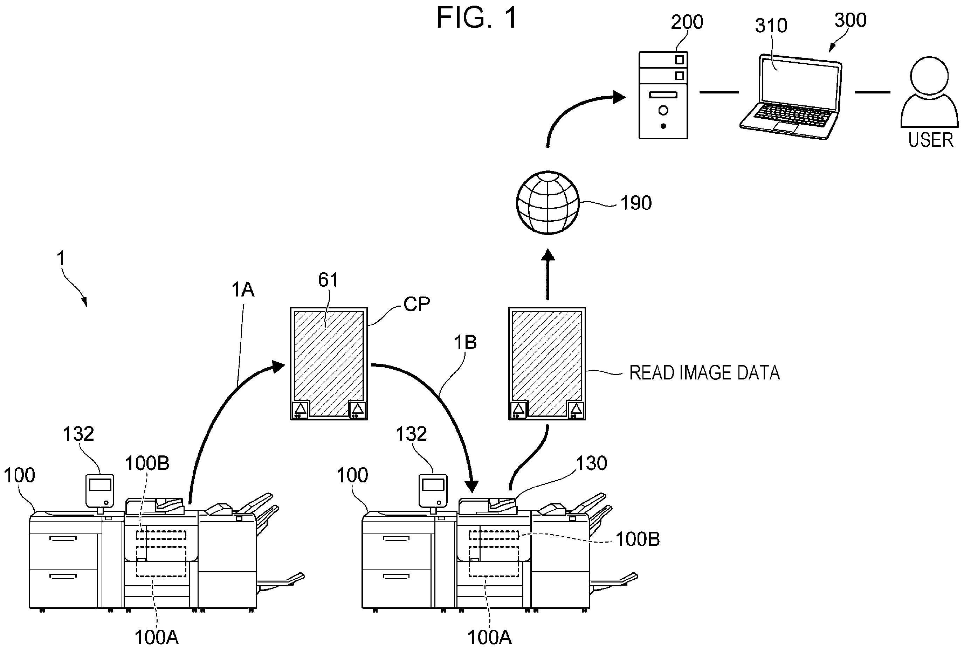

Fig. 1 is a diagram illustrating an example of a diagnosis system 1.

The diagnosis system 1 according to the present exemplary embodiment includes plural image forming apparatuses 100 and a server apparatus 200 connected to each of the plural image forming apparatuses 100 via a communication line 190. In the present exemplary embodiment, the server apparatus 200, which is an example of an information processing system, makes a diagnosis on each of the image forming apparatuses 100.

The diagnosis system 1 according to the present exemplary embodiment further includes a user terminal 300 that is connected to the server apparatus 200 and that receives an operation from a user.

In Fig. 1, two image forming apparatuses 100 among the plural image forming apparatuses 100 are illustrated.

The user terminal 300 includes a display device 310. The user terminal 300 is implemented by a computer. The user terminal 300 may be, for example, a personal computer (PC), a smartphone, or a tablet terminal.

The image forming apparatus 100 includes an image former 100A, which is an example of an image former that forms an image on a sheet, which is an example of a recording medium. The image former 100A is capable of forming a diagnostic image 61, which is an image used for making a diagnosis on the image forming apparatus 100, on a sheet.

The image former 100A forms an image on a sheet by using, for example, an inkjet method or an electrophotographic method. The method for forming an image on a sheet by the image former 100A is not limited to an inkjet method or an electrophotographic method, and another method may be used.

The image forming apparatus 100 further includes an information processor 100B. The information processor 100B executes various kinds of processing performed for the image forming apparatus 100.

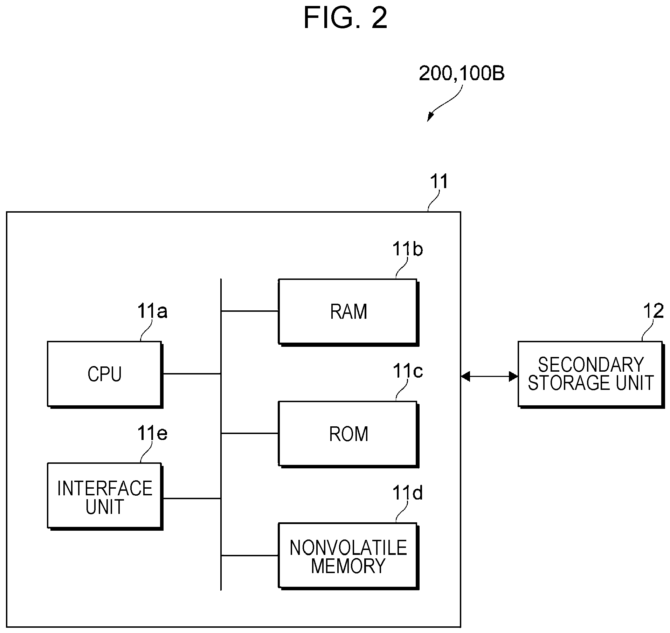

Fig. 2 is a diagram illustrating an example configuration of hardware of the server apparatus 200 and the information processor 100B included in the image forming apparatus 100. The server apparatus 200 and the information processor 100B included in the image forming apparatus 100 are each implemented by a computer.

The server apparatus 200 and the information processor 100B each include an arithmetic processing unit 11 that executes digital arithmetic processing in accordance with a program and a secondary storage unit 12 that stores information.

The secondary storage unit 12 is implemented by an existing information storage device, such as a hard disk drive (HDD), a semiconductor memory, or a magnetic tape.

The arithmetic processing unit 11 includes a central processing unit (CPU) 11a, which is an example of a processor.

The arithmetic processing unit 11 also includes a random access memory (RAM) 11b used as a working memory or the like for the CPU 11a, and a read-only memory (ROM) 11c for storing a program or the like executed by the CPU 11a.

The arithmetic processing unit 11 also includes a nonvolatile memory 11d configured to be rewritable and capable of holding data even after power supply has stopped, and an interface unit 11e that controls individual units connected to the arithmetic processing unit 11, such as a communication unit.

The nonvolatile memory 11d may be, for example, a battery-backed static random access memory (SRAM), a flash memory, or the like. The secondary storage unit 12 stores various pieces of information such as files, and also stores a program to be executed by the arithmetic processing unit 11.

In the present exemplary embodiment, individual processes are executed by the arithmetic processing unit 11 reading a program stored in the ROM 11c or the secondary storage unit 12.

The program to be executed by the CPU 11a may be provided to the server apparatus 200 or the information processor 100B in a state of being stored in a computer-readable recording medium, such as a magnetic recording medium (a magnetic tape, a magnetic disk, or the like), an optical recording medium (an optical disc or the like), a magneto-optical recording medium, or a semiconductor memory. Alternatively, the program to be executed by the CPU 11a may be provided to the server apparatus 200 or the information processor 100B by using a communication method, such as the Internet.

In this specification, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In this specification, the term "processor" is broad enough to encompass one processor or plural processors in collaboration which are located physically apart from each other but may work cooperatively. The order of operations of the processor is not limited to one described in the present exemplary embodiment, and may be changed.

Among the processes described below, a process performed by the image forming apparatus 100 is performed by the CPU 11a, which is an example of a processor, included in the image forming apparatus 100.

Among the processes described below, a process performed by the server apparatus 200 is performed by the CPU 11a, which is an example of a processor, included in the server apparatus 200.

Among the processes described below, a process of making a diagnosis on the image forming apparatus 100 is performed by the server apparatus 200, which is an example of an information processing system. The information processing system that performs a process of making a diagnosis on the image forming apparatus 100 may be implemented by a single apparatus such as the single server apparatus 200 or may be implemented by plural apparatuses.

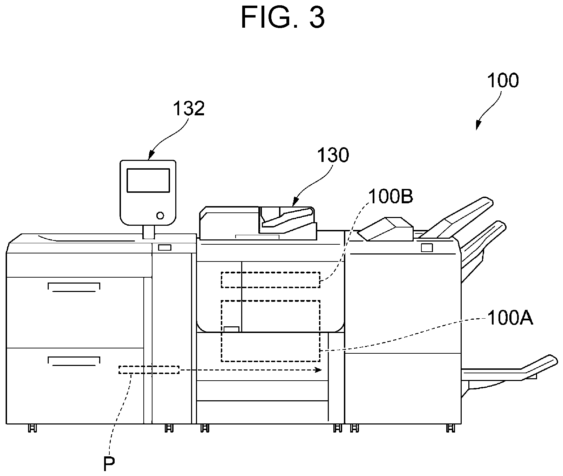

Fig. 3 is a diagram for describing the image forming apparatus 100.

In the present exemplary embodiment, as described above, the image forming apparatus 100 includes the image former 100A that forms an image on a sheet P, which is an example of a recording medium.

In the present exemplary embodiment, the sheet P passes through the image former 100A such that one surface of the sheet P faces the image former 100A.

The image forming apparatus 100 is equipped with an image reader 130, which is an example of an image reader that reads an image formed on a recording medium such as a sheet.

The image reader 130 is a so-called scanner having a sheet transport function. The image reader 130 includes a light source that emits light with which a sheet is to be irradiated, and a light receiver such as a charge-coupled device (CCD) that receives reflected light from the sheet. In the present exemplary embodiment, read image data, which will be described below, is generated based on the reflected light received by the light receiver.

The image reader 130 has an image reading position set in advance, and the image reader 130 reads an image of a portion located at the reading position of sequentially transported sheets.

The image forming apparatus 100 has an information transmission function of transmitting information to the server apparatus 200 (see Fig. 1).

In the example illustrated in Fig. 3, the image reader 130 is disposed at an upper portion of the image forming apparatus 100. The image reader 130 sequentially reads sheets (not illustrated) set by a user. Each of the sheets is not limited to a sheet having an image formed thereon by the image forming apparatus 100, and may be a sheet having an image formed thereon by another image forming apparatus.

The installation manner of the image reader 130 is not limited to that illustrated in Fig. 3, and the image reader 130 may be installed along a transport path of the sheets P inside the image forming apparatus 100.

In this case, the sheets P having images formed thereon by the image former 100A sequentially pass through the image reader 130, and the images on the individual sheets P are sequentially read when the sheets P pass through the image reader 130.

Furthermore, in the present exemplary embodiment, the image reader 130 includes a sheet reversing mechanism, and a sheet that has been reversed can be supplied to the image reading position.

Accordingly, in the present exemplary embodiment, it is possible to reverse a sheet from which an image formed on one surface thereof has been read and supply the sheet to the reading position again, and thus the images on the front and rear surfaces of the sheet can be read.

Alternatively, at the reading of an image on a sheet, the sheet may be placed on a document table (not illustrated) made of a glass plate or the like, and reading may be performed on the sheet placed on the document table.

Furthermore, each image forming apparatus 100 is equipped with an operation receiver 132 that receives an operation from a user. The operation receiver 132 is constituted by a so-called touch screen. The operation receiver 132 displays information to the user and receives an operation performed by the user.

Display of information to the user and reception of an operation from the user are not necessarily performed by the single operation receiver 132 as in the present exemplary embodiment, and an operation receiver and an information display may be separately provided.

In the present exemplary embodiment, when a diagnosis is to be made on the image forming apparatus 100 (see Fig. 1), the image former 100A is caused to operate to form the diagnostic image 61 on a sheet, which is an example of a recording medium. Accordingly, a diagnostic sheet CP having the diagnostic image 61 formed thereon is generated as denoted by reference sign 1A.

The diagnostic image 61 is an image for use in making a diagnosis on the image forming apparatus 100. In the present exemplary embodiment, the diagnostic sheet CP, which is a sheet having the diagnostic image 61 formed thereon, is generated.

After the diagnostic sheet CP has been generated, the diagnostic sheet CP is set on the image reader 130 as denoted by reference sign 1B in Fig. 1. Subsequently, reading is performed on the diagnostic sheet CP having the diagnostic image 61 formed thereon, by using the image reader 130.

Accordingly, read image data is generated through the reading of the diagnostic sheet CP.

In the present exemplary embodiment, the read image data is transmitted to the server apparatus 200 and stored in the server apparatus 200. Based on the read image data, the server apparatus 200 makes a diagnosis on the image forming apparatus 100.

In the present exemplary embodiment, a user who uses the diagnosis system 1 according to the present exemplary embodiment, such as a maintenance person who performs maintenance of the image forming apparatus 100, accesses the server apparatus 200 and refers to a result of the diagnosis made by the server apparatus 200.

In this way, in each image forming apparatus 100, the diagnostic sheet CP is generated, reading of the diagnostic sheet CP is performed, and read image data is generated.

The read image data is transmitted to the server apparatus 200. As described above, in the present exemplary embodiment, the server apparatus 200 makes a diagnosis on the image forming apparatus 100.

A diagnosis process performed by the server apparatus 200 will be described.

In the present exemplary embodiment, the CPU 11a (see Fig. 2), which is an example of a processor, included in the server apparatus 200 makes a diagnosis on the image forming apparatus 100, based on the above-described read image data received from the image forming apparatus 100, and acquires a diagnosis result.

More specifically, the CPU 11a acquires a diagnosis result, which is a result of a diagnosis made on the diagnostic image 61, which is an image formed on the diagnostic sheet CP described above, that is, diagnosis results each being for a corresponding one of plural diagnosis items.

In the present exemplary embodiment, plural diagnosis items are determined in advance, and the CPU 11a of the server apparatus 200 analyzes the diagnostic image 61 included in the read image data and acquires diagnosis results for the plural diagnosis items.

More specifically, the CPU 11a of the server apparatus 200 acquires, for each of the plural diagnosis items, a diagnosis result based on, for example, a difference between a reference value predetermined for the diagnosis item and a value obtained by analyzing the diagnostic image 61.

As the difference increases, the evaluation score indicated by the diagnosis result acquired by the CPU 11a of the server apparatus 200 decreases.

Subsequently, the CPU 11a sorts the acquired plural diagnosis results in a predetermined order.

More specifically, the CPU 11a sorts the plural diagnosis results, for example, in ascending order or descending order of the evaluation score.

Thereafter, the CPU 11a generates a screen on which the plural diagnosis results are arranged in the predetermined order.

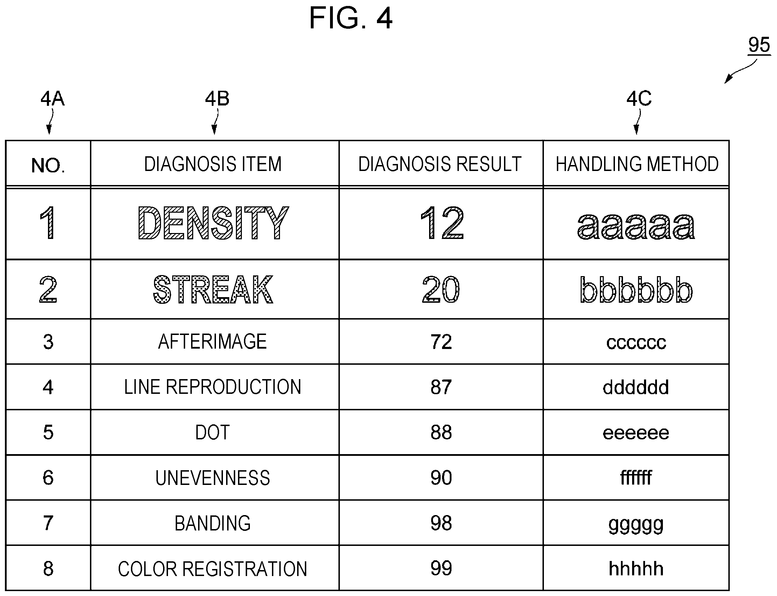

Fig. 4 is a diagram illustrating an example of a screen 95 generated by the CPU 11a of the server apparatus 200.

In the example illustrated in Fig. 4, plural diagnosis results are arranged in ascending order of the evaluation score on the screen 95. In the present exemplary embodiment, each diagnosis result is represented by a numerical value, and a smaller value represents a lower evaluation score.

In the example illustrated in Fig. 4, the plural diagnosis results are arranged such that a diagnosis result with a lower evaluation score is positioned at an upper portion of the screen 95 and a diagnosis result with a higher evaluation score is positioned at a lower portion of the screen 95.

Alternatively, the plural diagnosis results may be arranged such that a diagnosis result with a lower evaluation score is positioned at a lower portion of the screen 95 and a diagnosis result with a higher evaluation score is positioned at an upper portion of the screen 95. In this case, a user is able to easily specify a diagnosis result with a high evaluation score.

In the present exemplary embodiment, information about the screen 95 generated by the CPU 11a is transmitted from the server apparatus 200 (see Fig. 1) to the user terminal 300, and the screen 95 generated by the CPU 11a is displayed on the user terminal 300. Accordingly, the user grasps the diagnosis results for the plural diagnosis items.

Alternatively, information about the screen 95 may be output to an apparatus having a printing function, such as the image forming apparatus 100 (see Fig. 1), and the screen 95 may be printed on a recording medium such as a sheet.

The "screen 95" includes not only a screen displayed on the display device 310 but also a screen printed on a recording medium such as a sheet.

On the screen 95 illustrated in Fig. 4, not only the diagnosis results, but also numbers indicating evaluation ranking denoted by reference sign 4A, the names of diagnosis items denoted by reference sign 4B, and handling methods denoted by reference sign 4C are displayed in association with the respective diagnosis results. Here, the name of a diagnosis item is information for specifying the diagnosis item.

In the present exemplary embodiment, in response to a portion displaying a handling method on the screen 95 illustrated in Fig. 4 being selected by a user, a handling method for improving the diagnosis result associated with the handling method is displayed.

In other words, in response to a portion displaying a handling method being selected by a user, measures to be taken for this portion, such as a method for repairing a portion of the image forming apparatus 100 that affects the diagnosis result associated with the handling method, are displayed.

A diagnosis result with a low evaluation score is a diagnosis result reflecting a failure or the like of the image forming apparatus 100, and is a diagnosis result having a high priority for being addressed.

On the screen 95 illustrated in Fig. 4, the plural diagnosis results are arranged in a predetermined order, and the font sizes of the diagnosis results decrease in accordance with the ranks. More specifically, on the screen 95 illustrated in Fig. 4, the plural diagnosis results are arranged in ascending order of the evaluation score, and the font sizes of the diagnosis results decrease in accordance with the ranks.

In other words, on the screen 95 illustrated in Fig. 4, the font size of a diagnosis result increases as the rank nears the top, and the font size of a diagnosis result decreases as the rank nears the bottom.

On the screen 95 illustrated in Fig. 4, the numbers displayed in the leftmost column indicate ranks, the font size of a diagnosis result increases as the number nears 1, and the font size of a diagnosis result decreases as the number nears 8.

In Fig. 4, not only the diagnosis results but also the numbers indicating ranks, the names of diagnosis items, and handling methods have font sizes that vary according to the ranks.

On the screen 95 illustrated in Fig. 4, as described above, the plural diagnosis results are arranged in ascending order of the evaluation score, and the font size a diagnosis result increases as the evaluation score decreases.

Alternatively, the screen 95 may be configured such that the font size of a diagnosis result increases as the rank lowers. On the screen 95 illustrated in Fig. 4, in a case where the font size of a diagnosis result increases as the rank lowers, the user is able to easily specify a diagnosis result with a high evaluation score.

Furthermore, on the screen 95 illustrated in Fig. 4, the colors of the diagnosis results vary according to the ranks of the diagnosis results.

Specifically, on the screen 95 illustrated in Fig. 4, the color of the diagnosis result in the first rank is red, and the color of the diagnosis result in the second rank is yellow. The colors of the diagnosis results in the third and subsequent ranks are black.

Not only the diagnosis results but also the numbers indicating ranks, the names of diagnosis items, and handling methods have colors that vary according to the ranks.

Similarly to the diagnosis results, the colors of the number, the name of the diagnosis item, and the handling method in the first rank are red, the colors of the number, the name of the diagnosis item, and the handling method in the second rank are yellow, and the colors of the numbers, the names of the diagnosis items, and the handling methods in the third and subsequent ranks are black.

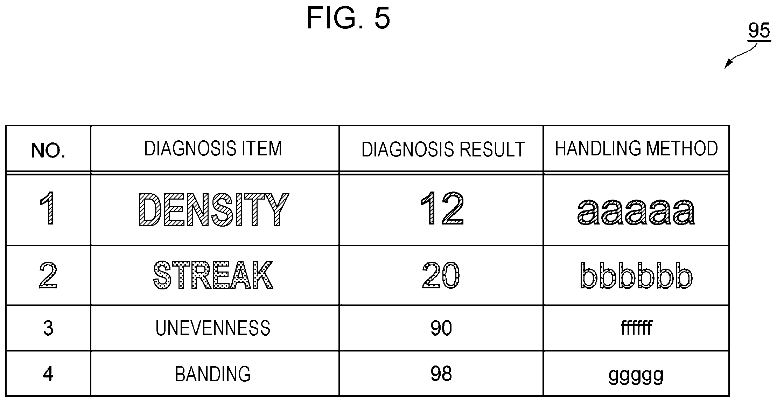

Fig. 5 is a diagram illustrating another example of the screen 95 generated by the CPU 11a of the server apparatus 200.

In the example illustrated in Fig. 5, the diagnosis results for some of the above-described plural diagnosis items are displayed.

In the present exemplary embodiment, a user is able to select a diagnosis item from among plural diagnosis items that have been set. In Fig. 5, the diagnosis results for diagnosis items selected by the user from among the plural diagnosis items are arranged in a predetermined order.

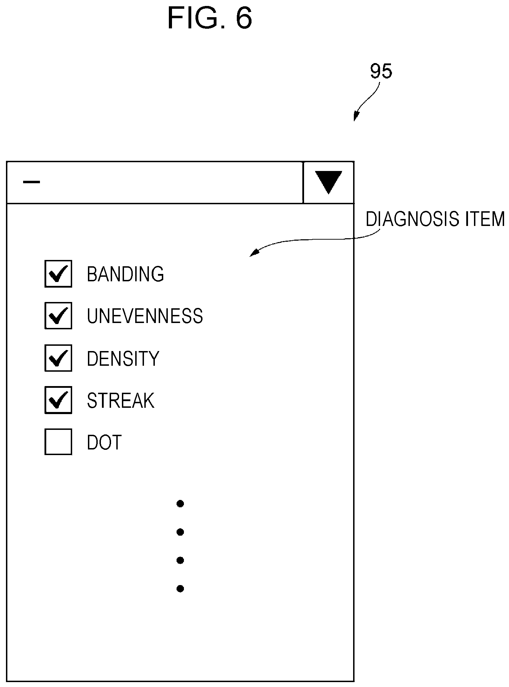

Fig. 6 is a diagram illustrating the screen 95 that is referred to by the user to select a diagnosis item.

In the present exemplary embodiment, the screen 95 illustrated in Fig. 6 is displayed on the user terminal 300 (see Fig. 1).

Plural diagnosis items are displayed on the screen 95 illustrated in Fig. 6, and the user performs an operation on the user terminal 300 to select a diagnosis item from among the plural diagnosis items. In this example, the user selects "banding", "unevenness", "density", and "streak".

Information about the diagnosis items selected by the user is transmitted from the user terminal 300 to the server apparatus 200.

In response to this, the CPU 11a of the server apparatus 200 specifies the diagnosis items selected by the user (hereinafter also referred to as "selected diagnosis items"). In the present exemplary embodiment, in response to the diagnosis items being selected by the user, the CPU 11a of the server apparatus 200 specifies selected diagnosis items, which are the diagnosis items selected by the user.

Subsequently, the CPU 11a sorts the plural diagnosis results that have already been acquired, in view of the specified selected diagnosis items.

The CPU 11a sorts the diagnosis results such that the diagnosis results for the selected diagnosis items are arranged in a predetermined order. The predetermined order may be, similarly to the above, ascending order or descending order of the evaluation score, for example.

In other words, in this case, the CPU 11a performs sorting not on the diagnosis results for the diagnosis items other than the selected diagnosis items, but only on the diagnosis results for the selected diagnosis items.

In other words, in this case, the CPU 11a performs sorting only on the diagnosis results for the selected diagnosis items among the plural diagnosis results that have already been acquired.

Subsequently, the CPU 11a generates the screen 95 on which the diagnosis results for the selected diagnosis items are arranged in a predetermined order.

In other words, the CPU 11a generates the screen 95 on which the diagnosis results for the selected diagnosis items included in the plural diagnosis results that have already been acquired are arranged in a predetermined order.

Accordingly, the new screen 95 illustrated in Fig. 5 is generated.

On the new screen 95 illustrated in Fig. 5, the diagnosis results for the four diagnosis items selected by the user are arranged in the predetermined order. Specifically, on the new screen 95 illustrated in Fig. 5, the diagnosis results for the four diagnosis items are arranged in ascending order of the evaluation score.

Although the new screen 95 is generated by sorting the diagnosis results herein, the new screen 95 may be generated by using another method.

For example, from among the diagnosis results arranged in the predetermined order in the sorting performed first, a diagnosis result other than the diagnosis results for the selected diagnosis items is deleted. Accordingly, the new screen 95 illustrated in Fig. 5 is generated so as to display only the diagnosis results remaining after the deletion.

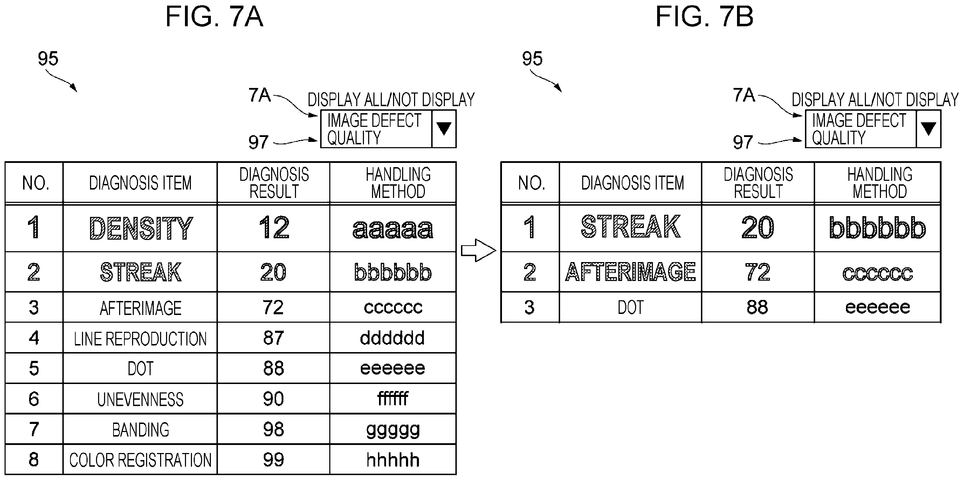

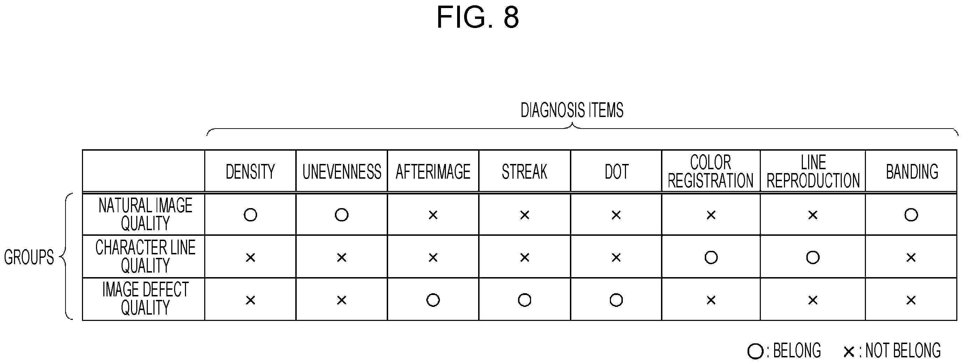

Figs. 7A and 7B are diagrams for describing another example of the new screen 95 generated by the CPU 11a of the server apparatus 200. Fig. 8 is a diagram illustrating the relationship between each diagnosis item and a group to which the diagnosis item belongs.

Fig. 7A illustrates the screen 95 initially generated by the CPU 11a (hereinafter referred to as an "initial screen 95"), and Fig. 7B illustrates the screen 95 newly generated by the CPU 11a.

In other words, Fig. 7A illustrates the initial screen 95 obtained through the first sorting, and Fig. 7B illustrates the new screen 95 generated after the initial screen 95 has been generated.

As illustrated in Fig. 7B, also in this example, the diagnosis results for some of the plural diagnosis items are displayed on the newly generated screen 95.

In the present exemplary embodiment, as illustrated in Fig. 8, each of the plural diagnosis items is associated with information about a group to which the diagnosis item belongs.

In the present exemplary embodiment, information about a diagnosis item and information about a group to which the diagnosis item belongs are associated with each other, and information indicating the relationship between the diagnosis item and the group is generated and registered in advance. The information indicating the relationship between the diagnosis item and the group is stored in, for example, the secondary storage unit 12 (see Fig. 2) of the server apparatus 200.

In the example illustrated in Fig. 8, the diagnosis items "density", "unevenness", and "banding" belong to the group "natural image quality", and the group "natural image quality" is associated with the diagnosis items "density", "unevenness", and "banding".

Furthermore, the diagnosis items "color registration" and "line reproduction" belong to the group "character line quality", and the group "character line quality" is associated with the diagnosis items "color registration" and "line reproduction".

Furthermore, the diagnosis items "afterimage", "streak", and "dot" belong to the group "image defect quality", and the group "image defect quality" is associated with the diagnosis items "afterimage", "streak", and "dot".

Now, a description will be given of an example process in a case where a user selects one group from among the plural groups.

In response to a group being selected by the user, the CPU 11a sorts the diagnosis results such that the diagnosis results for the diagnosis items belonging to the group selected by the user (hereinafter, referred to as "belonging diagnosis items") are arranged in a predetermined order.

The CPU 11a then generates the new screen 95 on which the diagnosis results for the belonging diagnosis items are arranged in the predetermined order.

Accordingly, the new screen 95 illustrated in Fig. 7B is generated.

In the present exemplary embodiment, in response to a group being selected by the user, the screen 95 displayed on the user terminal 300 is switched from the initial screen 95 illustrated in Fig. 7A to the new screen 95 illustrated in Fig. 7B.

In this example, as denoted by reference sign 7A in Fig. 7A, the initial screen 95 displayed on the user terminal 300 is provided with a group receiving section 97 for receiving a group selected by the user. In the group receiving section 97, pull-down display is performed, and the user performs an operation on the group receiving section 97 to select a group.

In the example illustrated in Fig. 7A, the group "image defect quality", which is an example of a group, is selected by the user.

In this case, as illustrated in Fig. 7B, the new screen 95 is generated on which the diagnosis results for the three diagnosis items "afterimage", "streak", and "dot" are arranged in a predetermined order.

As described above, the three diagnosis items "afterimage", "streak", and "dot" belong to the group "image defect quality". In other words, the group having the name "image defect quality" is associated with each of the three diagnosis items "afterimage", "streak", and "dot".

In this case, as described above, the new screen 95 is generated on which the diagnosis results for the three diagnosis items "afterimage", "streak", and "dot" are arranged in a predetermined order. The predetermined order may be, similarly to the above, ascending order or descending order of the evaluation score, for example.

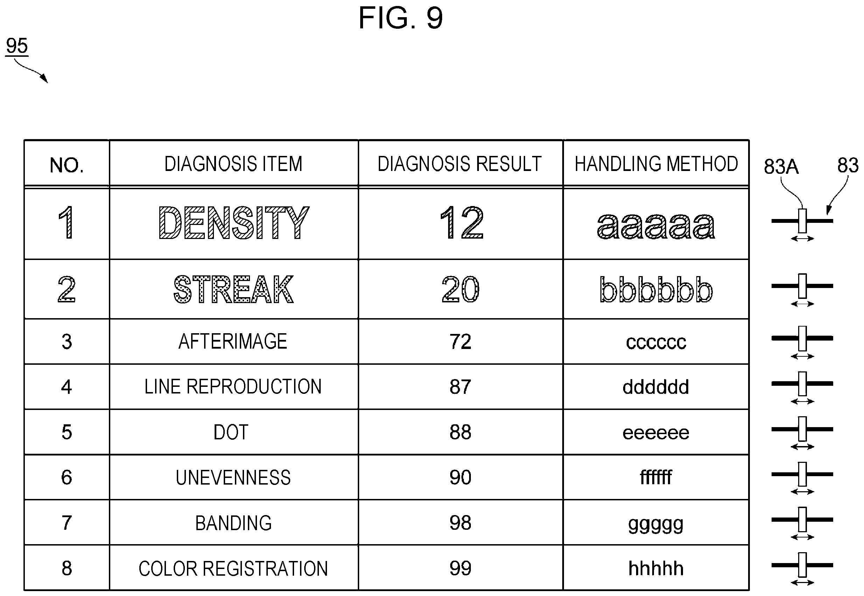

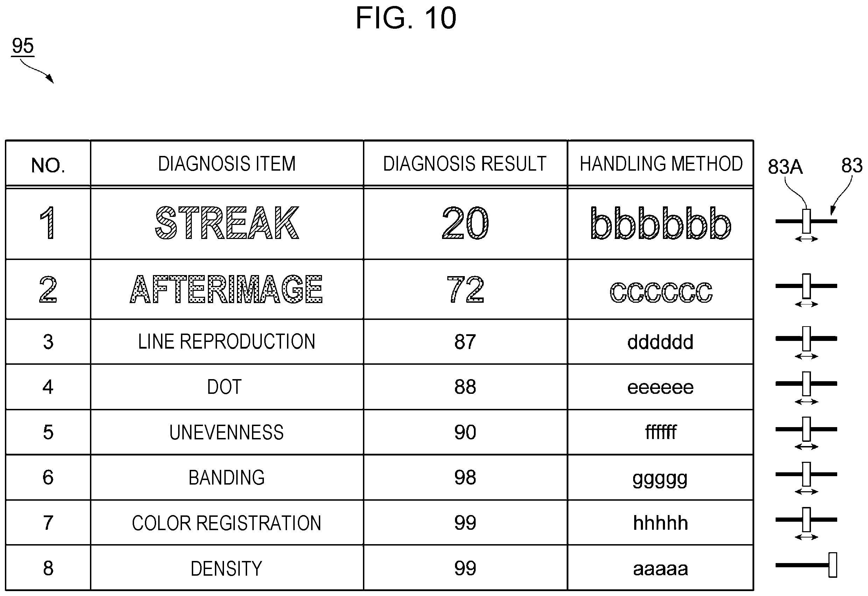

Fig. 9 and Fig. 10 are diagrams illustrating other examples of the screen 95 generated by the CPU 11a of the server apparatus 200.

Fig. 9 illustrates the initial screen 95 initially generated by the CPU 11a, and Fig. 10 illustrates the screen 95 newly generated by the CPU 11a.

In this example, the diagnosis result for a diagnosis item designated by a user can be changed in response to an instruction from the user.

Specifically, on the screen 95 illustrated in Fig. 9, an accepting section 83 for accepting a change of a diagnosis result is displayed in association with each diagnosis result.

The CPU 11a changes the diagnosis result for the diagnosis item designated by the user in response to an instruction from the user performing an operation on the accepting section 83. In other words, in response to an instruction from the user performing an operation on the accepting section 83, the CPU 11a changes the diagnosis result associated with the accepting section 83 operated by the user.

The user performs an operation on the accepting section 83 to provide an instruction to change the diagnosis result.

In response to the instruction, the CPU 11a changes the diagnosis result for the diagnosis item associated with the accepting section 83 operated by the user, in accordance with the amount of operation performed by the user on the accepting section 83.

In each accepting section 83, the user is able to move a movable object 83A to the right and left.

In response to the movable object 83A being moved, the CPU 11a determines that an instruction has been provided from the user, and determines that the diagnosis item associated with the accepting section 83 having the movable object 83A moved by the user is the diagnosis item designated by the user.

The CPU 11a then changes the diagnosis result for the diagnosis item designated by the user in accordance with the amount of movement of the movable object 83A. The CPU 11a changes the diagnosis result such that the amount of change in the diagnosis result increases as the amount of movement of the movable object 83A increases.

More specifically, in this example, the CPU 11a changes the diagnosis result such that the evaluation score of the diagnosis result decreases as the amount of movement of the movable object 83A to the left increases and that the evaluation score of the diagnosis result increases as the amount of movement of the movable object 83A to the right increases.

More specifically, the CPU 11a changes the diagnosis result such that the numerical value of the diagnosis result decreases as the amount of movement of the movable object 83A to the left increases and that the numerical value of the diagnosis result increases as the amount of movement of the movable object 83A to the right increases.

Thereafter, the CPU 11a sorts the plural diagnosis results including the changed diagnosis result in a predetermined order.

In other words, in response to the diagnosis result being changed by the user, the CPU 11a sorts the plural diagnosis results including the changed diagnosis result in a predetermined order similarly to the above.

Subsequently, the CPU 11a generates the screen 95 on which the plural diagnosis results including the changed diagnosis result are arranged in the predetermined order, as illustrated in Fig. 10.

Specifically, in this example, the user performs an operation on one of the accepting sections 83 illustrated in Fig. 9 and changes the diagnosis result for the diagnosis item "density" designated by the user.

More specifically, in this example, the user moves the movable object 83A in the accepting section 83 in the right direction to change the diagnosis result so that the diagnosis result for the diagnosis item "density" is improved.

In this case, on the newly generated screen 95 illustrated in Fig. 10, the diagnosis result for "density" goes down in ranking, and the diagnosis result for "density" is displayed at the bottom.

The screen 95 illustrated in Fig. 9 will be further described.

On the screen 95 illustrated in Fig. 9, the user performs an operation on the accepting section 83, thereby inputting information about the strictness of the diagnosis for the diagnosis item designated by the user (hereinafter referred to as a "designated diagnosis item").

In other words, the user inputs information about the strictness of the diagnosis for the diagnosis item associated with the accepting section 83 operated by the user.

Upon an operation being performed on the accepting section 83, the CPU 11a acquires information about the strictness of the diagnosis. In other words, in this case, the CPU 11a acquires, from the user, information about the strictness of the diagnosis for the designated diagnosis item.

More specifically, as the amount of movement of the movable object 83A to the left increases, the strictness of the diagnosis indicated by the information acquired by the CPU 11a increases, and as the amount of movement of the movable object 83A to the right increases, the strictness of the diagnosis indicated by the information acquired by the CPU 11a decreases.

The CPU 11a changes the diagnosis result for the designated diagnosis item, based on the acquired information about the strictness.

Here, the CPU 11a changes the diagnosis result for the designated diagnosis item such that the evaluation score of the diagnosis result for the designated diagnosis item decreases as the strictness specified by the strictness information increases.

Specifically, the CPU11a changes the diagnosis result such that the numerical value of the diagnosis result for the designated diagnosis item decreases as the strictness specified by the strictness information increases.

More specifically, the CPU 11a changes the diagnosis result such that, as the strictness specified by the strictness information increases, the coefficient for use in generating the diagnosis result decreases and the evaluation score of the diagnosis result decreases.

Also, the CPU 11a changes the diagnosis result such that, as the strictness specified by strictness information decreases, the coefficient for use in generating the diagnosis result increases and the evaluation score of the diagnosis result increases.

Although not described above, the CPU 11a acquires a diagnosis result by using a predetermined and prepared generation formula.

The generation formula includes a coefficient by which a numerical value to be substituted into the generation formula is multiplied. As the coefficient decreases, the numerical value of the diagnosis result decreases, and as the coefficient increases, the numerical value of the diagnosis result increases.

The CPU 11a changes the diagnosis result such that, as the strictness specified by the strictness information increases, the coefficient decreases and the numerical value of the diagnosis result decreases.

The CPU 11a changes the diagnosis result such that, as the strictness specified by the strictness information decreases, the coefficient increases and the numerical value of the diagnosis result increases.

The CPU 11a then sorts the plural diagnosis results including the changed diagnosis result for the designated diagnosis item in the above-described predetermined order.

The CPU 11a then generates the new screen 95 on which the plural diagnosis results including the changed diagnosis result for the designated diagnosis item are arranged in the predetermined order. Accordingly, for example, the screen 95 illustrated in Fig. 10 is generated.

On the screen 95 illustrated in Fig. 10, the numerical value of the diagnosis result for the diagnosis item "density" has become larger, and the diagnosis result for the diagnosis item "density" has gone down in ranking.

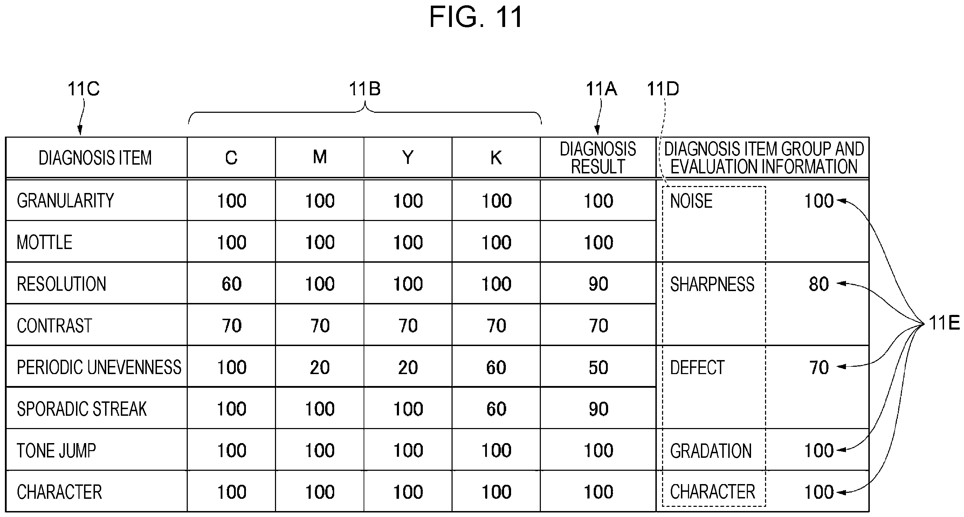

Fig. 11 is a diagram for describing an example of another process performed by the CPU 11a of the server apparatus 200.

Also in this example process, the CPU 11a first acquires a diagnosis result, which is a result of a diagnosis made on the diagnostic image 61, that is, diagnosis results for plural diagnosis items.

Specifically, in the example illustrated in Fig. 11, the eight items "granularity", "mottle", "resolution", "contrast", "periodic unevenness", "sporadic streak", "tone jump", and "character" are diagnosis items, and the CPU 11a acquires diagnosis results denoted by reference sign 11A for the respective diagnosis items.

Each diagnosis result is represented by a numerical value, and a smaller value indicates a worse diagnosis result.

More specifically, as denoted by reference sign 11B in Fig. 11, the CPU 11a first acquires diagnosis results for the respective colors of cyan, magenta, yellow, and black. Based on the four diagnosis results acquired for the respective colors, the CPU 11a acquires each of the diagnosis results denoted by reference sign 11A.

Although not described above, the image former 100A of the image forming apparatus 100 (see Fig. 1) on which a diagnosis is to be made includes four image formers that form images of different colors. More specifically, the image former 100A includes four image formers that form cyan, magenta, yellow, and black images, respectively.

The diagnostic image 61 formed on the diagnostic sheet CP (see Fig. 1) includes images formed by the four image formers, and the CPU 11a analyzes the diagnostic image 61 to acquire diagnosis results for the respective colors of cyan, magenta, yellow, and black.

Based on the four diagnosis results acquired for the respective colors, the CPU 11a acquires a diagnosis result for each of the plural diagnosis items denoted by reference sign 11A in Fig. 11.

Here, the CPU 11a acquires, as the diagnosis result denoted by reference sign 11A, an average value of the diagnosis results acquired for the respective colors of cyan, magenta, yellow, and black.

Subsequently, in this example, the CPU 11a generates evaluation information for each of diagnosis item groups, which is a group to which one or more of the diagnosis items denoted by reference sign 11C belong, based on the diagnosis result for each diagnosis item belonging to the diagnosis item group. The evaluation information is information about an evaluation on the diagnosis item group.

Specifically, the CPU 11a calculates, for each diagnosis item group, an average value of the diagnosis results for the diagnosis items belonging to the diagnosis item group, and regards the average value as evaluation information.

In the example illustrated in Fig. 11, each of "noise", "sharpness", "defect", "gradation", and "character" denoted by reference sign 11D is a diagnosis item group.

Furthermore, in the example illustrated in Fig. 11, numerical values denoted by reference sign 11E displayed on the right side of these diagnosis item groups are evaluation information.

In this example, the diagnosis items "granularity" and "mottle" belong to the diagnosis item group "noise".

In this case, the CPU 11a generates the evaluation information "100" on the diagnosis item group "noise", based on the diagnosis result "100" for the diagnosis item "granularity" and the diagnosis result "100" for the diagnosis item "mottle".

Furthermore, in this example, the diagnosis items "resolution" and "contrast" belong to the diagnosis item group "sharpness".

In this case, CPU 11a generates the evaluation information "80" on the diagnosis item group "sharpness", based on the diagnosis result "90" for the diagnosis item "resolution" and the diagnosis result "70" for the diagnosis item "contrast".

Furthermore, in this example, the diagnosis items "periodic unevenness" and "sporadic streak" belong to the diagnosis item group "defect".

In this case, the CPU 11a generates the evaluation information "70" on the diagnosis item group "defect", based on the diagnosis result "50" for the diagnosis item "periodic unevenness" and the diagnosis result "90" for the diagnosis item "sporadic streak".

Furthermore, in this example, the diagnosis item "tone jump" belongs to the diagnosis item group "gradation".

In this case, the CPU 11a generates the evaluation information "100" on the diagnosis item group "gradation", based on the diagnosis result "100" for the diagnosis item "tone jump".

Furthermore, in this example, the diagnosis item "character" belongs to the diagnosis item group "character".

In this case, the CPU 11a generates the evaluation information "100" on the diagnosis item group "character", based on the diagnosis result "100" for the diagnosis item "character".

Thereafter, the CPU 11a generates the screen 95 on which each of the diagnosis item groups and the evaluation information on each of the diagnosis item groups are displayed.

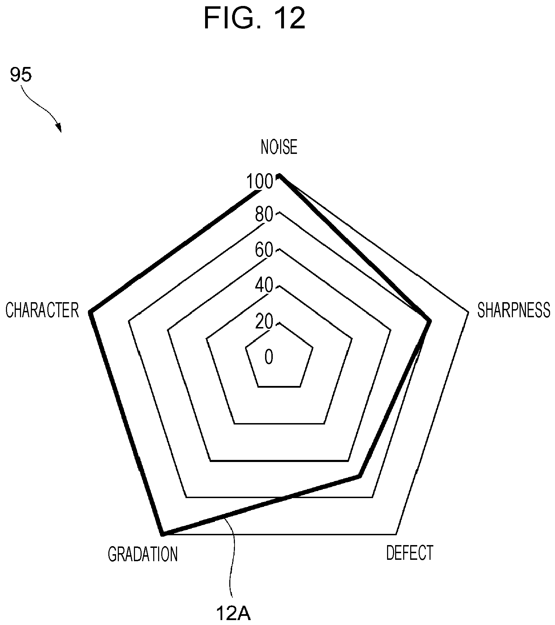

Fig. 12 is a diagram illustrating an example of the screen 95 generated by the CPU 11a of the server apparatus 200.

On the screen 95, five diagnosis item groups "noise", "sharpness", "defect", "gradation", and "character" are displayed, and evaluation information on the five diagnosis item groups is also displayed. Here, the evaluation information is represented by the positions of the vertices of the pentagon denoted by reference sign 12A.

On the screen 95, the diagnosis item groups and the evaluation information are displayed in association with each other.

In this example, the CPU 11a generates the screen 95 on which each of the diagnosis item groups and the evaluation information are displayed on a graph as illustrated in Fig. 12.

More specifically, in this example, the CPU 11a generates the screen 95 on which each of the diagnosis item groups and the evaluation information are displayed on a radar chart, which is an example of a graph.

Here, the term "graph" refers to graphical representation of the relationship between the diagnosis item groups and the evaluation information.

The term "radar chart" refers to polygonal representation of the relationship between the diagnosis item groups and the evaluation information. In the present exemplary embodiment, each diagnosis item group is associated with a corresponding vertex of a polygon, and evaluation information on each diagnosis item group is displayed on a line connecting the corresponding vertex of the polygon and the center of the polygon.

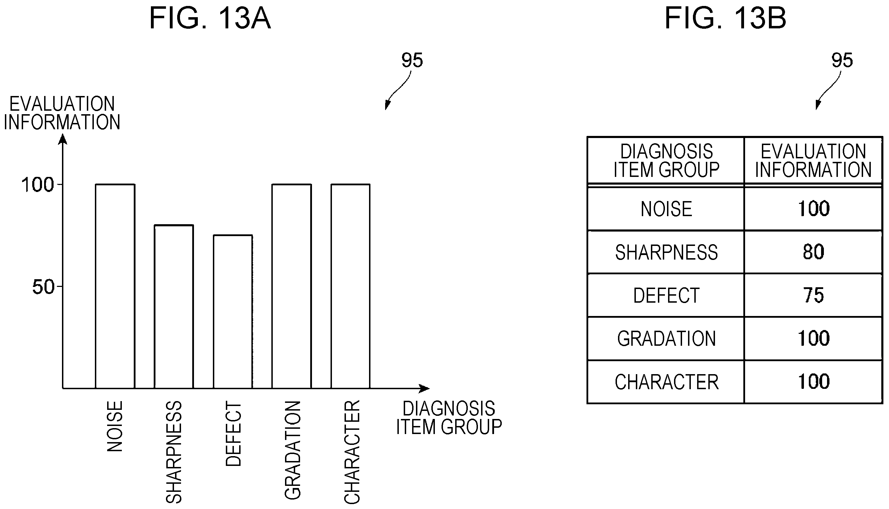

Figs. 13A and 13B are diagrams illustrating other examples of the screen 95 generated by the CPU 11a of the server apparatus 200.

A description has been given above of the case where the diagnosis item groups and the evaluation information are displayed on the radar chart as an example, but the graph is not limited to the radar chart.

As illustrated in Fig. 13A, the screen 95 may be generated on which each of the diagnosis item groups and the evaluation information are displayed in the form of a bar graph.

Alternatively, as illustrated in Fig. 13B, the screen 95 may be generated on which each of the diagnosis item groups and the evaluation information are displayed in the form of a list.

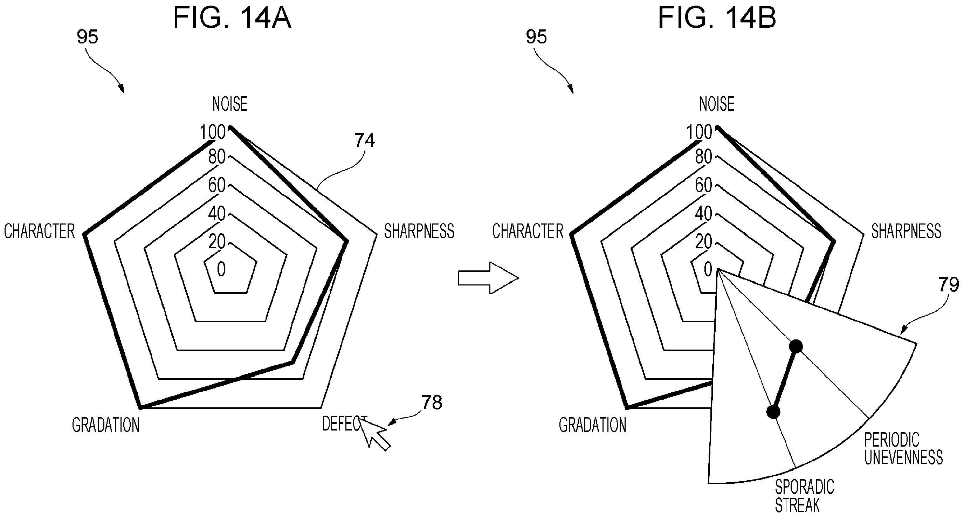

Figs. 14A and 14B are diagrams for describing the screen 95 displayed when a user selects a diagnosis item group.

The screen 95 illustrated in Fig. 14A corresponds to the screen 95 illustrated in Fig. 12, and is the initial screen 95 initially generated by the CPU 11a. The initial screen 95 illustrated in Fig. 14A is a screen that has already been generated and that is displayed on the user terminal 300.

In this example process illustrated in Figs. 14A and 14B, it is assumed that the user selects a diagnosis item group from among the diagnosis item groups included in the initial screen 95 illustrated in Fig. 14A.

Specifically, in this example, it is assumed that the user moves a cursor 78 to the display position of the diagnosis item group "defect" and selects the diagnosis item group "defect" from among the plural diagnosis item groups.

In this case, the CPU 11a generates the new screen 95 illustrated in Fig. 14B on which each of the diagnosis items belonging to the diagnosis item group selected by the user and the diagnosis results for these diagnosis items are additionally displayed on the initial screen 95.

Specifically, in this example, the CPU 11a generates the new screen 95 on which the diagnosis items "periodic unevenness" and "sporadic streak" belonging to the diagnosis item group "defect" selected by the user, and the diagnosis results for "periodic unevenness" and "sporadic streak" are additionally displayed.

In this example, the diagnosis items and diagnosis results that are additionally displayed are displayed on an additional radar chart 79 (see Fig. 14B), which is a radar chart additionally displayed on the basic initial radar chart (see Fig. 14A).

In response to any diagnosis item group being selected by the user, the CPU 11a generates the new screen 95 on which each diagnosis item belonging to the diagnosis item group selected by the user and the diagnosis result for the diagnosis item are additionally displayed on the radar chart displayed so far.

"Additionally displayed on the radar chart displayed so far" does not mean that the diagnosis items and the diagnosis results are displayed on the inner side of a peripheral edge 74 (see Fig. 14A) of the initial radar chart, but means that the diagnosis items and the diagnosis results are additionally displayed on the screen 95 on which the initial radar chart is displayed.

In this example, the CPU 11a generates the new screen 95 illustrated in Fig. 14B in response to, for example, the cursor 78 being moved to a diagnosis item group and mouse-over being performed on the diagnosis item group by the user, as illustrated in Fig. 14A.

Subsequently, the newly generated screen 95 is transmitted to the user terminal 300 (see Fig. 1) and is displayed on the user terminal 300. Accordingly, the screen 95 illustrated in Fig. 14B is displayed on the user terminal 300.

In this example process, in response to a diagnosis item group being selected by the user, detailed information about the diagnosis item group is displayed.

Specifically, a diagnosis item belonging to the diagnosis item group and a diagnosis result for the diagnosis item are displayed as detailed information.

Although not illustrated, in response to a diagnosis item included in the newly generated screen 95 illustrated in Fig. 14B being selected, the above-described four diagnosis results acquired for the respective colors may be additionally displayed.

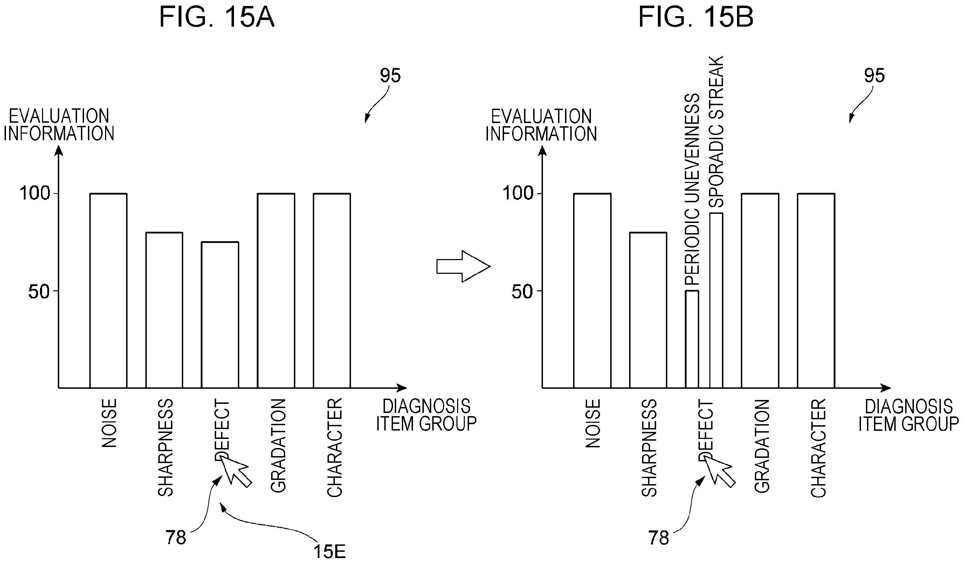

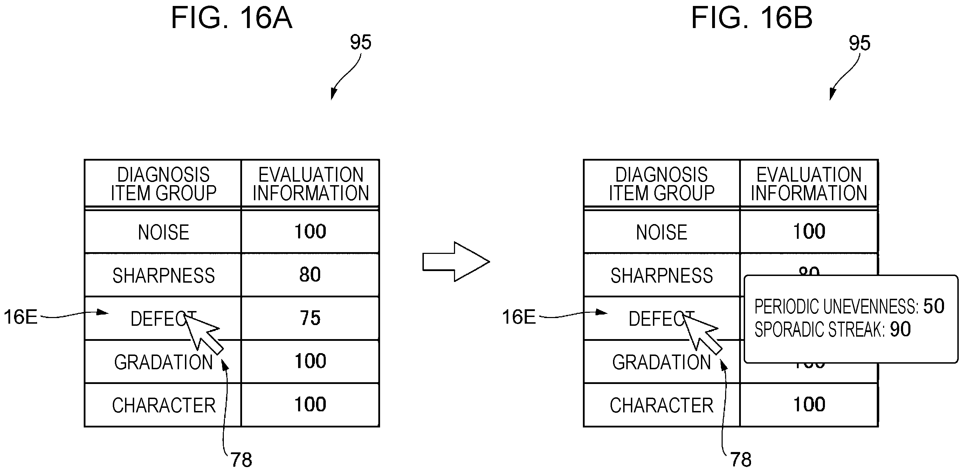

Figs. 15A and 15B and Figs. 16A and 16B are diagrams illustrating other display examples.

Figs. 15A and 15B illustrate a display example in a case where a diagnosis item group is selected by a user when diagnosis item groups and evaluation information are displayed in the form of a bar graph.

For example, in response to the diagnosis item group denoted by reference sign 15E being selected by the user when the initial screen 95 illustrated in Fig. 15A is displayed, the new screen 95 is generated on which the diagnosis items belonging to the diagnosis item group and a bar graph showing the diagnosis results for the diagnosis items are displayed as illustrated in Fig. 15B.

On the new screen 95 illustrated in Fig. 15B, a bar graph showing the evaluation information on the diagnosis item group selected by the user has been erased, and a bar graph showing the diagnosis results for the diagnosis items is displayed at the position where the original bar graph was displayed.

A description has been given of the case where a bar graph showing the evaluation information is erased and then a bar graph showing the diagnosis results for the diagnosis items is displayed, but the display manner is not limited thereto.

While a bar graph showing the evaluation information is displayed, for example, another bar graph showing the diagnosis results for the diagnosis items may be displayed inside the display region of the bar graph.

Alternatively, while a bar graph showing the evaluation information is displayed, for example, another bar graph showing the diagnosis results for the diagnosis items may be displayed above the display region of the bar graph.

Figs. 16A and 16B illustrate a display example in a case where a diagnosis item group is selected by a user when diagnosis item groups and evaluation information are displayed in the form of a list.

In this example, the user moves the cursor 78 to the display position of the diagnosis item group denoted by reference sign 16E and selects the diagnosis item group, for example, when the initial screen 95 illustrated in Fig. 16A is displayed, and thereby the new screen 95 illustrated in Fig. 16B is generated.

On the new screen 95 illustrated in Fig. 16B, at the position where the evaluation information on the diagnosis item group selected by the user was displayed, the diagnosis items belonging to the diagnosis item group and the diagnosis results for the diagnosis items are displayed.

In the example illustrated in Figs. 16A and 16B, a description has been given of the case where, in response to a diagnosis item group being selected by the user, the new screen 95 is generated on which the diagnosis items belonging to the diagnosis item group and the diagnosis results for the diagnosis items are displayed.

Alternatively, in response to the cursor 78 being moved to the display position of the evaluation information and the evaluation information being selected by the user when the screen illustrated in Fig. 16A is displayed, the new screen 95 may be generated on which the diagnosis items belonging to the diagnosis item group associated with the evaluation information and the diagnosis results for the diagnosis items are displayed.

In the example illustrated in Figs. 16A and 16B, a description has been given of the case where the diagnosis items belonging to the diagnosis item group and the diagnosis results for the diagnosis items are displayed at the position where the evaluation information was displayed as illustrated in Fig. 16B.

The display manner is not limited thereto, and the diagnosis items and the diagnosis results for the diagnosis items may be displayed at a position different from the display position of the evaluation information, such as the right side of the display position of the evaluation information.

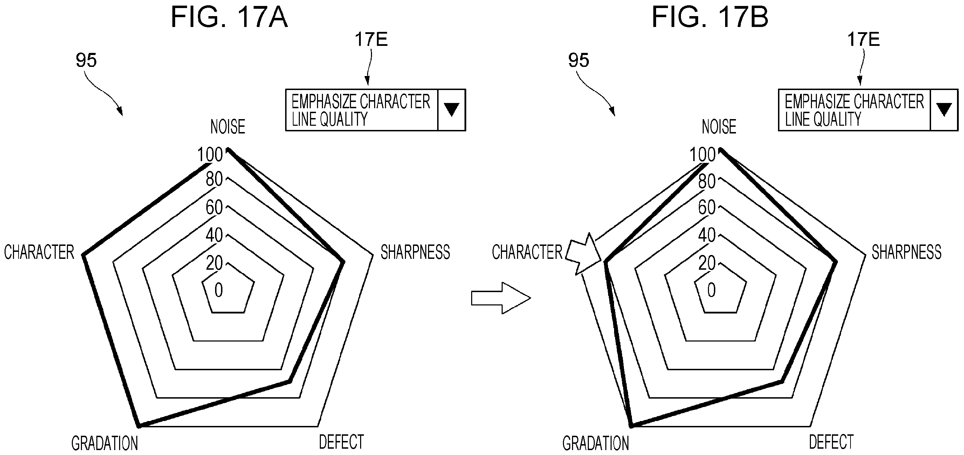

Figs. 17A and 17B are diagrams for describing another example of the new screen 95 generated by the CPU 11a of the server apparatus 200.

Fig. 17A illustrates the initial screen 95 initially generated by the CPU 1 1a, and Fig. 17B illustrates the new screen 95 generated by the CPU 11a.

In the present exemplary embodiment, evaluation information may be changed as will be described below.

In response to evaluation information being changed, the CPU 11a generates the new screen 95 on which each of the diagnosis item groups and the changed evaluation information are displayed as illustrated in Fig. 17B.

Specifically, in the example illustrated in Figs. 17A and 17B, the evaluation information on the diagnosis item group "character" illustrated in Fig. 17A is changed. In this case, as illustrated in Fig. 17B, the CPU 11a generates the new screen 95 on which each of the diagnosis item groups and the changed evaluation information are displayed.

More specifically, in the example illustrated in Figs. 17A and 17B, the evaluation information on the diagnosis item group "character" illustrated in Fig. 17A is changed from "100" to "80".

In this case, the CPU 11a generates the new screen 95 on which each of the diagnosis item groups and the changed evaluation information are displayed as illustrated in Fig. 17B. On the new screen 95, the evaluation information on the diagnosis item group "character" is "80".

In the example illustrated in Figs. 17A and 17B, only the evaluation information on the diagnosis item group "character" is changed. On the new screen 95 illustrated in Fig. 17B, the evaluation information on the diagnosis item group "character" has been changed, and the evaluation information on the diagnosis item groups other than "character" has not been changed.

In the present exemplary embodiment, the CPU 11a of the server apparatus 200 generates evaluation information in accordance with a predetermined generation condition.

For example, the generation condition may be that an average value of diagnosis results obtained for individual belonging diagnosis items, which are diagnosis items belonging to a diagnosis item group, is regarded as evaluation information.

In this case, the CPU 11a uses the average value of the diagnosis results obtained for the individual belonging diagnosis items as the evaluation information on the diagnosis item group.

Furthermore, in the present exemplary embodiment, a user is able to input information about a matter to be emphasized. Furthermore, in the present exemplary embodiment, the generation condition for use in generating evaluation information can be changed.

In the present exemplary embodiment, in response to a matter to be emphasized being input, the CPU 11a of the server apparatus 200 changes the generation condition and generates new evaluation information by using the changed generation condition. Accordingly, in this case, the evaluation information is changed.

In a case where the generation condition for use in generating evaluation information is changed to a new generation condition, the CPU 11a newly generates evaluation information on a diagnosis item group by using the new generation condition. Accordingly, the evaluation information is changed.

In this case, the CPU 11a of the server apparatus 200 generates the new screen 95 on which each of the diagnosis item groups and the newly generated evaluation information are displayed as described above. Accordingly, the new screen 95 illustrated in Fig. 17B is generated.

Specifically, in the present exemplary embodiment, the user is able to input, for example, any one of "emphasize natural image quality", "emphasize character line quality", and "emphasize image defect" as a matter to be emphasized via the user terminal 300 (see Fig. 1).

In response to information about any one of these matters being input, the CPU 11a changes, based on the information about the matter input by the user, the generation condition set in advance for each diagnosis item group.

The CPU 11a then generates new evaluation information for the diagnosis item group by using the changed generation condition. Accordingly, the evaluation information is changed as described above.

In Fig. 17A, as denoted by reference sign 17E, the user inputs a matter "emphasize character line quality" as a matter to be emphasized.

In this case, the CPU 1 1a of the server apparatus 200 changes the generation condition prepared for the diagnosis item group "character", which is a diagnosis item group associated in advance with the matter "emphasize character line quality".

The CPU 11a then generates new evaluation information about the diagnosis item group "character" by using the changed generation condition. Accordingly, in this example, the CPU 11a generates new evaluation information "80" on the diagnosis item group "character".

In the present exemplary embodiment, a diagnosis item group is associated with each matter to be emphasized.

In the present exemplary embodiment, in response to a matter to be emphasized being input, the CPU 11a of the server apparatus 200 changes the generation condition associated with the diagnosis item group associated with the matter to be emphasized.

Specifically, the CPU 11a changes the generation condition such that the coefficient included in the generation condition becomes small. The generation condition according to the present exemplary embodiment is constituted by a calculation formula including a coefficient by which the above-described average value of the diagnosis results for the diagnosis items is multiplied, and the coefficient included in the calculation formula is "1" before the generation condition is changed.

In the present exemplary embodiment, the average value of the diagnosis results for the diagnosis items is used as evaluation information as described above. However, the coefficient is 1 in normal cases, and the average value of the diagnosis results for the diagnosis items is generated as evaluation information.

On the other hand, when the generation condition is changed such that the coefficient included in the generation condition becomes small, the average value is multiplied by the coefficient having a value smaller than 1, and the value of newly generated evaluation information becomes small.

Here, the matter to be emphasized is a matter for which strict evaluation is demanded by the user. In the present exemplary embodiment, in response to information about any one of the matters being input by the user as described above, the coefficient becomes small accordingly. As a result, the value of the evaluation information decreases, and the evaluation is output more strictly.

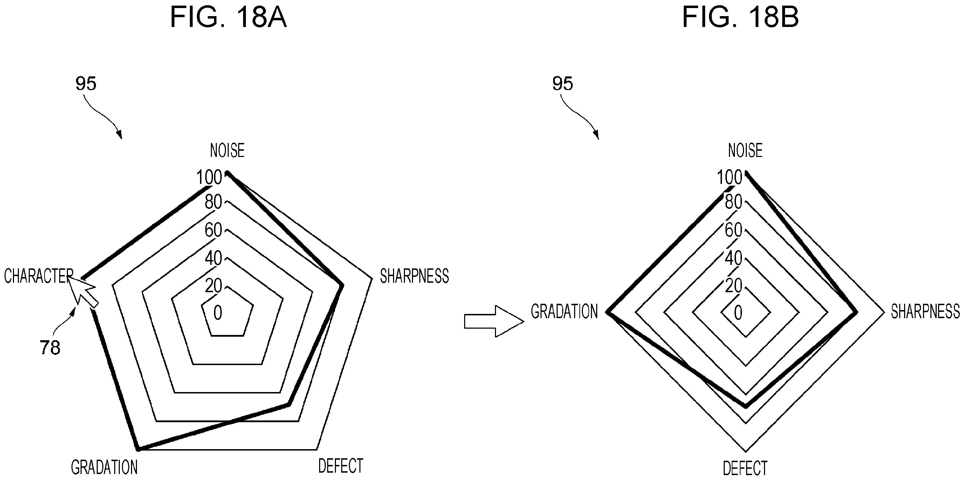

Figs. 18A and 18B are diagrams for describing another example of the new screen 95 generated by the CPU 11a of the server apparatus 200.

Fig. 18A illustrates the initial screen 95 before the new screen 95 is generated, and Fig. 18B illustrates the new screen 95.

In this example, a user selects a diagnosis item group from among the diagnosis item groups included in the initial screen 95 generated by the CPU 11a of the server apparatus 200 and displayed on the user terminal 300. Specifically, the user selects a diagnosis item group by performing an operation on the user terminal 300.

In this example process, as illustrated in Fig. 18A, the user moves the cursor 78 to the display position of the diagnosis item group "character" and selects the diagnosis item group "character" from among the plural diagnosis item groups.

In this case, as illustrated in Fig. 18B, the CPU 11a generates the new screen 95 on which the diagnosis item group "character" is not displayed and the evaluation information on the diagnosis item group "character" is not displayed.

In this example process, in response to the diagnosis item group being selected by the user as illustrated in Fig. 18A, the CPU 11a generates the new screen 95 on which the diagnosis item group selected by the user (hereinafter referred to as a "selected diagnosis item group") is not displayed and the evaluation information on the selected diagnosis item group is not displayed as illustrated in Fig. 18B.

In Figs. 18A and 18B, a description has been given of, as an example, the case where the selected diagnosis item group and the evaluation information on the selected diagnosis item group are not displayed. Alternatively, the selected diagnosis item group and the evaluation information on the selected diagnosis item group may be displayed at lower density so that the selected diagnosis item group and the evaluation information on the selected diagnosis item group are inconspicuous.

Alternatively, in response to a diagnosis item group being selected by the user from among the diagnosis item groups displayed on the initially generated initial screen 95, the CPU 11a may generate the new screen 95 on which the selected diagnosis item group, which is the diagnosis item group selected by the user, is displayed and the other diagnosis item groups are not displayed.

More specifically, in this case, the CPU 11a may generate the new screen 95 on which non-selected diagnosis item groups, which are diagnosis item groups other than the selected diagnosis item group, are not displayed and the evaluation information on the non-selected diagnosis item groups is not displayed.

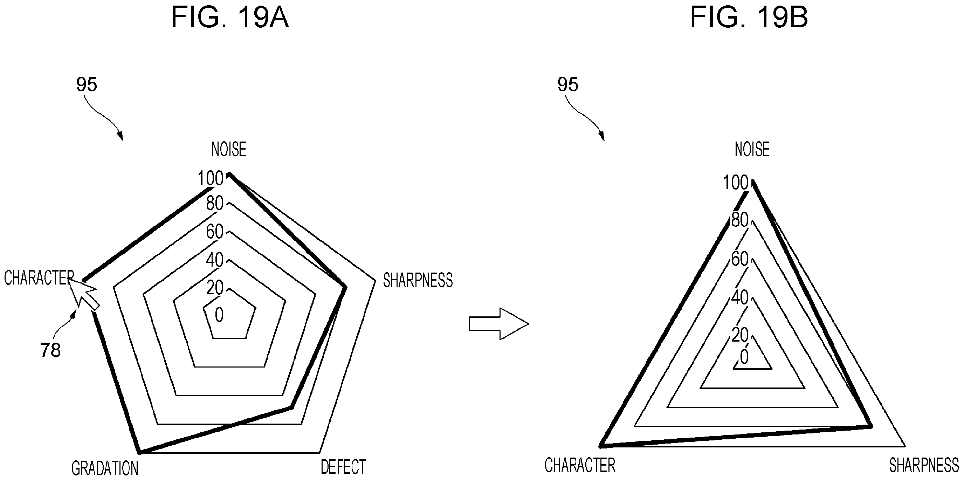

Figs. 19A and 19B are diagrams for describing another example of the new screen 95 generated by the CPU 11a of the server apparatus 200. Similarly to the above, Fig. 19A illustrates the initial screen 95 before the new screen 95 is generated, and Fig. 19B illustrates the new screen 95.

In the example illustrated in Figs. 19A and 19B, a user selects three diagnosis item groups "character", "noise", and "sharpness" from among the diagnosis item groups displayed in Fig. 19A.

In this case, the CPU 11a of the server apparatus 200 generates the new screen 95 on which the non-selected diagnosis item groups "defect" and "gradation", which are diagnosis item groups other than "character", "noise", and "sharpness", are not displayed and the evaluation information on the non-selected diagnosis item groups is not displayed, as illustrated in Fig. 19B.

Similarly to the above, the non-selected diagnosis item groups and the evaluation information on the non-selected diagnosis item groups may be displayed at lower density so that the non-selected diagnosis item groups and the evaluation information on the non-selected diagnosis item groups are inconspicuous.

The processing performed in the image forming apparatus 100 will be described in detail.

In the present exemplary embodiment, at the time of generation of the diagnostic sheet CP having the diagnostic image 61 formed thereon, the CPU 11a included in the image forming apparatus 100 causes the diagnostic image 61 to be formed on a sheet and causes an image for specifying the orientation of the diagnostic image 61 (hereinafter referred to as an "orientation specifying image") to be formed on the sheet.

In one exemplary embodiment, only one orientation specifying image is formed on the sheet. In another exemplary embodiment, plural orientation specifying images are formed on the sheet, as will be described below. In the case of forming plural orientation specifying images, each orientation specifying image is formed at a corresponding one of plural portions of the diagnostic sheet CP.

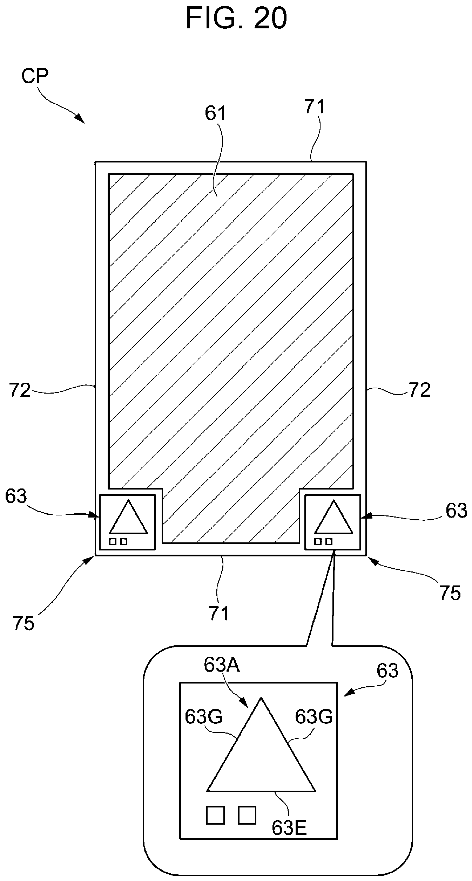

Fig. 20 is a diagram illustrating an example of the diagnostic sheet CP having the diagnostic image 61 and orientation specifying images 63 formed thereon.

The diagnostic sheet CP illustrated in Fig. 20 is a rectangular sheet. The diagnostic sheet CP has a rectangular shape, and has two short edges 71 and two long edges 72.

In the diagnostic sheet CP illustrated in Fig. 20, one of the short edges 71 is located on the lower side of the diagnostic sheet CP, and two orientation specifying images 63 are formed on the lower side of the diagnostic sheet CP, at the positions different from each other in the direction in which the short edge 71 extends.

In the diagnostic sheet CP, each of the orientation specifying images 63 is formed at a corresponding one of two corner portions 75 at the positions different from each other in the direction in which the short edge 71 of the diagnostic sheet CP extends.

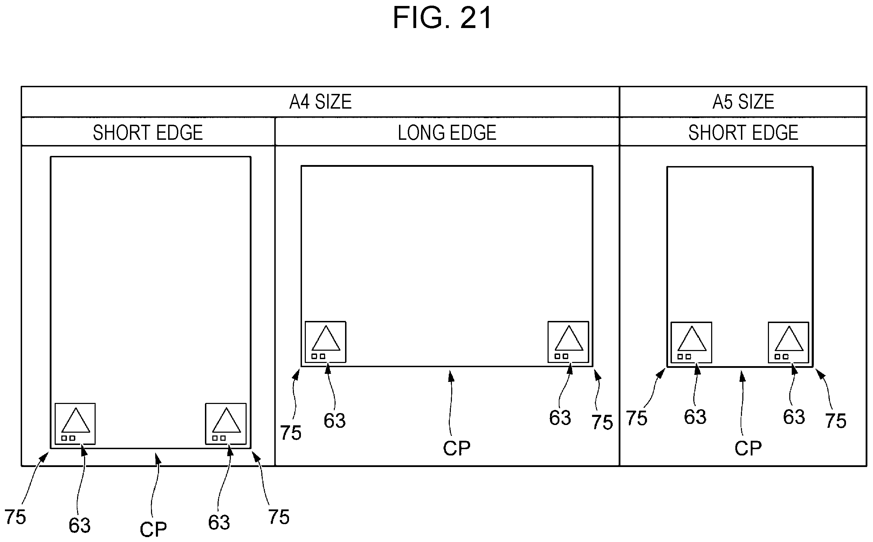

Fig. 21 is a diagram for describing a manner of forming orientation specifying images 63.

In the present exemplary embodiment, an orientation specifying image 63 is formed at a corner portion 75 of the diagnostic sheet CP regardless of the size of the diagnostic sheet CP. The size of the diagnostic sheet CP may be an A4 size, an A5 size, or the like. In any size, the orientation specifying image 63 is formed at the corner portion 75 of the diagnostic sheet CP.

In a case where the orientation specifying image 63 is formed at the corner portion 75 of the diagnostic sheet CP, the maximum size of the diagnostic image 61 (not illustrated in Fig. 21) that can be formed is larger than in a case where the orientation specifying image 63 is formed at a center portion relative to the corner portion 75 of the diagnostic sheet CP.

As illustrated in Fig. 20, each orientation specifying image 63 includes a triangular image 63A.

The triangular image 63A has three sides, and one side serving as a reference (hereinafter referred to as a "reference side 63E") among the three sides is along the short edge 71 on the lower side of the diagnostic sheet CP.

The other two sides 63G extend toward the short edge 71 located on the upper side of the diagnostic sheet CP, approach each other, and are connected to each other at the distal ends in the extending directions.

In the present exemplary embodiment, the directions in which the other two sides 63G extend indicate the direction in which an upper portion of the diagnostic image 61 is located.

In this example, two orientation specifying images 63 are located in a lower portion of the diagnostic sheet CP. When the diagnostic image 61 is right side up as illustrated in Fig. 20, the two orientation specifying images 63 are located in a lower portion of the diagnostic sheet CP.

When the diagnostic image 61 is right side up, the reference side 63A of the triangular image 63E included in the orientation specifying image 63 is located below the other two sides 63G.

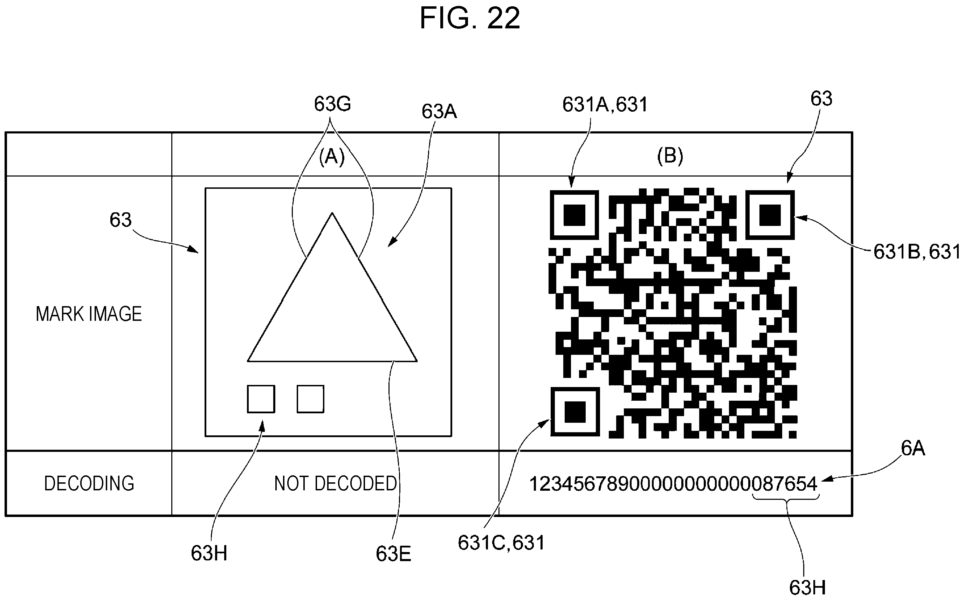

Fig. 22 is a diagram for describing the details of the orientation specifying image 63. Part (A) of Fig. 22 illustrates the orientation specifying image 63 illustrated in Fig. 20.

In the present exemplary embodiment, as described above and as illustrated in part (A) of Fig. 22, the orientation specifying image 63 includes the triangular image 63A.

In the present exemplary embodiment, as described above, the directions in which the other two sides 63G extending from the reference side 63E extend are directions in which the upper portion of the diagnostic image 61 (not illustrated in Fig. 22) is located.

In other words, in the present exemplary embodiment, the directions in which the other two sides 63G extending from the reference side 63E extend indicate a moving direction of a sheet when the diagnostic image 61 is formed on the sheet by the image former 100A (described below).

In the orientation specifying image 63 illustrated in part (A) of Fig. 22, identification information 63H for use in identifying the diagnostic sheet CP is located below the triangular image 63A. In the present exemplary embodiment, plural diagnostic sheets CP may be generated, and each of the diagnostic sheets CP is identified based on the identification information 63H.

In the present exemplary embodiment, in a case where plural diagnostic sheets CP are generated for one diagnosis, the number of dots constituting the identification information 63H differs in each diagnostic sheet CP. In the present exemplary embodiment, each diagnostic sheet CP is identified based on the number of dots.

Furthermore, the orientation specifying image 63 according to the present exemplary embodiment is also used to determine whether or not to permit transmission of read image data obtained by reading the diagnostic sheet CP.

In the present exemplary embodiment, if the read image data includes the triangular image 63A, the CPU 11a of the image forming apparatus 100 determines that the read image data includes information indicating that transmission is permitted. In this case, the CPU 11a of the image forming apparatus 100 permits transmission of the read image data. Accordingly, the read image data is transmitted to the server apparatus 200.

On the other hand, if the read image data does not include the triangular image 63A, the CPU 11a of the image forming apparatus 100 determines that the read image data does not include information indicating that transmission is permitted, and does not permit transmission of the read image data. In this case, the read image data is not transmitted to the server apparatus 200.

In the present exemplary embodiment, the orientation specifying image 63 includes transmission control information for controlling transmission of the read image data, and transmission of the read image data is permitted or not permitted in accordance with the content of the transmission control information.

Part (B) of Fig. 22 is a diagram illustrating another example of the orientation specifying image 63.

The orientation specifying image 63 need not necessarily be an image including the triangular image 63A described above, and may be an image including an image formed by encoding information, such as a two-dimensional barcode, as illustrated in part (B) of Fig. 22.

As illustrated in part (B) of Fig. 22, in the case of using the orientation specifying image 63 including a two-dimensional barcode, the orientation of the diagnostic image 61 is specified based on a quadrangular mark 631, which is a finder pattern included in the two-dimensional barcode.

Specifically, the orientation of the diagnostic image 61 is specified based on the positions of first mark 631A to third mark 631C, which are three quadrangular marks 631 included in the two-dimensional barcode.

More specifically, in the present exemplary embodiment, when the two marks 631, that is, the first mark 631A and the second mark 631B, are located at upper portions and the third mark 631C, which is the other mark 631, is located at a lower left portion, it is determined that the diagnostic image 61 is right side up.

In other words, in the present exemplary embodiment, the third mark 631C located at the lower left serves as a reference mark, and the direction from the reference mark to the first mark 631A is the direction in which the upper portion of the diagnostic image 61 is located.

In a case where a two-dimensional barcode is included in the orientation specifying image 63, decoding of the two-dimensional barcode makes it possible to, for example, acquire a numerical value as denoted by reference sign 6A.

In the example illustrated in part (B) of Fig. 22, the first 9-digit numerical value "123456789" is information indicating that transmission is permitted. In this example, the two-dimensional barcode includes transmission control information for controlling transmission of the read image data.

Furthermore, in this example, the last 6-digit numerical value is the identification information 63H used for identifying the diagnostic sheet CP.

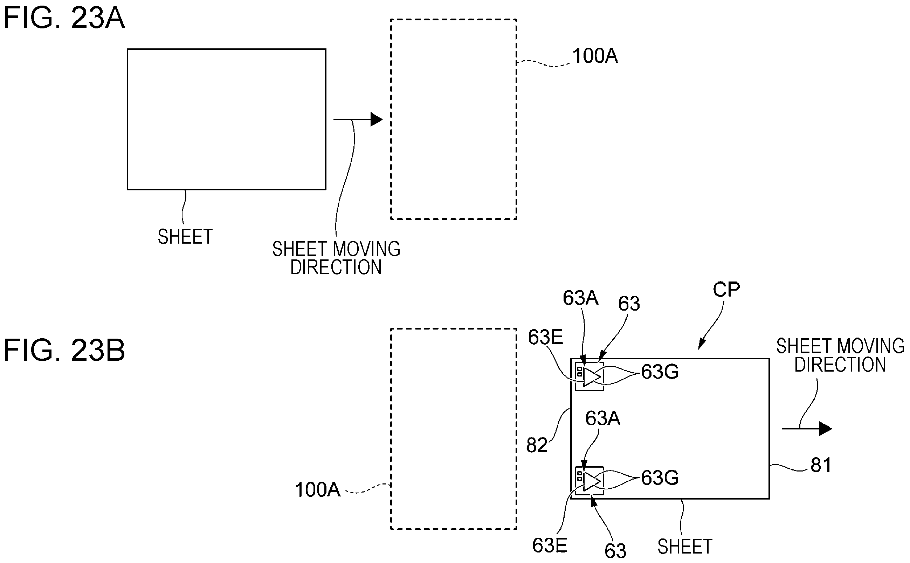

Figs. 23A and 23B are diagrams for describing image formation performed by the image former 100A included in the image forming apparatus 100 (see Fig. 3).

Figs. 23A and 23B illustrate a state in which the image former 100A illustrated in Fig. 3 is viewed from above. Fig. 23A illustrates a state before a sheet passes through the image former 100A, and Fig. 23B illustrates a state after the sheet has passed through the image former 100A. In Fig. 23B, the illustration of the diagnostic image 61 is omitted.

In the present exemplary embodiment, as illustrated in Fig. 23B, the two orientation specifying images 63 are formed at the most upstream portion of the sheet in the moving direction of the sheet when the sheet passes through the image former 100A.

The sheet has a downstream-side edge 81 located on the downstream side in the moving direction and an upstream-side edge 82 located on the upstream side in the moving direction. The two orientation specifying images 63 are arranged close to the upstream-side edge 82 such that the positions thereof are different from each other in the direction in which the upstream-side edge 82 extends.

According to the description given above, the orientation specifying images 63 are formed on the lower side of the diagnostic sheet CP. In other words, the orientation specifying images 63 are formed on the upstream side of the sheet in the moving direction of the sheet.

Furthermore, in the example illustrated in Figs. 23A and 23B, the reference side 63E of the triangular image 63A included in each orientation specifying image 63 is located close to the upstream-side edge 82, and the other two sides 63G extend toward the downstream-side edge 81.

In the triangular image 63A according to the present exemplary embodiment, the other two sides 63G are arranged so as to extend toward the downstream side in the moving direction of the sheet.

In a case where plural two-dimensional barcodes, each of which is illustrated in part (B) of Fig. 22, are formed on the diagnostic sheet CP, the plural two-dimensional barcodes are arranged close to the upstream-side edge 82 such that the positions thereof are different from each other in the direction in which the upstream-side edge 82 extends, similarly to the triangular images 63A.

Furthermore, each of the two-dimensional barcodes is arranged such that the third mark 631C (see part (B) of Fig. 22) is located close to the upstream-side edge 82 and that the first mark 631A and the second mark 631B are located closer to the downstream-side edge 81 than the third mark 631C.

A description has been given above of the case where the orientation specifying image 63 includes the triangular image 63A or a two-dimensional barcode.

Alternatively, for example, the orientation specifying image 63 may include characters such as "upper" or "lower".

Specifically, for example, the characters "lower" may be formed on the lower side of the diagnostic sheet CP, or the characters "upper" may be formed on the upper side of the diagnostic sheet CP.

Furthermore, a description has been given above of the case where the triangular image 63A is used as a figure indicating the direction of the diagnostic image 61, but another figure such as an arrow may be used as a figure indicating the direction.

Each orientation specifying image 63 illustrated in parts (A) and (B) of Fig. 22 is an image capable of specifying the orientation of the diagnostic image 61 by itself.

In other words, each orientation specifying image 63 is an image capable of specifying the orientation of the diagnostic image 61 alone.

In the present exemplary embodiment, the orientation of the diagnostic image 61 can be specified by detecting one orientation specifying image 63, regardless of the portion in the diagnostic image 61 at which the orientation specifying image 63 is formed.

Alternatively, an image that is incapable of specifying the orientation of the diagnostic image 61 alone, such as an image having a round shape, may be used as the orientation specifying image 63.

Even if the orientation specifying image 63 is an image that is incapable of specifying the orientation of the diagnostic image 61 alone, the orientation of the diagnostic image 61 can be specified based on the position of the orientation specifying image 63.

More specifically, for example, when the orientation specifying image 63 is arranged close to any one of the four edges of the diagnostic sheet CP, the orientation of the diagnostic image 61 can be specified based on the position of the orientation specifying image 63.

In other words, when the orientation specifying image 63 is arranged at a position deviated from the center portion of the diagnostic sheet CP, the orientation of the diagnostic image 61 can be specified based on the position of the orientation specifying image 63.

For example, when the orientation specifying image 63 is arranged on the lower side of the diagnostic sheet CP having the diagnostic image 61 that is right side up, it is possible to determine that the diagnostic image 61 is right side up.

In the present exemplary embodiment, after the diagnostic sheet CP has been generated, the diagnostic sheet CP is subjected to reading by the image reader 130 equipped in the image forming apparatus 100 (see Fig. 1).

Accordingly, read image data, which is an example of a reading result, is generated as described above. The read image data is transmitted to the server apparatus 200.

Subsequently, the CPU 11a, which is an example of a processor included in the server apparatus 200, which is an example of an information processing system, acquires the read image data, and makes a diagnosis on the image forming apparatus 100, based on the read image data.

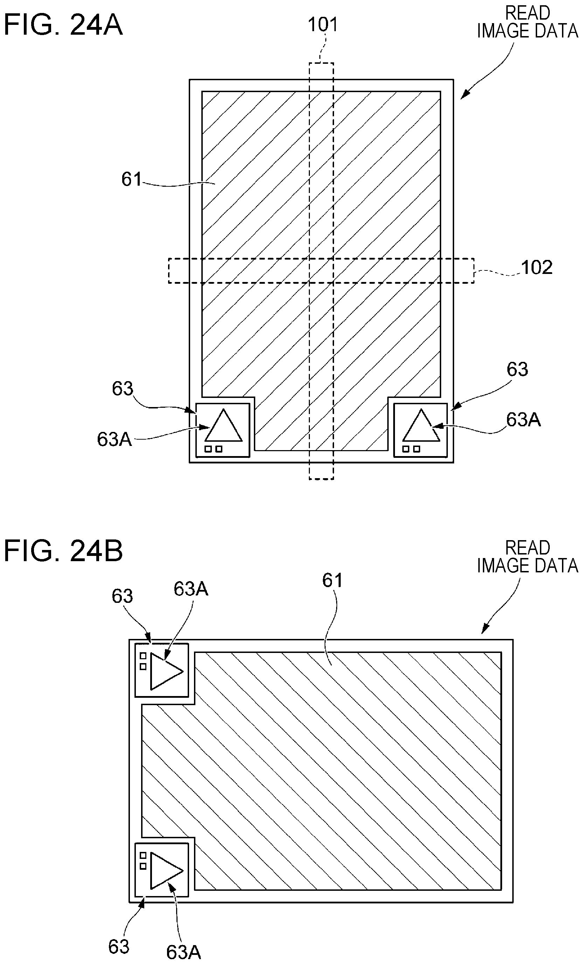

Figs. 24A and 24B are diagrams illustrating read image data to be analyzed by the CPU 11a of the server apparatus 200.

In the present exemplary embodiment, the read image data is in the state illustrated in Fig. 24A or Fig. 24B, for example, in accordance with the orientation of the diagnostic sheet CP set on the image reader 130 by a user.

In Fig. 24A, the diagnostic image 61 in the read image data is right side up. In other words, in Fig. 24A, the moving direction of the sheet passing through the image former 100A (see Figs. 23A and 23B) and the up-down direction of the diagnostic image 61 coincide with each other.

When the read image data is in the state illustrated in Fig. 24A, the CPU 11a of the server apparatus 200 determines that the diagnostic image 61 in the read image data is right side up.

More specifically, the CPU 11a of the server apparatus 200 determines that the diagnostic image 61 in the read image data is right side up, based on the orientations of the triangular images 63A included in the orientation specifying images 63.

In the present exemplary embodiment, the orientation of the diagnostic image 61 can be specified by the orientation specifying image 63 alone, as described above. The CPU 11a of the server apparatus 200 specifies the orientation of the diagnostic image 61, based on the orientations of the triangular images 63A included in the orientation specifying images 63.

When the read image data is in the state illustrated in Fig. 24A, the CPU 11a of the server apparatus 200 analyzes the diagnostic image 61 included in the read image data without rotating the read image data.

Specifically, the CPU 11a of the server apparatus 200 acquires an image located inside an up-down direction frame 101, which is a rectangular frame extending in the up-down direction in the diagnostic image 61, and makes a diagnosis on a first diagnosis item, such as banding, based on the acquired image.

Furthermore, the CPU 1 1a of the server apparatus 200 acquires an image located inside a right-left direction frame 102, which is a rectangular frame extending in the right-left direction in the diagnostic image 61, and makes a diagnosis on a second diagnosis item, such as charging unevenness, based on the acquired image.

On the other hand, when the read image data is in the state illustrated in Fig. 24B, the CPU 11a of the server apparatus 200 determines that the read image data is in a state of having been rotated clockwise by 90 degrees. In other words, the CPU 1 1a of the server apparatus 200 determines that the orientation of the diagnostic image 61 is an orientation other than a right-side-up orientation.

In the state illustrated in Fig. 24B, the triangular images 63A in the orientation specifying images 63 are oriented in the right direction in the figure. In this case, the CPU 11a of the server apparatus 200 determines that the diagnostic image 61 is in a state of having been rotated clockwise by 90 degrees.

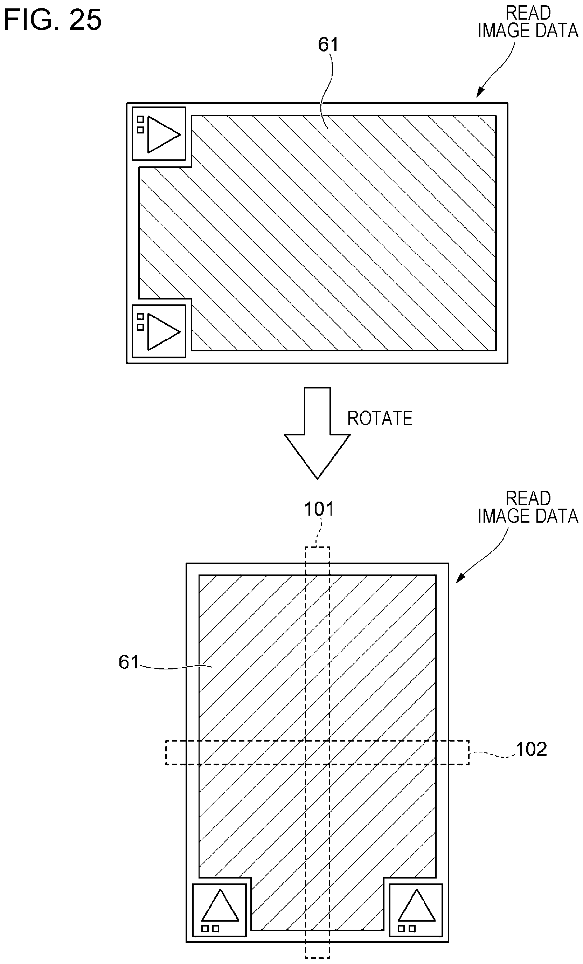

In this case, the CPU 11a of the server apparatus 200 rotates the read image data as illustrated in Fig. 25 (a diagram illustrating the rotation of the read image data), and makes a diagnosis on the image forming apparatus 100, based on the read image data that has been rotated.

Specifically, in this case, the CPU 11a of the server apparatus 200 rotates the read image data counterclockwise by 90 degrees so that the read image data is right side up.

Subsequently, the CPU 11a of the server apparatus 200 makes a diagnosis on the image forming apparatus 100, based on the read image data that is right side up.

More specifically, the CPU 11a of the server apparatus 200 acquires an image located inside the up-down direction frame 101 in the diagnostic image 61 included in the read image data that is right side up, and makes a diagnosis on the first diagnosis item, such as banding, based on the acquired image.

In addition, the CPU 11a of the server apparatus 200 acquires an image located inside the right-left direction frame 102 in the diagnostic image 61 included in the read image data that is right side up, and makes a diagnosis on the second diagnosis item, such as density unevenness, based on the acquired image.

In this way, the CPU 11a of the server apparatus 200 specifies the orientation of the diagnostic image 61, based on the orientation specifying images 63 included in the read image data which is a reading result. Subsequently, the CPU 11a of the server apparatus 200 makes a diagnosis on the image forming apparatus 100, based on the specified orientation and the acquired read image data.

If the specified orientation is an orientation other than a right-side-up orientation, the CPU 11a of the server apparatus 200 rotates the acquired read image data, and makes a diagnosis on the image forming apparatus 100, based on the read image data that has been rotated.

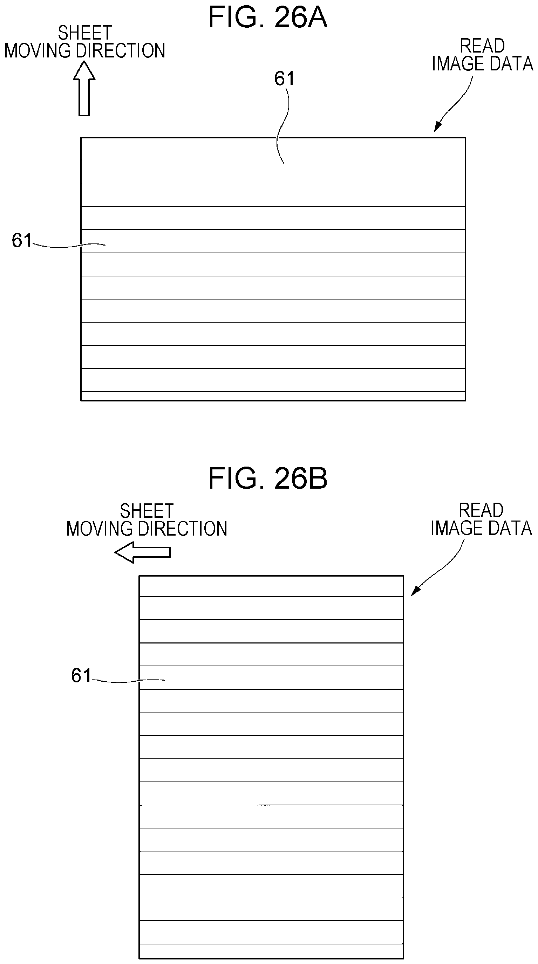

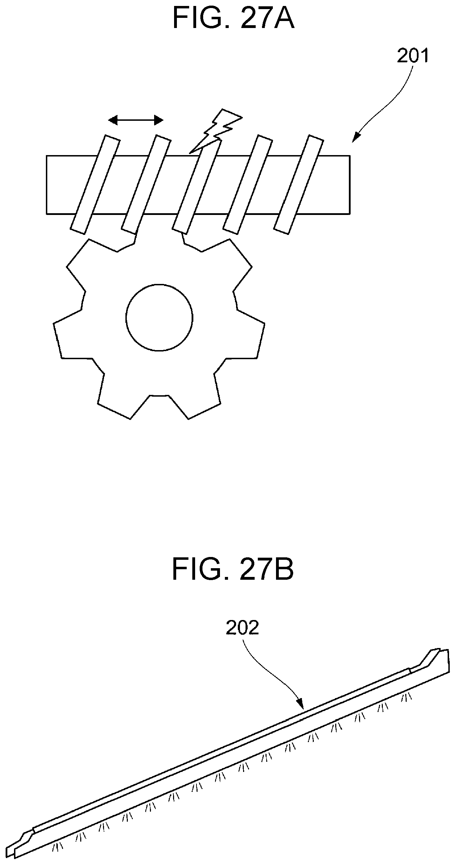

Figs. 26A and 26B and Figs. 27A and 27B are diagrams for describing rotation of read image data.

If a diagnosis is made on the image forming apparatus 100 based on the diagnostic image 61 without rotating the read image data, an erroneous diagnosis result may be obtained.

Fig. 26A illustrates read image data including the diagnostic image 61 that is right side up, and Fig. 26B illustrates read image data including the diagnostic image 61 that has been rotated.

In the example illustrated in Figs. 26A and 26B, density unevenness has occurred in the up-down direction in the diagnostic image 61. Specifically, in this example, unevenness of a 15 mm pitch has occurred.

In this case, an image inside the up-down direction frame 101 (not illustrated in Figs. 26A and 26B) is acquired and a diagnosis is made on the first diagnosis item based on the acquired image similarly to the above, and accordingly a diagnosis result for the first diagnosis item is obtained for the diagnostic image 61 illustrated in Fig. 26A.

On the other hand, for the diagnostic image 61 illustrated in Fig. 26B, a diagnosis is made on the first diagnosis item based on the image inside the up-down direction frame 101, and accordingly an erroneous diagnosis result is obtained.

Here, density unevenness is caused by various causes.

For example, density unevenness is caused by a sheet transport mechanism 201 that transports a sheet illustrated in Fig. 27A, or is caused by light amount unevenness that occurs in an exposure device 202 illustrated in Fig. 27B.

Each of the sheet transport mechanism 201 and the exposure device 202 is equipped in the image former 100A (see Fig. 3). The exposure device 202 is disposed so as to extend in a direction orthogonal to the moving direction of a sheet.

The above-described diagnosis based on the image inside the up-down direction frame 101 is a diagnosis based on unevenness that occurs in the sub-scanning direction due to the sheet transport mechanism 201 illustrated in Fig. 27A or the like.

The above-described diagnosis based on the image inside the right-left direction frame 102 is a diagnosis based on unevenness that occurs in the main-scanning direction due to the exposure device 202 illustrated in Fig. 27B or the like.

If a diagnosis is made on the read image data illustrated in Fig. 26B based on the image inside the up-down direction frame 101, an erroneous diagnosis result is obtained.

On the other hand, if a diagnosis is made based on the image inside the up-down direction frame 101 after the read image data illustrated in Fig. 26B has been rotated, a diagnosis result for the first diagnosis item is obtained.

In the present exemplary embodiment, the image reader 130 is capable of performing two types of reading: reading of a sheet placed in a portrait orientation and reading of a sheet placed in a landscape orientation.

In this case, as illustrated in Figs. 26A and 26B, pieces of read image data in two states are obtained.

When the read image data is in the state illustrated in Fig. 26A, the direction in which the up-down direction frame 101 (not illustrated in Figs. 26A and 26B) extends coincides with the up-down direction of the diagnostic image 61, and a diagnosis is made without rotating the read image data.

On the other hand, when the read image data is in the state illustrated in Fig. 26B, the direction in which the up-down direction frame 101 extend does not coincide with the up-down direction of the diagnostic image 61, and a diagnosis is made after rotating the read image data.

Although a description has been given above of the case where the read image data is rotated, it is possible to obtain an originally intended diagnosis result without rotating the read image data.

For example, in a case where the diagnostic image 61 is in a state other than a right-side-up state and where the diagnostic image 61 is rotated, the up-down direction frame 101 and the right-left direction frame 102 may be rotated in accordance with the angle of the rotation, and a diagnosis result for the first diagnosis item and a diagnosis result for the second diagnosis item may be obtained based on the image inside the rotated up-down direction frame 101 and the image inside the rotated right-left direction frame 102.

Alternatively, for example, a diagnosis result for the second diagnosis item may be obtained based on the image inside the up-down direction frame 101 in the diagnostic image 61 that is not right side up but is rotated.

Alternatively, for example, a diagnosis result for the first diagnosis item may be obtained based on the image inside the right-left direction frame 102 in the diagnostic image 61 that is not right side up but is rotated.

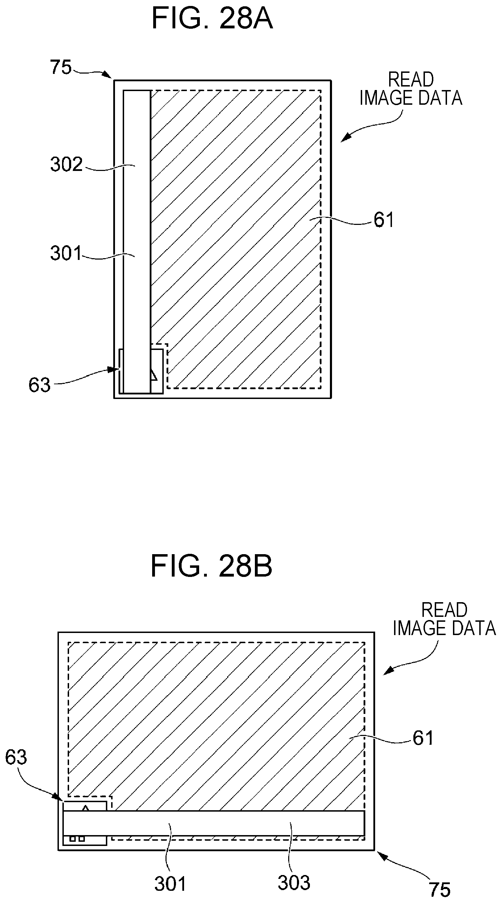

Figs. 28A to 28D are diagrams for describing an influence of an image defect.

Figs. 28A and 28B illustrate cases where one orientation specifying image 63 is formed and the one orientation specifying image 63 is hidden behind a streak-like image defect 301.

In a case where one orientation specifying image 63 is formed, the orientation specifying image 63 is more susceptible to the image defect 301 than in a case where plural orientation specifying images 63 are formed.

In this case, as illustrated in Figs. 28A and 28B, one orientation specifying image 63 may be hidden behind the streak-like image defect 301. In this case, it is impossible to specify the orientation of the diagnostic image 61.

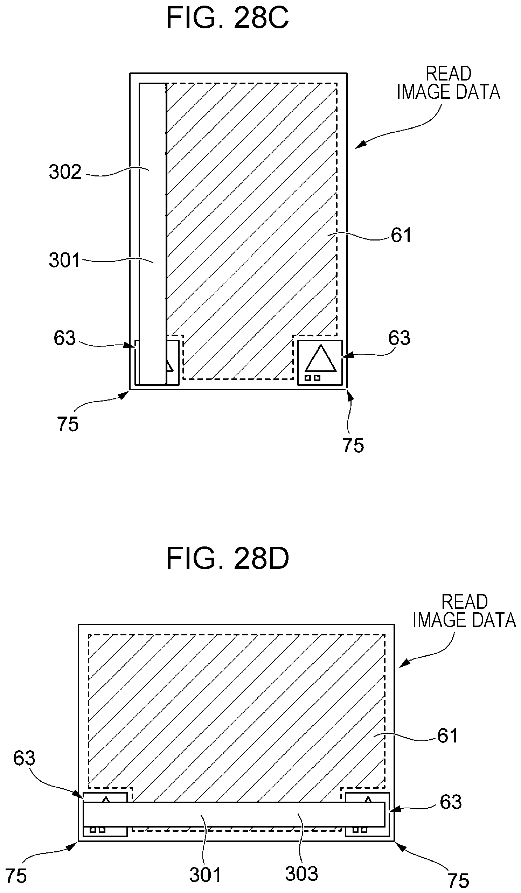

On the other hand, in a case where plural orientation specifying images 63 are formed, for example, as illustrated in Fig. 28C, a situation is less likely to occur where all the orientation specifying images 63 are hidden, and the orientation of the diagnostic image 61 is more likely to be specified.

In Fig. 28C, the orientation specifying image 63 located at the lower left corner portion 75 is hidden behind a vertical streak 302 that is located on the left side of the read image data and extends in the up-down direction, and only the orientation specifying image 63 located at the lower right corner portion 75 is displayed.

In this case, the CPU 11a of the server apparatus 200 specifies the orientation of the diagnostic image 61, based on the orientation specifying image 63 located at the lower right corner portion 75. In the example illustrated in Fig. 28C, the CPU 11a of the server apparatus 200 determines that the orientation of the diagnostic image 61 is a right-side-up orientation.

In the example illustrated in Fig. 28D, the orientation specifying image 63 located at the lower left corner portion 75 and the orientation specifying image 63 located at the lower right corner portion 75 are hidden behind a horizontal streak 303 that is located on the lower side of the read image data and extends in the right-left direction.

In this case, the CPU 11a of the server apparatus 200 specifies the orientation of the diagnostic image 61, based on the position of the horizontal streak 303, which is an example of an image defect.

In a case where no orientation specifying image 63 is detected and there is the vertical streak 302 or the horizontal streak 303 extending from one of the two corner portions 75 that are not in a diagonal relationship to the other, the CPU 11a of the server apparatus 200 specifies the orientation of the diagnostic image 61, based on the position of the vertical streak 302 or the horizontal streak 303.

In a case where the horizontal streak 303 is located on the lower side of the read image data as illustrated in Fig. 28D, the CPU 11a of the server apparatus 200 determines that the diagnostic image 61 is right side up.

In a case where the two orientation specifying images 63 are not detected and there is the vertical streak 302 or the horizontal streak 303, it can be assumed that there are the two orientation specifying images 63 at a portion where the vertical streak 302 or the horizontal streak 303 is located.

Thus, in the present exemplary embodiment, in a case where the two orientation specifying images 63 are not detected and there is the vertical streak 302 or the horizontal streak 303, the orientation of the diagnostic image 61 is specified based on the position of the vertical streak 302 or the horizontal streak 303.

In a case where there is the horizontal streak 303 on the lower side of the read image data as illustrated in Fig. 28D, the orientation specifying image 63 located at the lower left corner portion 75 and the orientation specifying image 63 located at the lower right corner portion 75 are hidden behind the horizontal streak 303.

In this case, the CPU 11a of the server apparatus 200 determines that the diagnostic image 61 is right side up, as in the determination made in a case where the orientation specifying image 63 is located at the lower left corner portion 75 and the orientation specifying image 63 is located at the lower right corner portion 75.

In a case where only one orientation specifying image 63 is formed as in Fig. 28A or 28B, it is impossible to specify, based on the position of the vertical streak 302 or the horizontal streak 303, the orientation of the diagnostic image 61.

In a case where only one orientation specifying image 63 is formed and, for example, there is the vertical streak 302 as illustrated in Fig. 28A, it is also assumed that there is the orientation specifying image 63 (not illustrated) oriented in the right direction in Fig. 28A at the upper left corner portion 75.

In this case, it is impossible to determine the orientation of the diagnostic image 61, and to specify the orientation of the diagnostic image 61.

In a case where only one orientation specifying image 63 is formed and, for example, there is the horizontal streak 303 as illustrated in Fig. 28B, it is also assumed that there is the orientation specifying image 63 (not illustrated) oriented in the left direction in Fig. 28B at the lower right corner portion 75.

Also in this case, it is impossible to determine the orientation of the diagnostic image 61, and to specify the orientation of the diagnostic image 61.

In a case where only one orientation specifying image 63 is formed, even if the position of the vertical streak 302 or the horizontal streak 303 can be specified, it is impossible to determine the orientation of the diagnostic image 61, and to specify the orientation of the diagnostic image 61.

In contrast, in a case where plural orientation specifying images 63 are formed as in Fig. 28C or 28D, the orientation of the diagnostic image 61 can be specified based on the position of the vertical streak 302 or the horizontal streak 303 even if all of the orientation specifying images 63 are hidden.

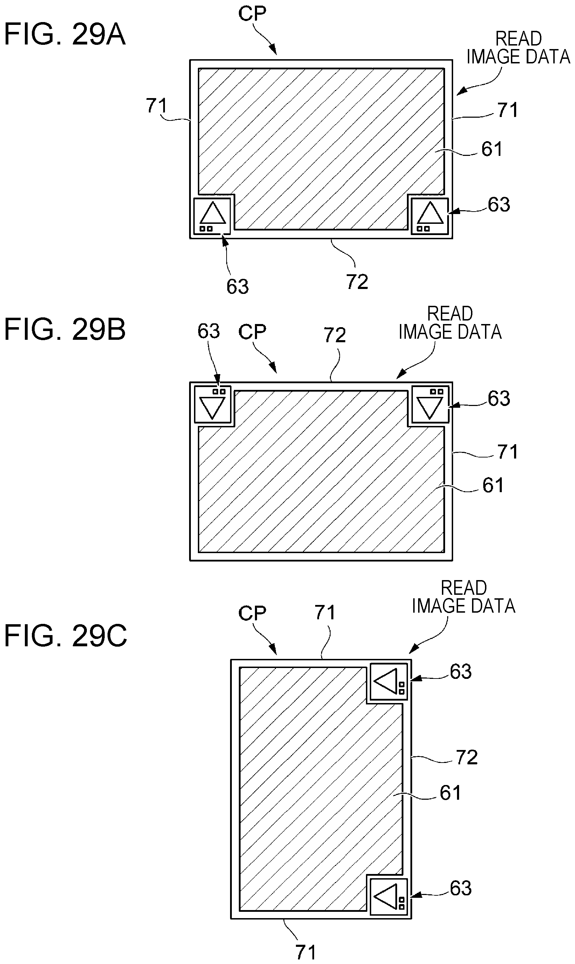

Figs. 29A to 29E are diagrams illustrating the modes of read image data.

Fig. 29A illustrates the read image data of the diagnostic sheet CP in a state in which the diagnostic image 61 is right side up and the short edges 71 extend in the up-down direction.

In a case where the read image data illustrated in Fig. 29A has neither the horizontal streak 303 nor the vertical streak 302, the two orientation specifying images 63 can be identified, and the orientation of the diagnostic image 61 can be specified based on the orientation specifying images 63.

In a case where the read image data illustrated in Fig. 29A has neither the horizontal streak 303 nor the vertical streak 302, the orientation of the diagnostic image 61 is determined to be right side up.

In this case, the read image data is not rotated, and a diagnosis is made on the image forming apparatus 100, based on the diagnostic image 61 included in the read image data that is not rotated.

In a case where the read image data illustrated in Fig. 29A has, for example, the horizontal streak 303 (not illustrated) close to the lower long edge 72, it is impossible to identify the two orientation specifying images 63. In this case, the orientation of the diagnostic image 61 is specified based on the position of the horizontal streak 303, and it is specified that the diagnostic image 61 is right side up.

Also in this case, the read image data is not rotated, and a diagnosis is made on the image forming apparatus 100, based on the diagnostic image 61 included in the read image data that is not rotated.

In a case where the read image data illustrated in Fig. 29A has, for example, the vertical streak 302 (not illustrated) close to the right short edge 71, it is possible to identify the orientation specifying image 63 located on the left side. In this case, the orientation of the diagnostic image 61 is specified based on the orientation specifying image 63 located on the left side, and it is specified that the diagnostic image 61 is right side up.

Also in this case, the read image data is not rotated, and a diagnosis is made on the image forming apparatus 100, based on the diagnostic image 61 included in the read image data that is not rotated.

In a case where the read image data illustrated in Fig. 29A has, for example, the vertical streak 302 (not illustrated) close to the left short edge 71, it is possible to identify the orientation specifying image 63 located on the right side. In this case, the orientation of the diagnostic image 61 is specified based on the orientation specifying image 63 located on the right side, and it is specified that the diagnostic image 61 is right side up.

Also in this case, the read image data is not rotated, and a diagnosis is made on the image forming apparatus 100, based on the diagnostic image 61 included in the read image data that is not rotated.

Fig. 29B illustrates the read image data of the diagnostic sheet CP in a state in which the diagnostic image 61 is upside down and the short edges 71 extend in the up-down direction.

In Fig. 29B, in a case where there is the horizontal streak 303 (not illustrated) close to the upper long edge 72, it is impossible to identify the two orientation specifying images 63. In this case, the orientation of the diagnostic image 61 is specified based on the position of the horizontal streak 303, and it is specified that the diagnostic image 61 is upside down.

In this case, the read image data is rotated by 180 degrees, and a diagnosis is made on the image forming apparatus 100, based on the diagnostic image 61 included in the read image data that has been rotated.

In the read image data illustrated in Fig. 29B, in a case where there is one vertical streak 302 and one orientation specifying image 63 is hidden, the other orientation specifying image 63 is used to specify that the diagnostic image 61 is upside down.

Fig. 29C illustrates the read image data of the diagnostic sheet CP in a state in which the diagnostic image 61 is oriented in the left direction and the long edges 72 extend in the up-down direction.

In a case where the read image data illustrated in Fig. 29C has neither the horizontal streak 303 nor the vertical streak 302, the two orientation specifying images 63 can be identified, and the orientation of the diagnostic image 61 can be specified based on the orientation specifying images 63.

In Fig. 29C, it is specified that the diagnostic image 61 is oriented in the left direction. In this case, the read image data is rotated clockwise by 90 degrees, and a diagnosis is made on the image forming apparatus 100, based on the diagnostic image 61 included in the read image data that has been rotated.

In a case where the read image data illustrated in Fig. 29C has, for example, the vertical streak 302 (not illustrated) close to the right long edge 72, it is impossible to identify the two orientation specifying images 63. In this case, the orientation of the diagnostic image 61 is specified based on the position of the vertical streak 302, and it is specified that the diagnostic image 61 is oriented in the left direction.

Also in this case, the read image data is rotated clockwise by 90 degrees, and a diagnosis is made on the image forming apparatus 100, based on the diagnostic image 61 included in the read image data that has been rotated.

In a case where the read image data illustrated in Fig. 29C has, for example, the horizontal streak 303 (not illustrated) close to the upper short edge 71 or the horizontal streak 303 (not illustrated) close to the lower short edge 71, it is impossible to identify one of the two orientation specifying images 63. In this case, the orientation of the diagnostic image 61 is specified based on the other orientation specifying image 63, and it is specified that the diagnostic image 61 is oriented in the left direction.

Also in this case, the read image data is rotated clockwise by 90 degrees, and a diagnosis is made on the image forming apparatus 100, based on the diagnostic image 61 included in the read image data that has been rotated.

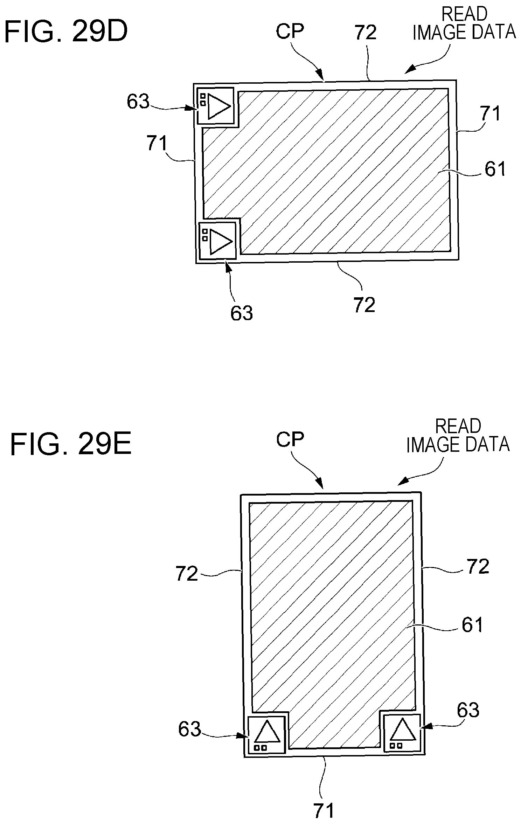

Fig. 29D illustrates the read image data of the diagnostic sheet CP in a state in which the diagnostic image 61 is oriented in the right direction and the short edges 71 extend in the up-down direction.

In a case where the read image data illustrated in Fig. 29D has neither the horizontal streak 303 nor the vertical streak 302, the two orientation specifying images 63 can be identified, and the orientation of the diagnostic image 61 can be specified based on the orientation specifying images 63.

In Fig. 29D, it is specified that the diagnostic image 61 is oriented in the right direction. In this case, the read image data is rotated counterclockwise by 90 degrees, and a diagnosis is made on the image forming apparatus 100, based on the diagnostic image 61 included in the read image data that has been rotated.

In a case where the read image data illustrated in Fig. 29D has, for example, the vertical streak 302 (not illustrated) close to the left short edge 71, it is impossible to identify the two orientation specifying images 63. In this case, the orientation of the diagnostic image 61 is specified based on the position of the vertical streak 302, and it is specified that the diagnostic image 61 is oriented in the right direction.

Also in this case, the read image data is rotated counterclockwise by 90 degrees, and a diagnosis is made on the image forming apparatus 100, based on the diagnostic image 61 included in the read image data that has been rotated.

In a case where the read image data illustrated in Fig. 29D has, for example, the horizontal streak 303 (not illustrated) close to the upper long edge 72 or the horizontal streak 303 (not illustrated) close to the lower long edge 72, it is impossible to identify one of the two orientation specifying images 63. In this case, the orientation of the diagnostic image 61 is specified based on the other orientation specifying image 63, and it is specified that the diagnostic image 61 is oriented in the right direction.

Also in this case, the read image data is rotated counterclockwise by 90 degrees, and a diagnosis is made on the image forming apparatus 100, based on the diagnostic image 61 included in the read image data that has been rotated.

Fig. 29E illustrates the read image data of the diagnostic sheet CP in a state in which the diagnostic image 61 is right side up and the long edges 72 extend in the up-down direction.

In a case where the read image data illustrated in Fig. 29E has neither the horizontal streak 303 nor the vertical streak 302, the two orientation specifying images 63 can be identified, and the orientation of the diagnostic image 61 can be specified based on the orientation specifying images 63.

In Fig. 29E, it is specified that the diagnostic image 61 is right side up. In this case, the read image data is not rotated, and a diagnosis is made on the image forming apparatus 100, based on the diagnostic image 61 included in the read image data that is not rotated.

In a case where the read image data illustrated in Fig. 29E has, for example, the horizontal streak 303 (not illustrated) close to the lower short edge 71, it is impossible to identify the two orientation specifying images 63. In this case, the orientation of the diagnostic image 61 is specified based on the position of the horizontal streak 303, and it is specified that the diagnostic image 61 is right side up.

Also in this case, the read image data is not rotated, and a diagnosis is made on the image forming apparatus 100, based on the diagnostic image 61 included in the read image data that is not rotated.

In a case where the read image data illustrated in Fig. 29E has, for example, the vertical streak 302 close to the right long edge 72 or the vertical streak 302 close to the left long edge 72, it is impossible to identify one of the two orientation specifying images 63. In this case, the orientation of the diagnostic image 61 is specified based on the other orientation specifying image 63, and it is specified that the diagnostic image 61 is right side up.

Also in this case, the read image data is not rotated, and a diagnosis is made on the image forming apparatus 100, based on the diagnostic image 61 included in the read image data that is not rotated.

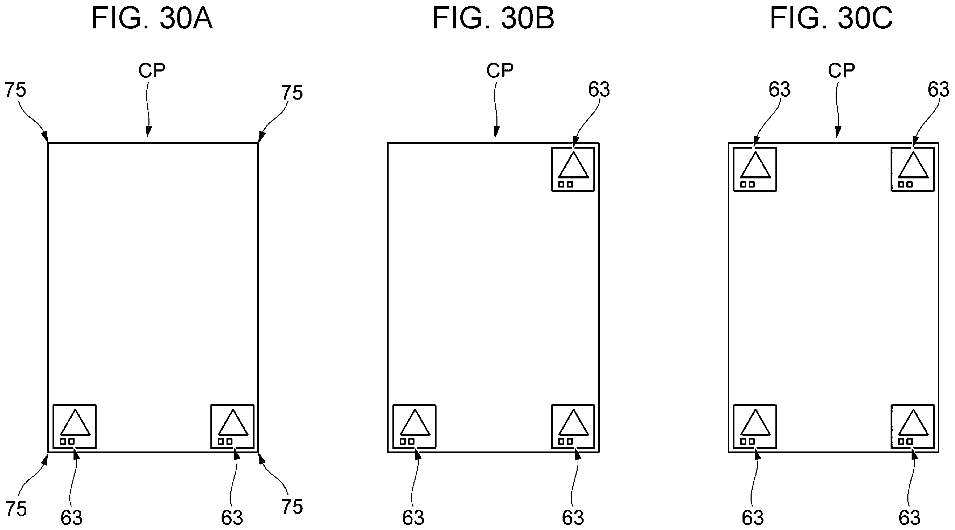

Figs. 30A to 30C are diagrams illustrating example configurations of the diagnostic sheet CP. In Figs. 30A to 30C, the illustration of the diagnostic image 61 is omitted.

Fig. 30A illustrates the diagnostic sheet CP having two orientation specifying images 63 formed thereon, similarly to the above. Fig. 30B illustrates the diagnostic sheet CP having three orientation specifying images 63 formed thereon. Fig. 30C illustrates the diagnostic sheet CP having four orientation specifying images 63 formed thereon.

Although a description has been given above of the case where one or two orientation specifying images 63 are formed, the number of orientation specifying images 63 is not limited thereto and may be three or more, as illustrated in Figs. 30B and 30C.

In a case where the number of orientation specifying images 63 is two as illustrated in Fig. 30A, even if the vertical streak 302 or the horizontal streak 303 close to any edge occurs, the orientation of the diagnostic image 61 can be specified as long as the number of streaks is one, as described above.

In a case where the number of orientation specifying images 63 is two as illustrated in Fig. 30A, the region for forming the diagnostic image 61 (not illustrated in Fig. 30A) can be extended as compared with a case where the number of orientation specifying images 63 is three or more. In a case where the number of orientation specifying images 63 is two, the maximum size of the diagnostic image 61 is larger than in a case where the number of orientation specifying images 63 is three or more.

In a case where the diagnostic sheet CP is constituted by plural sheets and one or two orientation specifying images 63 are formed on each diagnostic sheet CP, the position or positions of the one or two orientation specifying images 63 may vary according to the sheet.

Specifically, for example, the orientation specifying image 63 may be formed at one or both of the two corner portions 75 located on the upper-edge side of the first diagnostic sheet CP, and the orientation specifying image 63 may be formed at one or both of the two corner portions 75 located on the lower-edge side of the second diagnostic sheet CP.

In this case, the diagnostic image 61 formed across the first diagnostic sheet CP and the second diagnostic sheet CP is not divided by the orientation specifying images 63, and the diagnostic image 61 is formed in a larger region.

In a case where the number of orientation specifying images 63 is two and both of the two orientation specifying images 63 are hidden behind the horizontal streak 303 or the vertical streak 302, it is impossible to acquire the transmission control information associated with the orientation specifying images 63.

In a case where the number of orientation specifying images 63 is two, the orientation of the diagnostic image 61 can be specified by the position of the streak even if all the orientation specifying images 63 are hidden. However, in a case where the number of orientation specifying images 63 is two and all the orientation specifying images 63 are hidden, it is impossible to acquire transmission control information.

Fig. 30B illustrates the diagnostic sheet CP having three orientation specifying images 63 formed thereon.

In this diagnostic sheet CP, in a case where the number of streaks is one, one orientation specifying image 63 is seen without fail, and the orientation of the diagnostic image 61 can be specified based on the one orientation specifying image 63. In this case, transmission control information can be acquired from the one orientation specifying image 63.

In the example illustrated in Fig. 30B, even if two streaks, the vertical streak 302 and the horizontal streak 303 (not illustrated), occur and all the orientation specifying images 63 are hidden, the orientation of the diagnostic image 61 can be specified based on the positions of the vertical streak 302 and the horizontal streak 303.

In a case where two streaks, the vertical streak 302 and the horizontal streak 303, occur and all the orientation specifying images 63 are hidden, it is impossible to acquire transmission control information.

In a case where three orientation specifying images 63 are formed as in the example illustrated in Fig. 30B, the formation region of the diagnostic image 61 is smaller than in a case where two orientation specifying images 63 are formed as in the example illustrated in Fig. 30A.

Fig. 30C illustrates the diagnostic sheet CP having four orientation specifying images 63 formed thereon.

In this case, even if two streaks, the vertical streak 302 and the horizontal streak 303 (not illustrated), occur, one orientation specifying image 63 is seen, and the orientation of the diagnostic image 61 can be specified based on the one orientation specifying image 63.

Furthermore, in Fig. 30C, even if two streaks, the vertical streak 302 and the horizontal streak 303, occur, one orientation specifying image 63 is seen, and transmission control information can be acquired from the one orientation specifying image 63.

In a case where four orientation specifying images 63 are formed as in the example illustrated in Fig. 30C, the formation region of the diagnostic image 61 is smaller than in a case where two orientation specifying images 63 are formed as in the example illustrated in Fig. 30A or a case where three orientation specifying images 63 are formed as in the example illustrated in Fig. 30B.

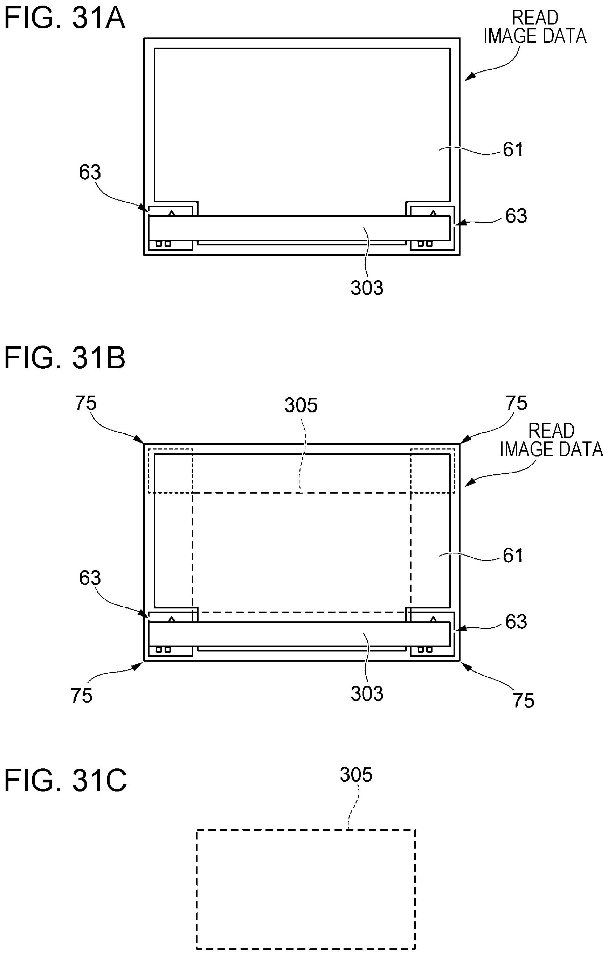

Figs. 31A to 31C are diagrams for describing an example of a process executed by the image forming apparatus 100 in a case where the orientation specifying images 63 are hidden.

In the present exemplary embodiment, as described above and as illustrated in Fig. 31A, a situation may occur in which the orientation specifying images 63 are hidden behind the vertical streak 302 or the horizontal streak 303 and transmission control information is not obtained. In this case, the image forming apparatus 100 is incapable of determining whether the read image data may be transmitted to the server apparatus 200.

In a case where the orientation specifying images 63 are hidden as illustrated in Fig. 31A, the CPU 11a of the image forming apparatus 100 cuts out and acquires a portion within a predetermined region 305 of the read image data as illustrated in Figs. 31B and 31C.

The CPU 11a of the image forming apparatus 100 then determines whether the image specified by the acquired portion of the read image data is a whole-surface halftone image. If the image is a whole-surface halftone image, the CPU 11a of the image forming apparatus 100 causes the read image data to be transmitted to the server apparatus 200.

If there is a high possibility that the image specified by the acquired portion of the read image data is a diagnostic image, the CPU 11a of the image forming apparatus 100 causes the read image data to be transmitted to the server apparatus 200.

In this case, the CPU 11a of the server apparatus 200 acquires the transmitted read image data, and makes a diagnosis on the image forming apparatus 100, based on the read image data.

At the time of making a diagnosis, because the read image data does not include any orientation specifying image 63, the CPU 11a of the server apparatus 200 is incapable of specifying the orientation of the diagnostic image 61, based on the orientation specifying image 63.

In this case, the CPU 11a of the server apparatus 200 specifies the orientation of the diagnostic image 61, based on the position of the horizontal streak 303. In this example, the CPU 11a of the server apparatus 200 determines that the orientation of the diagnostic image 61 is a right-side-up orientation. Subsequently, the CPU 11a of the server apparatus 200 makes a diagnosis on the image forming apparatus 100, based on the diagnostic image 61.

The CPU 11a of the server apparatus 200 is capable of specifying the orientation of the diagnostic image 61 in a case where the orientation specifying image 63 is seen or there is the vertical streak 302 or the horizontal streak 303.

In this case, the CPU 11a of the server apparatus 200 rotates the read image data, if necessary, in accordance with the specified orientation, and then makes a diagnosis on the image forming apparatus 100, based on the diagnostic image 61 included in the read image data.

As described above, the process performed after the orientation has been specified is not limited to a process of rotating the read image data, and may be a process of rotating the up-down direction frame 101 or the right-left direction frame 102.

As described above, the process performed after the orientation has been specified may be a process of acquiring a diagnosis result for the second diagnosis item based on the image inside the up-down direction frame 101 and acquiring a diagnosis result for the first diagnosis item based on the image inside the right-left direction frame 102.

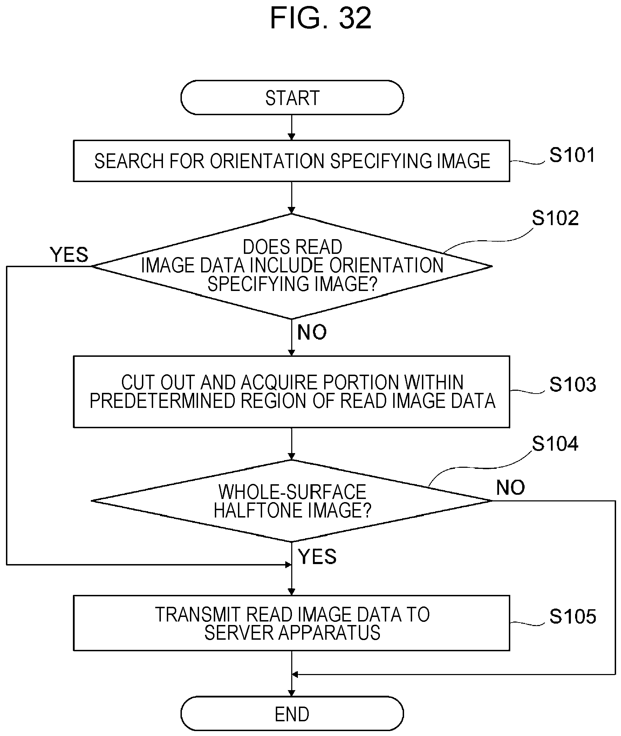

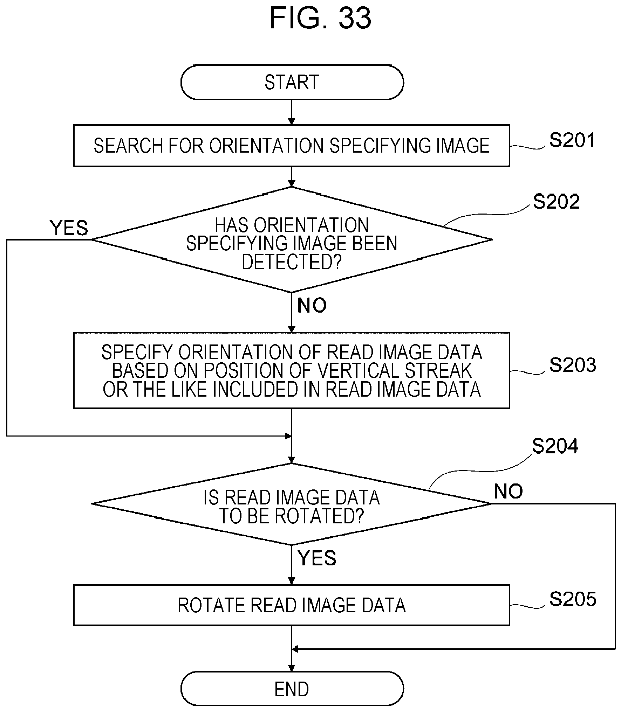

Fig. 32 is a flowchart illustrating the flow of a process executed by the CPU 11a of the image forming apparatus 100. Fig. 33 is a flowchart illustrating the flow of a process executed by the CPU 11a of the server apparatus 200.

The process executed by the CPU 11a of the image forming apparatus 100 will be described with reference to Fig. 32.

In response to acquiring read image data, the CPU 1 1a of the image forming apparatus 100 analyzes the read image data and searches for an orientation specifying image 63 (step S101).

Subsequently, the CPU 11a of the image forming apparatus 100 determines whether the read image data includes an orientation specifying image 63 (step S102).

In response to determining that the read image data includes an orientation specifying image 63, the CPU 11a of the image forming apparatus 100 causes the read image data to be transmitted to the server apparatus 200 (step S105).

As described above, transmission control information is associated with the orientation specifying image 63. In the present exemplary embodiment, the presence of the orientation specifying image 63 indicates that transmission of the read image data is permitted.

Thus, in response to determining that the read image data includes the orientation specifying image 63, the CPU 11a of the image forming apparatus 100 causes the read image data to be transmitted to the server apparatus 200.

On the other hand, in response to determining in step S102 that no orientation specifying image 63 is included, the CPU 11a of the image forming apparatus 100 cuts out and acquires a portion within the predetermined region 305 of the read image data, as described with reference to Figs. 31A to 31C (step S103).

In the present exemplary embodiment, the CPU 11a of the image forming apparatus 100 cuts out and acquires a portion within the predetermined region 305 of the read image data. The predetermined region 305 is rectangular and located at a position out of the regions where the four corner portions 75 are located, as illustrated in Figs. 31B and 31C.

Subsequently, the CPU 11a of the image forming apparatus 100 determines whether an image included in the acquired portion is the above-described whole-surface halftone image, which is an example of a predetermined image (step S104).

In response to determining that the image is a whole-surface halftone image, the CPU 11a of the image forming apparatus 100 causes the read image data to be transmitted to the server apparatus 200 (step S105).

On the other hand, in response to determining that the image is not a whole-surface halftone image, the CPU 11a of the image forming apparatus 100 causes the read image data not to be transmitted to the server apparatus 200.

Fig. 33 is a flowchart illustrating the flow of a process executed by the CPU 11a of the server apparatus 200.

In response to receiving the read image data transmitted by the image forming apparatus 100, the CPU 11a of the server apparatus 200 performs a process of detecting an orientation specifying image 63 (step S201).

Subsequently, the CPU 11a of the server apparatus 200 determines whether an orientation specifying image 63 has been detected (step S202).

In response to determining that an orientation specifying image 63 has been detected, the CPU 11a of the server apparatus 200 determines whether the read image data is to be rotated (step S204). In response to determining that the read image data is to be rotated, the CPU 11a of the server apparatus 200 rotates the read image data (step S205). As a result, the read image data becomes right side up.

Subsequently, the CPU 11a of the server apparatus 200 makes a diagnosis on the image forming apparatus 100, based on the read image data that has been rotated.

On the other hand, in response to determining in step S204 that the read image data is not to be rotated, the CPU 11a of the server apparatus 200 does not rotate the read image data. In this case, the CPU 11a of the server apparatus 200 makes a diagnosis on the image forming apparatus 100, based on the read image data that has not been rotated.

In response to a determination in step S202 that no orientation specifying image 63 has been detected, the process proceeds to step S203 and then to step S204.

In step S203, the orientation of the read image data is specified based on the position of the vertical streak 302 or the horizontal streak 303 included in the read image data.

Subsequently, in step S204, a determination is made as to whether the read image data is to be rotated. If the orientation specified in step S203 is not a right-side-up orientation, a determination is made in step S204 that the read image data is to be rotated.

In this case, the read image data is rotated in step S205. Subsequently, a diagnosis is mage on the image forming apparatus 100, based on the read image data that has been rotated.

On the other hand, if the orientation specified in step S203 is a right-side-up orientation, a determination is made in step S204 that the read image data is not to be rotated. In this case, the CPU 1 1a of the server apparatus 200 makes a diagnosis on the image forming apparatus 100, based on the read image data that has not been rotated.

### Other Example Processes

Other example processes performed in the image forming apparatus 100 will be described.

The CPU 1 1a of the image forming apparatus 100 may cause setting information to be output when generating the above-described diagnostic sheet CP, for example. The setting information is information about a setting which is made on the image forming apparatus 100 and with which the diagnostic sheet CP is formed.

More specifically, the CPU 11a of the image forming apparatus 100 may cause setting information to be output when generating the diagnostic sheet CP, for example. The setting information is information about a setting which is made on the image former 100A and with which the diagnostic image 61 is formed on the diagnostic sheet CP.

More specifically, the CPU 11a of the image forming apparatus 100 may cause the setting information to be output to the image former 100A that forms the diagnostic image 61, and cause a corresponding image, which is an image corresponding to the setting information, to be formed on the diagnostic sheet CP on which the diagnostic image 61 is formed, for example.

One corresponding image may be formed, or corresponding images may be formed at plural positions on the diagnostic sheet CP similarly to the above.

The CPU 11a of the image forming apparatus 100 causes, for example, information about the orientation of a sheet supplied to the image former 100A to be output as the setting information.

In other words, the CPU 11a of the image forming apparatus 100 causes information indicating the posture of a sheet with respect to the image former 100A when the diagnostic image 61 is formed on the sheet by the image former 100A to be output as the setting information.

In other words, the CPU 11a of the image forming apparatus 100 causes information about a setting about the orientation of a sheet when the sheet on which the diagnostic image 61 is to be formed is supplied to the image former 100A to be output as the setting information.

More specifically, the CPU 11a of the image forming apparatus 100 causes, for example, information indicating whether the short edge 71 of a sheet is at the head when the sheet is supplied to the image former 100A or whether the long edge 72 of a sheet is at the head when the sheet is supplied to the image former 100A to be output as the setting information.

The CPU 11a of the image forming apparatus 100 causes, for example, the setting information to be output to the image former 100A, as described above.

Accordingly, in this case, a corresponding image corresponding to the setting information and including the setting information is formed on the diagnostic sheet CP. In other words, in this case, a corresponding image including information about the orientation of the sheet is formed on the diagnostic sheet CP.

The corresponding image may be, for example, an image obtained by encoding the setting information, such as the two-dimensional barcode illustrated in part (B) of Fig. 22.

Alternatively, the corresponding image may be, for example, an image indicating the setting information by text. In the case of forming an image indicating the setting information by text on the diagnostic sheet CP, the setting information can be acquired by optical character recognition (OCR).

After the corresponding image including the setting information has been formed on the diagnostic sheet CP, reading of the diagnostic sheet CP having the corresponding image formed thereon is performed by the image reader 130 equipped in the image forming apparatus 100 (see Fig. 1), and read image data is generated, similarly to the above.

In this case, an image obtained by reading the corresponding image corresponding to the setting information is included in the read image data.

Subsequently, the read image data is transmitted from the image forming apparatus 100 to the server apparatus 200.

The CPU 11a of the server apparatus 200 makes a diagnosis on the image forming apparatus 100, based on the setting information obtained from the corresponding image included in the read image data and the diagnostic image 61 included in the read image data.

In this case, the CPU 11a of the server apparatus 200 acquires, as the setting information, information about the orientation of a sheet supplied to the image former 100A.

Based on the information about the orientation, the CPU 11a of the server apparatus 200 specifies the orientation of the diagnostic image 61 included in the read image data. The CPU 11a of the server apparatus 200 then makes a diagnosis on the image forming apparatus 100, based on the specified orientation and the diagnostic image 61 included in the acquired read image data.

In a case where the specified orientation is an orientation other than a right-side-up orientation, the CPU 1 1a of the server apparatus 200 rotates the read image data by 90 degrees or -90 degrees to change the orientation of the read image data to a right-side-up orientation or an upside-down orientation.

The CPU 11a of the server apparatus 200 then makes a diagnosis on the image forming apparatus 100, based on the read image data that is in a right-side-up orientation or an upside-down orientation.

Specifically, in this case, the CPU 11a of the server apparatus 200 acquires, for example, the image inside the up-down direction frame 101 in the diagnostic image 61 included in the read image data that is in a right-side-up orientation or an upside-down orientation, similarly to the above. The CPU 11a of the server apparatus 200 then makes a diagnosis on the first diagnosis item, such as banding, based on the acquired image.

In addition, the CPU 11a of the server apparatus 200 acquires the image inside the right-left direction frame 102 in the diagnostic image 61 included in the read image data that is in a right-side-up orientation or an upside-down orientation. The CPU 11a of the server apparatus 200 then makes a diagnosis on the second diagnosis item, such as density unevenness, based on the acquired image.

A description will be further given with a specific example.

Here, it is assumed that the CPU 11a of the server apparatus 200 acquires, as the setting information, setting information indicating that "the short edge 71 of a sheet is at the head when the sheet is supplied to the image former 100A".

On the other hand, it is assumed that the short edge 71 of the diagnostic sheet CP included in the read image data acquired by the server apparatus 200 is along the up-down direction.

In this case, the CPU 11a of the server apparatus 200 rotates the read image data by 90 degrees or -90 degrees to change the orientation of the read image data to a right-side-up orientation or an upside-down orientation.

The CPU 11a of the server apparatus 200 then makes a diagnosis on the image forming apparatus 100, based on the read image data that is in a right-side-up orientation or an upside-down orientation.

More specifically, the CPU 11a of the server apparatus 200 makes a diagnosis on the first diagnosis item and a diagnosis on the second diagnosis item, based on the read image data that is in a right-side-up orientation or an upside-down orientation, as described above.

It is also assumed that, for example, the CPU 11a of the server apparatus 200 acquires, as the setting information, setting information indicating that "the long edge 72 of a sheet is at the head when the sheet is supplied to the image former 100A".

It is also assumed that the short edge 71 of the diagnostic sheet CP included in the read image data acquired by the server apparatus 200 is along the up-down direction.

In this case, the CPU 1 1a of the server apparatus 200 does not rotate the read image data.

In this case, the CPU 11a of the server apparatus 200 makes a diagnosis on the first diagnosis item and a diagnosis on the second diagnosis item, based on the read image data that has not been rotated.

Similarly to the above, for example, in a case where the diagnostic image 61 is in a state other than a right-side-up state and the diagnostic image 61 is rotated, the up-down direction frame 101 and the right-left direction frame 102 may be rotated in accordance with the angle of the rotation.

Subsequently, a diagnosis result for the first diagnosis item and a diagnosis result for the second diagnosis item may be obtained based on the image inside the rotated up-down direction frame 101 and the image inside the rotated right-left direction frame 102.

Alternatively, a diagnosis result for the second diagnosis item may be obtained based on the image inside the up-down direction frame 101 in the diagnostic image 61 which is not right side up but is rotated.

Alternatively, a diagnosis result for the first diagnosis item may be obtained based on the image inside the right-left direction frame 102 in the diagnostic image 61 which is not right side up but is rotated.

The CPU 11a of the image forming apparatus 100 causes the setting information to be output, the setting information being information about a setting that causes an erroneous determination in which the image forming apparatus 100 is determined to have a failure although the image forming apparatus 100 has no failure.

In the present exemplary embodiment, the CPU 11a of the image forming apparatus 100 causes information about the orientation of a sheet supplied to the image former 100A to be output as the setting information about a setting that causes an erroneous determination, as described above.

In other words, the CPU 11a of the image forming apparatus 100 causes information about a setting on the image forming apparatus 100 affecting a result of a diagnosis on the image forming apparatus 100 to be output. In other words, the CPU 11a of the image forming apparatus 100 causes information about the image forming apparatus 100 affecting the accuracy of a diagnosis on the image forming apparatus 100 to be output.

In other words, the CPU 11a of the image forming apparatus 100 causes information about the image forming apparatus 100, which is information for increasing the accuracy of a diagnosis on the image forming apparatus 100, to be output.

In the present exemplary embodiment, the server apparatus 200, which is an example of another apparatus, determines whether the image forming apparatus 100 has a failure, based on the setting information and the diagnostic image 61.

In other words, in the present exemplary embodiment, the server apparatus 200, which is an example of another apparatus different from the image forming apparatus 100, makes a diagnosis on the image forming apparatus 100, based on the setting information and the diagnostic image 61.

In the present exemplary embodiment, information about a setting that causes an erroneous determination in which the image forming apparatus 100 is determined to have a failure although the image forming apparatus 100 has no failure is output as the setting information, as described above.

In other words, in the present exemplary embodiment, information about a setting on the image forming apparatus 100 affecting a result of a diagnosis on the image forming apparatus 100 is output as the setting information, as described above.

In the present exemplary embodiment, the server apparatus 200 determines whether the image forming apparatus 100 has a failure. Alternatively, the determination may be performed by an apparatus other than the server apparatus 200.

Specifically, for example, the determination may be performed by the image forming apparatus 100.

In this case, the image forming apparatus 100 that has acquired read image data determines whether the image forming apparatus 100 has a failure, based on the setting information about the image forming apparatus 100 and the read image data.

Other examples of the information about a setting that causes an erroneous determination include information about a setting made on the image former 100A. In other words, information about a setting on the image forming apparatus 100 affecting a result of a diagnosis on the image forming apparatus 100 may be information about a setting made on the image former 100A.

Examples of the information about a setting made on the image former 100A include information about a setting about a formation speed at which the image former 100A forms the diagnostic image 61 (hereinafter referred to as "speed setting information") and/or information about a setting about a screen used by the image former 100A to form the diagnostic image 61 (hereinafter referred to as "screen setting information").

In this case, the CPU 11a of the image forming apparatus 100 causes speed setting information and/or screen setting information to be output as the information about a setting made on the image former 100A.

In this case, a corresponding image including the speed setting information and/or the screen setting information is formed on the diagnostic sheet CP.

Alternatively, the CPU 11a of the image forming apparatus 100 causes information about a setting about the type of sheet on which the diagnostic image 61 is formed (hereinafter referred to as "sheet setting information") to be output as the information about a setting made on the image former 100A, for example.

In this case, a corresponding image including the sheet setting information is formed on the diagnostic sheet CP.

Alternatively, the CPU 11a of the image forming apparatus 100 causes information about a setting for correcting a part of image data serving as a base of an image formed by the image former 100A (referred to as "correcting setting information) to be output as the information about a setting made on the image former 100A, for example.

In this case, a corresponding image including the correcting setting information is formed on the diagnostic sheet CP.

Alternatively, the CPU 11a of the image forming apparatus 100 causes information about a setting about a voltage to be applied to a transfer unit that transfers an image formed by the image former 100A onto a sheet (hereinafter referred to as "voltage setting information") to be output as the information about a setting made on the image former 100A, for example.

In this case, a corresponding image including the voltage setting information is formed on the diagnostic sheet CP.

In response to the setting information being output by the CPU 11a of the image forming apparatus 100, a corresponding image corresponding to the setting information is formed on the diagnostic sheet CP.

Subsequently, read image data is generated as a result of the diagnostic sheet CP being read by the image reader 130, and the read image data is transmitted to the server apparatus 200.

The CPU 11a of the server apparatus 200 analyzes the read image data and acquires the setting information included in the corresponding image. In this case, the CPU 11a of the server apparatus 200 acquires, as the setting information, information about a setting on the image forming apparatus 100 affecting a result of a diagnosis on the image forming apparatus 100.

The CPU 1 1a of the server apparatus 200 then makes a diagnosis on the image forming apparatus 100, based on the information about the setting on the image forming apparatus 100 affecting a result of a diagnosis on the image forming apparatus 100, and the diagnostic image 61 included in the acquired read image data.

In the present exemplary embodiment, the CPU 11a of the image forming apparatus 100 causes speed setting information and/or screen setting information to be output, as described above, for example. The speed setting information is information about a setting about a formation speed at which the image former 100A forms an image, and the screen setting information is information about a setting about a screen used by the image former 100A to form an image.

More specifically, the CPU 11a of the image forming apparatus 100 causes information about the number of lines or an angle to be output as the screen setting information, for example.

In response to this, in the present exemplary embodiment, the CPU 1 1a of the server apparatus 200 acquires the speed setting information and/or the screen setting information.

The CPU 1 1a of the server apparatus 200 then makes a diagnosis on the image forming apparatus 100, based on the acquired information and the diagnostic image 61 included in the read image data, and acquires a diagnosis result.

In a case where the image forming apparatus 100 is an apparatus that forms an image by using an electrophotographic method and the charging frequency is constant, a difference in process speed which is an image forming speed is likely to cause a difference in spatial frequency of charging unevenness of a high frequency component.

In this case, as a result of the CPU 11a of the server apparatus 200 making a diagnosis on the image forming apparatus 100 based on the speed setting information and the diagnostic image 61 included in the read image data as in the present exemplary embodiment, a diagnosis result reflecting the above-described process speed is obtained.

In this case, the accuracy of a diagnosis on the image forming apparatus 100 may increase as compared with a case where a diagnosis result is obtained without the process speed being taken into consideration.

Regarding the diagnosis on the image forming apparatus 100, the charging frequency and the reading resolution of the image reader 130 (see Fig. 1) may affect the diagnosis.

In this case, when the charging frequency or the reading resolution has a specific value, unevenness may occur on read image data although the diagnostic image 61 does not have unevenness, and an erroneous determination may be made.

In this case, if a diagnosis is made on the image forming apparatus 100 based on the diagnostic image 61 in consideration of the setting information as in the present exemplary embodiment, such an erroneous determination is less likely to be made.

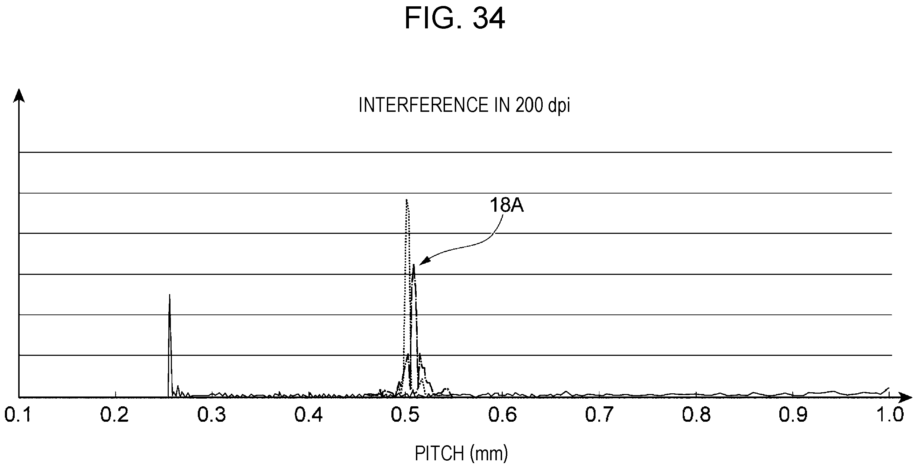

Fig. 34 is a diagram for describing that screen setting information affects a diagnosis result.

In the present exemplary embodiment, even if the diagnostic image 61 on the diagnostic sheet CP has no unevenness, unevenness may occur on the read image data due to the reading resolution of the image reader 130 and the screen to be used, and an erroneous determination may be made.

Specifically, for example, it is assumed that banding of a 0.5 mm pitch is diagnosed under a condition that the diagnostic image 61 formed using a screen of 106 lines and 45 degrees is read at a reading resolution of 200 dpi.

In this case, even if the diagnostic image 61 on the diagnostic sheet CP has no unevenness, a peak may occur at a portion of the pitch 0.5 mm as denoted by reference sign 18A in Fig. 34 in an analysis result for read image data. In this case, an erroneous determination is made in the diagnosis on the image forming apparatus 100.

In such a situation, if a diagnosis is made in consideration of the setting information about the reading resolution and the screen as in the present exemplary embodiment, the occurrence of an erroneous determination may be suppressed.

Here, it is assumed that the CPU 11a of the server apparatus 200 acquires read image data obtained by reading, at a reading resolution of 200 dpi, the diagnostic image 61 formed using a screen of 106 lines and 45 degrees, and diagnoses banding of a 0.5 mm pitch.

In other words, it is assumed that the CPU 11a of the server apparatus 200 diagnoses banding of a 0.5 mm pitch under a situation in which information indicating 106 lines and 45 degrees, and a reading resolution of 200 dpi has been acquired as setting information.

In this case, for example, the CPU 11a of the server apparatus 200 does not output a diagnosis result for banding, or outputs a diagnosis result but outputs information indicating that the diagnosis result has an error.

In this case, the CPU 11a of the server apparatus 200 may notify a user that a diagnosis is not made, via the user terminal 300 (see Fig. 1) or the operation receiver 132 equipped in the image forming apparatus 100.

In addition, the CPU 11a of the server apparatus 200 may provide a user with a notification prompting the user to use a screen of another condition or a notification prompting the user to change the reading resolution, via the user terminal 300 or the operation receiver 132 equipped in the image forming apparatus 100.

In addition, the CPU 11a of the server apparatus 200 may further perform a process of diagnosing banding of a 0.5 mm pitch by using read image data generated under another condition and determining that banding has not occurred in a 0.5 mm pitch.

Furthermore, in the present exemplary embodiment, the CPU 11a of the image forming apparatus 100 causes sheet setting information to be output as information about a setting on the image forming apparatus 100 affecting a diagnosis result for the image forming apparatus 100, as described above, the sheet setting information being setting information about the type of sheet on which the diagnostic image 61 is formed.

In this case, the CPU 11a of the server apparatus 200 acquires the sheet setting information, and makes a diagnosis on the image forming apparatus 100, based on the sheet setting information and the read image data.

In this case, the sheet setting information includes information about the type of the sheet having the diagnostic image 61 formed thereon. The CPU 11a of the server apparatus 200 makes a diagnosis on the read image data, based on the information about the type of the sheet.

Specifically, the CPU 11a of the server apparatus 200 changes the conversion formula to be used for color conversion, based on the information about the type of the sheet, and performs color conversion on the diagnostic image 61 included in the read image data by using the changed conversion formula.

The CPU 11a of the server apparatus 200 then makes a diagnosis on the image forming apparatus 100, based on a value obtained through the color conversion. Accordingly, the accuracy of the diagnosis may increase.

More specifically, for example, the CPU 11a of the server apparatus 200 determines, based on the sheet setting information, whether the sheet is a coated sheet or an uncoated sheet, and specifies the type of the sheet.

In accordance with whether the type of the sheet is a coated sheet or an uncoated sheet, the CPU 11a of the server apparatus 200 determines a conversion formula to be used for color conversion.

Based on the determined conversion formula, the CPU 11a of the server apparatus 200 performs color conversion on the diagnostic image 61 included in the read image data. The CPU 11a of the server apparatus 200 then makes a diagnosis on the image forming apparatus 100, based on a value obtained through the color conversion.

Here, the read image data is typically RGB data, whereas data used for diagnosis is often a Lab value. In this case, color conversion using a conversion formula is performed to convert the RGB data into a Lab value.

In general, the conversion formula is prepared for each sheet type and varies according to the sheet type. If RGB read image data is converted into a Lab value without changing the conversion formula, a Lab value that is obtained may deviate from a value that is to be originally obtained.

On the other hand, as in the present exemplary embodiment, if the conversion formula is changed according to the type of sheet, a Lab value that is obtained is close to a value that is to be originally obtained.

The CPU 11a of the server apparatus 200 may perform two types of conversion on one piece of read image data to be diagnosed: conversion using a conversion formula for a coated sheet and conversion using a conversion formula for an uncoated sheet.

If the density specified by a value obtained through conversion using a conversion formula for an uncoated sheet is higher than the density specified by a value obtained through conversion using a conversion formula for a coated sheet, for example, the CPU 11a of the server apparatus 200 may output information indicating that the setting about a sheet in the image forming apparatus 100 is incorrect.

Specifically, in this case, the CPU 11a of the server apparatus 200 outputs information indicating that coated sheets are accommodated in a sheet container for uncoated sheets equipped in the image forming apparatus 100 or information indicating that uncoated sheets are accommodated in a sheet container for coated sheets equipped in the image forming apparatus 100.

An uncoated sheet has many diffusion components due to unevenness on the surface of the sheet, and the density thereon tends to be lower than that on a coated sheet.

As described above, if the density specified by a value obtained through conversion using a conversion formula for an uncoated sheet is higher than the density specified by a value obtained through conversion using a conversion formula for a coated sheet, it is assumed that the setting about a sheet in the image forming apparatus 100 is incorrect.

Specifically, for example, it is assumed that coated sheets are accommodated in the sheet container for uncoated sheets and uncoated sheets are accommodated in the sheet container for coated sheets.

In this case, as a result of outputting information indicating that the setting about a sheet in the image forming apparatus 100 is incorrect as described above, it is possible to notify the user that sheets are incorrectly accommodated.

The information indicating that the setting about a sheet in the image forming apparatus 100 is incorrect is output to the user terminal 300 (see Fig. 1) or the operation receiver 132 equipped in the image forming apparatus 100, and is provided to the user via the user terminal 300 or the operation receiver 132.

Furthermore, in the present exemplary embodiment, the CPU 11a of the image forming apparatus 100 causes correcting setting information to be output as information about a setting on the image forming apparatus 100 affecting a diagnosis result for the image forming apparatus 100, as described above. The correcting setting information is information about a setting for correcting a prat of image data serving as a base of an image formed by the image former 100A.

More specifically, the CPU 11a of the image forming apparatus 100 causes setting information for correcting gradation to be output, for example.

In this case, a corresponding image including correcting setting information for correcting gradation is formed on the diagnostic sheet CP.

An example of the correcting setting information is information stored in a correcting lookup table (LUT) for correcting gradation, which is stored in the secondary storage unit 12 (see Fig. 2) of the image forming apparatus 100.

In the image forming apparatus 100, it is assumed that the correcting LUT to be used was changed in the past, and thereafter, the changed correcting LUT is continuously used to correct image data.

In this case, the CPU 11a of the server apparatus 200 acquires, as the setting information, information about the correcting LUT that has been changed.

In this example process, the CPU 11a of the server apparatus 200 acquires setting information and read image data, and then makes a diagnosis on the image forming apparatus 100, based on the read image data.

In response to acquiring a diagnosis result indicating that the image forming apparatus 100 has a failure, the CPU 11a of the server apparatus 200 determines whether the setting information is information indicating that the correcting LUT kept in the changed state is used.

In other words, in response to acquiring a diagnosis result indicating that the difference between a numerical value obtained by analyzing the diagnostic image 61 and a predetermined reference value exceeds a predetermined threshold and the image forming apparatus 100 has a failure, the CPU 1 1a of the server apparatus 200 determines whether the setting information is information indicating that the correcting LUT kept in the changed state is used.

In response to determining that the setting information is information indicating that the correcting LUT kept in the changed state is used, the CPU 11a of the server apparatus 200 causes the information indicating that the correcting LUT is continuously used to be provided to the user via the user terminal 300 or the operation receiver 132.

In other words, in response to determining that the setting information is information indicating that the correcting LUT kept in the changed state is used, the CPU 11a of the server apparatus 200 causes the information indicating that the correcting LUT is continuously used to be output to the user terminal 300 or the image forming apparatus 100.

Accordingly, the information indicating that the correcting LUT is continuously used is provided to the user via the user terminal 300 or the operation receiver 132. Accordingly, the user takes measures of stopping using the correcting LUT.

In other words, in response to determining that the setting information is information indicating that the correcting LUT kept in the changed state is used, the CPU 11a of the server apparatus 200 causes information indicating that the correcting LUT is to be released to be provided to the user via the user terminal 300 or the operation receiver 132.

Accordingly, the user releases the correcting LUT.

Furthermore, in the present exemplary embodiment, the CPU 11a of the image forming apparatus 100 causes voltage setting information to be output as the information about a setting on the image forming apparatus 100 affecting a diagnosis result for the image forming apparatus 100, as described above. The voltage setting information is information about a setting about a voltage to be applied to a transfer unit that transfers an image formed by the image former 100A onto a sheet.

In this case, a corresponding image including the voltage setting information is formed on the diagnostic sheet CP.

In other words, in this case, the CPU 11a of the image forming apparatus 100 causes information about a transfer condition to be output. Accordingly, in this example, the information about the transfer condition is included in the corresponding image.

In other words, the CPU 11a of the image forming apparatus 100 causes information to be output, the information being information about a setting of a transfer condition for forming the diagnostic image 61 on a sheet by transferring the diagnostic image 61 onto the sheet by the image former 100A. Accordingly, the information about the transfer condition is included in the corresponding image.

In the image forming apparatus 100, the transfer voltage can be set for each sheet type. Even if the basis weight is the same, it may be better to vary the transfer voltage when the sheet type varies, and thus the user is allowed to manually change the transfer voltage in the present exemplary embodiment.

In this case, a situation may occur in which the transfer voltage has a value different from the value originally scheduled at the time of generating the diagnostic image 61 due to a change of the transfer voltage performed by the user in the past.

In this case, the diagnostic image 61 is transferred under the different value of the transfer voltage, and the accuracy of the diagnosis based on the diagnostic image 61 may decrease.

Thus, in this example, the CPU 11a of the server apparatus 200 makes a diagnosis on the image forming apparatus 100 based on the diagnostic image 61 in consideration of the value of the transfer voltage acquired as setting information.

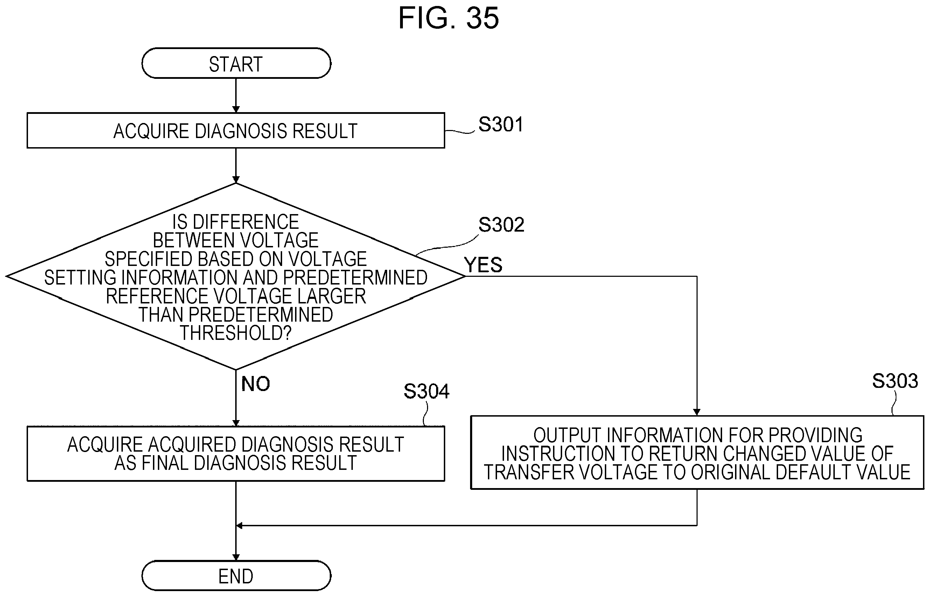

Fig. 35 is a flowchart illustrating the flow of a process executed by the CPU 11a of the server apparatus 200 to make a diagnosis.

In the present exemplary embodiment, the CPU 11a of the server apparatus 200 performs a diagnosis process based on the diagnostic image 61 included in read image data, and acquires a diagnosis result, similarly to the above (step S301).

In this example, it is assumed that the CPU 1 1a of the server apparatus 200 acquires a diagnosis result indicating that a failure has occurred in step S301.

Specifically, it is assumed that the difference between a numerical value obtained by analyzing the diagnostic image 61 by the CPU 11a of the server apparatus 200 and a predetermined reference value exceeds a predetermined threshold, and the CPU 11a of the server apparatus 200 acquires a diagnosis result indicating that a failure has occurred in step S301.

After step S301, the CPU 11a of the server apparatus 200 determines whether the difference between the voltage specified based on the voltage setting information and the predetermined reference voltage is larger than the predetermined threshold (step S302).

In response to determining that the difference is larger than the predetermined threshold, the CPU 11a of the server apparatus 200 determines that the transfer voltage has been changed.

In this case, the CPU 11a of the server apparatus 200 outputs information for providing an instruction to return the value of the transfer voltage that has been changed to an original default value (step S303).

Accordingly, in this case, the information for providing an instruction to return the transfer voltage to the default value is output to the user terminal 300 or the operation receiver 132 equipped in the image forming apparatus 100, and the information is provided to the user via the user terminal 300 or the operation receiver 132.

In response to this, the user changes the value of the transfer voltage set at that time to the original default value.

On the other hand, in response to determining in step S302 that the difference is not larger than the predetermined threshold, the CPU 11a of the server apparatus 200 acquires the diagnosis result acquired in step S301 as a final diagnosis result (step S304).

In response to determining in step S302 that the difference is larger than the predetermined threshold, the CPU 1 1a of the server apparatus 200 discards the diagnosis result acquired in step S301.

Other examples of the setting information include information about the basis weight of the sheet on which the diagnostic image 61 is formed. Other examples of the setting information include information about a fixing temperature in a fixing device (not illustrated) equipped as a part of the image former 100A and information about a nip pressure in the fixing device.

Other examples of the setting information include information stored in an LUT used for adjusting in-plane unevenness.

In addition, environment information indicating a temperature or humidity in the image forming apparatus 100, which is not the setting information, may be transmitted from the image forming apparatus 100 to the server apparatus 200. The CPU 11a of the server apparatus 200 may make a diagnosis on the image forming apparatus 100, based on the environment information and the diagnostic image 61 included in the read image data.

### Other Exemplary Embodiments

A description has been given above of the case where setting information is output to the server apparatus 200 via the diagnostic sheet CP. In other words, a description has been given above of the case where setting information is output to the image former 100A included in the image forming apparatus 100.

Alternatively, the CPU 11a of the image forming apparatus 100 may cause setting information to be output to the outside of the image forming apparatus 100. In other words, the CPU 1 1a of the image forming apparatus 100 may cause setting information to be output to the server apparatus 200, which is an example of an apparatus that analyzes the diagnostic image 61, through the communication line 190 (see Fig. 1).

The CPU 11a of the image forming apparatus 100 causes the information about a setting affecting a result of a diagnosis on the image forming apparatus 100 to be output as the setting information to the server apparatus 200 through the communication line 190, as described above.

In this case, the CPU 11a of the server apparatus 200 acquires the setting information transmitted through the communication line 190. The CPU 11a of the server apparatus 200 also acquires read image data transmitted from the image forming apparatus 100.

The CPU 11a of the server apparatus 200 then makes a diagnosis on the image forming apparatus 100 by using the setting information and the read image data.

At the time of transmitting setting information from the image forming apparatus 100 to the server apparatus 200 through the communication line 190, identification information including a job ID, a printing time, and the like is associated with the setting information, and information in which the setting information and the identification information are associated with each other is transmitted to the server apparatus 200.

At the time of transmitting read image data from the image forming apparatus 100 to the server apparatus 200 through the communication line 190, the identification information is included in a two-dimensional barcode or the like formed on the diagnostic sheet CP. In other words, the identification information is associated with the read image data. Accordingly, the identification information is transmitted to the server apparatus 200 together with the read image data.

The CPU 11a of the server apparatus 200 associates the received setting information with the received read image data, based on the identification information.

The CPU 1 1a of the server apparatus 200 then analyzes the diagnostic image 61 included in the read image data, based on the setting information and the read image data associated with each other, and acquires a diagnosis result for the image forming apparatus 100.

The read image data and the setting information may be associated with each other in the image forming apparatus 100, instead of the read image data and the setting information being individually transmitted to the server apparatus 200. The information in which the read image data and the setting information are associated with each other may be transmitted to the server apparatus 200.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix 1

(((1))) An information processing system comprising:
   a processor configured to:
   acquire a diagnosis result which is a result of a diagnosis made on an image formed on a recording medium, the diagnosis result including diagnosis results each being for a corresponding one of a plurality of diagnosis items;
   generate evaluation information for each of diagnosis item groups, each diagnosis item group being a group to which one or more of the diagnosis items belong, based on the diagnosis result for each diagnosis item belonging to the diagnosis item group, the evaluation information being information about an evaluation on the diagnosis item group; and
   generate a screen on which each of the diagnosis item groups and the evaluation information on each of the diagnosis item groups are displayed.
(((2))) The information processing system according to (((1))), wherein the processor is configured to:
   generate, as the screen, a screen on which each of the diagnosis item groups and the evaluation information are displayed in association with each other.
(((3))) The information processing system according to (((2))), wherein the processor is configured to:
   in response to a diagnosis item group being selected by a user from among the diagnosis item groups included in the generated screen, generate a new screen on which the diagnosis item belonging to the diagnosis item group selected by the user and the diagnosis result for the diagnosis item are additionally displayed on the screen.
(((4))) The information processing system according to (((1))), wherein the processor is configured to:
   generate, as the screen, a screen on which each of the diagnosis item groups and the evaluation information are displayed on a graph.
(((5))) The information processing system according to (((4))), wherein the processor is configured to:
   generate, as the screen, a screen on which each of the diagnosis item groups and the evaluation information are displayed on a radar chart.
(((6))) The information processing system according to (((5))), wherein the processor is configured to:
   in response to a diagnosis item group being selected by a user from among the diagnosis item groups included in the radar chart, generate a new screen on which the diagnosis item belonging to the diagnosis item group selected by the user and the diagnosis result for the diagnosis item are additionally displayed on the radar chart.
(((7))) The information processing system according to any one of (((1))) to (((6))), wherein the processor is configured to:
   in response to the evaluation information being changed, generate a new screen on which each of the diagnosis item groups and the changed evaluation information are displayed.
(((8))) The information processing system according to any one of (((1))) to (((7))), wherein the processor is configured to:
   in response to a generation condition for use in generating the evaluation information being changed, newly generate evaluation information on the diagnosis item groups by using a new generation condition; and
   generate a new screen on which each of the diagnosis item groups and the newly generated evaluation information are displayed.
(((9))) The information processing system according to any one of (((1))) to (((8))), wherein the processor is configured to:
   in response to a diagnosis item group being selected by a user from among the diagnosis item groups displayed on the generated screen, generate a new screen on which a selected diagnosis item group which is the diagnosis item group selected by the user is not displayed and the evaluation information on the selected diagnosis item group is not displayed.
(((10))) The information processing system according to any one of (((1))) to (((8))), wherein the processor is configured to:
   in response to a diagnosis item group being selected by a user from among the diagnosis item groups displayed on the generated screen, generate a new screen on which a non-selected diagnosis item group which is a diagnosis item group other than a selected diagnosis item group which is the diagnosis item group selected by the user is not displayed and the evaluation information on the non-selected diagnosis item group is not displayed.
(((11))) A program causing a computer to execute a process, the process comprising:
   acquiring a diagnosis result which is a result of a diagnosis made on an image formed on a recording medium, the diagnosis result including diagnosis results each being for a corresponding one of a plurality of diagnosis items;
   generating evaluation information for each of diagnosis item groups, each diagnosis item group being a group to which one or more of the diagnosis items belong, based on the diagnosis result for each diagnosis item belonging to the diagnosis item group, the evaluation information being information about an evaluation on the diagnosis item group; and
   generating a screen on which each of the diagnosis item groups and the evaluation information on each of the diagnosis item groups are displayed.

According to the information processing system according to (((1))), it is possible to make it easier to refer to a result of a diagnosis made on an image formed on a recording medium than in a case where diagnosis results for a plurality of diagnosis items are displayed in units of diagnosis items.

According to the information processing system according to (((2))), it is possible to generate a screen on which each of the diagnosis item groups and the evaluation information are displayed in association with each other.

According to the information processing system according to (((3))), it is possible to, in response to a diagnosis item group being selected by a user from among the diagnosis item groups, generate a new screen on which the diagnosis item belonging to the diagnosis item group selected by the user and the diagnosis result for the diagnosis item are additionally displayed.

According to the information processing system according to (((4))), it is possible to generate a screen on which each of the diagnosis item groups and the evaluation information are displayed on a graph.

According to the information processing system according to (((5))), it is possible to generate a screen on which each of the diagnosis item groups and the evaluation information are displayed on a radar chart.

According to the information processing system according to (((6))), it is possible to, in response to a diagnosis item group being selected by a user from among the diagnosis item groups included in the radar chart, generate a new screen on which the diagnosis item belonging to the diagnosis item group selected by the user and the diagnosis result for the diagnosis item are additionally displayed on the radar chart.

According to the information processing system according to (((7))), it is possible to, in response to the evaluation information being changed, generate a new screen on which each of the diagnosis item groups and the changed evaluation information are displayed.

According to the information processing system according to (((8))), it is possible to, in response to a generation condition for use in generating the evaluation information being changed, generate a new screen on which each of the diagnosis item groups and evaluation information generated using a new generation condition are displayed.

According to the information processing system according to (((9))), it is possible to, in response to a diagnosis item group being selected by a user from among the diagnosis item groups, generate a new screen on which a selected diagnosis item group which is the diagnosis item group selected by the user is not displayed and the evaluation information on the selected diagnosis item group is not displayed.

According to the information processing system according to (((10))), it is possible to, in response to a diagnosis item group being selected by a user from among the diagnosis item groups, generate a new screen on which a non-selected diagnosis item group which is a diagnosis item group other than a selected diagnosis item group which is the diagnosis item group selected by the user is not displayed and the evaluation information on the non-selected diagnosis item group is not displayed.

According to the program according to (((11))), it is possible to make it easier to refer to a result of a diagnosis made on an image formed on a recording medium than in a case where diagnosis results for a plurality of diagnosis items are displayed in units of diagnosis items.

### Appendix 2

(((1))) An image forming apparatus that forms an image on a recording medium, the image forming apparatus comprising:
   an image former configured to form an image on a recording medium, the image former being capable of forming, on the recording medium, a diagnostic image for use in making a diagnosis on the image forming apparatus; and
   a processor configured to cause setting information to be output, the setting information being information about a setting which is made on the image forming apparatus and with which the diagnostic image is formed.
(((2))) The image forming apparatus according to (((1))), wherein the processor is configured to:
   cause the setting information to be output to the image former configured to form the diagnostic image, and cause a corresponding image which is an image corresponding to the setting information to be formed on the recording medium on which the diagnostic image is formed.
(((3))) The image forming apparatus according to (((2))), wherein the processor is configured to:
   cause the corresponding image corresponding to the setting information to be formed at a plurality of positions on the recording medium on which the diagnostic image is formed.
(((4))) The image forming apparatus according to (((1))), wherein the processor is configured to:
   cause the setting information to be output through a communication line to an apparatus that analyzes the diagnostic image formed on the recording medium by the image former.
(((5))) The image forming apparatus according to (((1))), wherein
   the diagnostic image is used to make a diagnosis on the image forming apparatus, and
   the processor is configured to cause information about a setting affecting a result of the diagnosis on the image forming apparatus to be output as the setting information.
(((6))) The image forming apparatus according to (((5))), wherein the processor is configured to:
   cause information about a setting about an orientation of the recording medium which is supplied to the image former and on which the diagnostic image is to be formed by the image former to be output as the information about a setting affecting a result of the diagnosis.
((7))) The image forming apparatus according to (((5))), wherein the processor is configured to:
   cause information about a setting made on the image former to be output as the information about a setting affecting a result of the diagnosis.
(((8))) The image forming apparatus according to (((7))), wherein the processor is configured to:
   cause information about a setting about a forming speed for forming the diagnostic image by the image former and/or information about a setting about a screen for use in forming the diagnostic image by the image former to be output as the information about a setting made on the image former.
(((9))) The image forming apparatus according to (((7))), wherein the processor is configured to:
   cause information about a setting about a type of the recording medium on which the diagnostic image is formed to be output as the information about a setting made on the image former.
(((10))) The image forming apparatus according to (((7))), wherein the processor is configured to:
   cause information about a setting for correcting a part of image data serving as a base of an image formed by the image former to be output as the information about a setting made on the image former.
(((11))) The image forming apparatus according to (((7))), wherein the processor is configured to:
   cause information about a setting about a transfer condition to be output as the information about a setting made on the image former, the transfer condition being a condition under which the image former transfers the diagnostic image onto a recording medium and forms the diagnostic image on the recording medium.
(((12))) An image forming apparatus that forms an image on a recording medium, the image forming apparatus comprising:
   an image former configured to form an image on a recording medium, the image former being capable of forming, on the recording medium, a diagnostic image which is an image for use in making a diagnosis on the image forming apparatus; and
   a processor configured to cause an orientation specifying image to be formed on the recording medium on which the diagnostic image is formed, the orientation specifying image being an image for use in specifying an orientation of the diagnostic image.
(((13))) The image forming apparatus according to (((12))), wherein the processor is configured to:
   cause a plurality of orientation specifying images to be formed on the recording medium on which the diagnostic image is formed.
(((14))) The image forming apparatus according to (((12))), wherein the processor is configured to:
   cause the orientation specifying image to be formed at a corner portion of the recording medium on which the diagnostic image is formed.
(((15))) The image forming apparatus according to any one of (((12))) to (((14))), further comprising:
   a reader configured to perform reading of the recording medium on which the diagnostic image is formed, wherein
   the processor is configured to:
      in a case where the orientation specifying image is included in a read image obtained by the reader, cause the read image to be transmitted to an external apparatus, and
      in a case where the orientation specifying image is not included in the read image and where an image included in the read image satisfies a predetermined condition, cause the read image to be transmitted to the external apparatus.
(((16))) An information processing system comprising:
   a processor configured to:
   acquire a reading result which is a result of reading of a recording medium on which a diagnostic image is formed, the diagnostic image being an image for use in making a diagnosis on an image forming apparatus;
   acquire setting information which is information about a setting made on the image forming apparatus; and
   make a diagnosis on the image forming apparatus, based on the acquired reading result and the acquired setting information.
(((17))) The information processing system according to (((16))), wherein the processor is configured to:
   specify, based on the setting information, an orientation of the diagnostic image included in the reading result; and
   make a diagnosis on the image forming apparatus, based on the specified orientation and the acquired reading result.
(((18))) The information processing system according to (((17))), wherein the processor is configured to:
   in a case where the specified orientation is an orientation other than a right-side-up orientation, rotate the acquired reading result, and make a diagnosis on the image forming apparatus, based on the reading result that has been rotated.
(((19))) The information processing system according to any one of (((16))) to (((18))), wherein
   the reading result includes a corresponding image which is an image corresponding to the setting information, and
   the processor is configured to make a diagnosis on the image forming apparatus, based on the setting information obtained from the corresponding image included in the reading result and the reading result.
(((20))) The information processing system according to any one of (((16))) to (((19))), wherein the processor is configured to:
   acquire, as the setting information, information about a setting affecting a result of the diagnosis on the image forming apparatus; and
   make a diagnosis on the image forming apparatus, based on the acquired information about a setting affecting a result of the diagnosis and the acquired reading result.
(((21))) An information processing system comprising:
   a processor configured to:
   acquire a reading result which is a result of reading of a recording medium on which a diagnostic image and an orientation specifying image are formed, the diagnostic image being an image for use in making a diagnosis on an image forming apparatus, the orientation specifying image being an image for use in specifying an orientation of the diagnostic image;
   specify the orientation of the diagnostic image included in the acquired reading result, based on the orientation specifying image included in the acquired reading result; and
   make a diagnosis on the image forming apparatus, based on the diagnostic image included in the acquired reading result and the specified orientation.
(((22))) The information processing system according to (((21))), wherein the processor is configured to:
   in a case where the reading result does not include the orientation specifying image, specify the orientation of the diagnostic image, based on a position of an image defect included in the reading result.
(((23))) A program causing a computer to execute a process, the process comprising:
   acquiring setting information, the setting information being information about a setting which is made on an image forming apparatus capable of forming a diagnostic image, the diagnostic image being an image for making a diagnosis, and with which the diagnostic image is formed; and
   causing the acquired setting information to be output.
(((24))) A program causing a computer to execute a process, the process comprising:
   causing an orientation specifying image to be formed on a recording medium on which a diagnostic image is formed, the orientation specifying image being an image for use in specifying an orientation of the diagnostic image, the diagnostic image being an image for use in making a diagnosis on an image forming apparatus.
(((25))) A program causing a computer to execute a process, the process comprising:
   acquiring a reading result which is a result of reading of a recording medium on which a diagnostic image is formed, the diagnostic image being an image for use in making a diagnosis on an image forming apparatus;
   acquiring setting information which is information about a setting made on the image forming apparatus; and
   making a diagnosis on the image forming apparatus, based on the acquired reading result and the acquired setting information.
(((26))) A program causing a computer to execute a process, the process comprising:
   acquiring a reading result which is a result of reading of a recording medium on which a diagnostic image and an orientation specifying image are formed, the diagnostic image being an image for use in making a diagnosis on an image forming apparatus, the orientation specifying image being an image for use in specifying an orientation of the diagnostic image;
   specifying the orientation of the diagnostic image included in the acquired reading result, based on the orientation specifying image included in the acquired reading result; and
   making a diagnosis on the image forming apparatus, based on the diagnostic image included in the acquired reading result and the specified orientation.

According to the image forming apparatus according to (((1))), it is possible to increase the accuracy of a diagnosis made on the image forming apparatus as compared with the case of making a diagnosis on the image forming apparatus without a setting made on the image forming apparatus being taken into consideration.

According to the image forming apparatus according to (((2))), it is possible to give information about a setting made on the image forming apparatus to the recording medium on which the diagnostic image is formed.

According to the image forming apparatus according to (((3))), it is possible to increase the possibility that the setting information is transmitted to a destination via the corresponding image as compared with a case where a corresponding image corresponding to setting information is formed only at one portion of a recording medium.

According to the image forming apparatus according to (((4))), it is possible to transmit the setting information to an apparatus that analyzes the diagnostic image without via the recording medium on which the diagnostic image is formed.

According to the image forming apparatus according to (((5))), it is possible to transmit information about a setting affecting a result of the diagnosis on the image forming apparatus to an apparatus that analyzes the diagnostic image to make a diagnosis on the image forming apparatus.

According to the image forming apparatus according to (((6))), it is possible to transmit information about a setting about an orientation of the recording medium which is supplied to the image former and on which the diagnostic image is to be formed, to an apparatus that analyzes the diagnostic image to make a diagnosis on the image forming apparatus.

According to the image forming apparatus according to (((7))), it is possible to transmit information about a setting made on the image former that forms the diagnostic image, to an apparatus that analyzes the diagnostic image to make a diagnosis on the image forming apparatus.

According to the image forming apparatus according to (((8))), it is possible to make a diagnosis on the image forming apparatus in consideration of a forming speed for forming the diagnostic image by the image former and/or a screen for use in forming the diagnostic image by the image former.

According to the image forming apparatus according to (((9))), it is possible to make a diagnosis on the image forming apparatus in consideration of the type of the recording medium on which the diagnostic image is formed.

According to the image forming apparatus according to (((10))), it is possible to make a diagnosis on the image forming apparatus in consideration of a setting for correcting a part of image data.

According to the image forming apparatus according to (((11))), it is possible to make a diagnosis on the image forming apparatus in consideration of a setting about a transfer condition under which the diagnostic image is transferred onto a recording medium and formed on the recording medium.

According to the image forming apparatus according to (((12))), it is possible to increase the accuracy of a diagnosis made on the image forming apparatus as compared with the case of making a diagnosis on the image forming apparatus without the orientation of the diagnostic image being taken into consideration.

According to the image forming apparatus according to (((13))), it is possible to increase the possibility that the orientation of the diagnostic image is specified using an orientation specifying image as compared with a case where one orientation specifying image is formed on the recording medium on which the diagnostic image is formed.

According to the image forming apparatus according to (((14))), it is possible to increase the size of the diagnostic image formed on the recording medium as compared with a case where an orientation specifying image is formed near a center portion of the recording medium relative to a corner portion of the recording medium.

According to the image forming apparatus according to (((15))), it is possible to transmit a read image to an external apparatus even in a case where the read image does not include an orientation specifying image.

According to the information processing system according to (((16))), it is possible to increase the accuracy of a diagnosis made on the image forming apparatus as compared with the case of making a diagnosis on the image forming apparatus without a setting made on the image forming apparatus being taken into consideration.

According to the information processing system according to (((17))), it is possible to make a diagnosis on the image forming apparatus in consideration of the orientation of the diagnostic image.

According to the information processing system according to (((18))), it is possible to make a diagnosis on the image forming apparatus even in a case where the orientation of the diagnostic image is an orientation other than a right-side-up orientation.

According to the information processing system according to (((19))), it is possible to make a diagnosis on the image forming apparatus, based on the setting information included in the reading result.

According to the information processing system according to (((20))), it is possible to make a diagnosis on the image forming apparatus in consideration of information about a setting affecting a result of the diagnosis on the image forming apparatus.

According to the information processing system according to (((21))), it is possible to increase the accuracy of a diagnosis made on the image forming apparatus as compared with the case of making a diagnosis on the image forming apparatus without the orientation of the diagnostic image being taken into consideration.

According to the information processing system according to (((22))), it is possible to specify the orientation of the diagnostic image even in a case where the reading result does not include an orientation specifying image.

According to the program according to (((23))), it is possible to increase the accuracy of a diagnosis made on the image forming apparatus as compared with the case of making a diagnosis on the image forming apparatus without a setting made on the image forming apparatus being taken into consideration.

According to the program according to (((24))), it is possible to increase the accuracy of a diagnosis made on the image forming apparatus as compared with the case of making a diagnosis on the image forming apparatus without the orientation of the diagnostic image being taken into consideration.

According to the program according to (((25))), it is possible to increase the accuracy of a diagnosis made on the image forming apparatus as compared with the case of making a diagnosis on the image forming apparatus without a setting made on the image forming apparatus being taken into consideration.

According to the program according to (((26))), it is possible to increase the accuracy of a diagnosis made on the image forming apparatus as compared with the case of making a diagnosis on the image forming apparatus without the orientation of the diagnostic image being taken into consideration.

## Claims

1. An information processing system comprising:
a processor configured to:
acquire a diagnosis result which is a result of a diagnosis made on an image formed on a recording medium, the diagnosis result including diagnosis results each being for a corresponding one of a plurality of diagnosis items;
generate evaluation information for each of diagnosis item groups, each diagnosis item group being a group to which one or more of the diagnosis items belong, based on the diagnosis result for each diagnosis item belonging to the diagnosis item group, the evaluation information being information about an evaluation on the diagnosis item group; and
generate a screen on which each of the diagnosis item groups and the evaluation information on each of the diagnosis item groups are displayed.

2. The information processing system according to claim 1, wherein the processor is configured to:
generate, as the screen, a screen on which each of the diagnosis item groups and the evaluation information are displayed in association with each other.

3. The information processing system according to claim 2, wherein the processor is configured to:
in response to a diagnosis item group being selected by a user from among the diagnosis item groups included in the generated screen, generate a new screen on which the diagnosis item belonging to the diagnosis item group selected by the user and the diagnosis result for the diagnosis item are additionally displayed on the screen.

4. The information processing system according to claim 1, wherein the processor is configured to:
generate, as the screen, a screen on which each of the diagnosis item groups and the evaluation information are displayed on a graph.

5. The information processing system according to claim 4, wherein the processor is configured to:
generate, as the screen, a screen on which each of the diagnosis item groups and the evaluation information are displayed on a radar chart.

6. The information processing system according to claim 5, wherein the processor is configured to:
in response to a diagnosis item group being selected by a user from among the diagnosis item groups included in the radar chart, generate a new screen on which the diagnosis item belonging to the diagnosis item group selected by the user and the diagnosis result for the diagnosis item are additionally displayed on the radar chart.

7. The information processing system according to claim 1, wherein the processor is configured to:
in response to the evaluation information being changed, generate a new screen on which each of the diagnosis item groups and the changed evaluation information are displayed.

8. An image forming apparatus that forms an image on a recording medium, the image forming apparatus comprising:
an image former configured to form an image on a recording medium, the image former being capable of forming, on the recording medium, a diagnostic image for use in making a diagnosis on the image forming apparatus; and
a processor configured to cause setting information to be output, the setting information being information about a setting which is made on the image forming apparatus and with which the diagnostic image is formed.

9. The image forming apparatus according to claim 8, wherein the processor is configured to:
cause the setting information to be output to the image former configured to form the diagnostic image, and cause a corresponding image which is an image corresponding to the setting information to be formed on the recording medium on which the diagnostic image is formed.

10. The image forming apparatus according to claim 9, wherein the processor is configured to:
cause the corresponding image corresponding to the setting information to be formed at a plurality of positions on the recording medium on which the diagnostic image is formed.

11. The image forming apparatus according to claim 8, wherein the processor is configured to:
cause the setting information to be output through a communication line to an apparatus that analyzes the diagnostic image formed on the recording medium by the image former.

12. The image forming apparatus according to claim 8, wherein
the diagnostic image is used to make a diagnosis on the image forming apparatus, and
the processor is configured to cause information about a setting affecting a result of the diagnosis on the image forming apparatus to be output as the setting information.

13. The image forming apparatus according to claim 12, wherein the processor is configured to:
cause information about a setting about an orientation of the recording medium which is supplied to the image former and on which the diagnostic image is to be formed by the image former to be output as the information about a setting affecting a result of the diagnosis.

14. The image forming apparatus according to claim 12, wherein the processor is configured to:
cause information about a setting made on the image former to be output as the information about a setting affecting a result of the diagnosis.

15. A program causing a computer to execute a process, the process comprising:
acquiring a reading result which is a result of reading of a recording medium on which a diagnostic image is formed, the diagnostic image being an image for use in making a diagnosis on an image forming apparatus;
acquiring setting information which is information about a setting made on the image forming apparatus; and
making a diagnosis on the image forming apparatus, based on the acquired reading result and the acquired setting information.
